# EUROPEAN PATENT SPECIFICATION

(11) **EP 4 079 786 B1**
(45) Date of publication and mention of the grant of the patent: **25.09.2024**
(21) Application number: 20901935.5
(22) Date of filing: 10.12.2020
(51) Int. Cl.: C08G 65/336, C08K 5/5415, C08K 5/544, C08L 71/00

(54) **CURABLE COMPOSITION**
HÄRTBARE ZUSAMMENSETZUNG
COMPOSITION DURCISSABLE

(30) Priority: 19.12.2019 JP 2019229718
(43) Date of publication of application: 26.10.2022
(73) Proprietor: Momentive Performance Materials Japan LLC, Tokyo 107-6119 (JP); Daikin Industries, Ltd., Osaka-shi, Osaka 530-0001 (JP)
(72) Inventor: IIDA, Isao, Tokyo 107-6119 (JP); ONO, Kazuhisa, Tokyo 107-6119 (JP); FUJIMOTO, Tetsuo, Tokyo 107-6119 (JP); MARUHASHI, Kazuki, Osaka-shi, Osaka 530-8323 (JP); MITSUHASHI, Hisashi, Osaka-shi, Osaka 530-8323 (JP)
(74) Representative: Müller-Boré & Partner Patentanwälte PartG mbB
(86) International application number: PCT/JP2020/046156
(87) International publication number: WO 2021/125062

(56) References cited:
- WO-A1-03/040247
- WO-A1-2018/168973
- WO-A1-2019/088110
- WO-A1-2019/088129
- US-A- 5 352 752

## Description

### TECHNICAL FIELD

The present invention relates to a curable composition.

### BACKGROUND ART

A composition containing a certain kind of a fluoro(poly)ether-based compound has excellent water repellent property, oil repellent property, etc. For example, in Patent Document 1, there is described about rubber wherein a cured film of a room-temperature curing type perfluoro(poly)ether composition is formed on the surface thereof, and rubber to which release property, solvent resistance, chemical resistance, weather resistance, water repellent property, oil repellent property, etc., had been imparted can be provided. In Example of Patent Document 1, there is described a composition using a compound having (OCF₂CF(CF₃))ₘOCF₂CF₂O(CF(CF₃)CF₂O)ₙ (wherein, m+n=90) as a perfluoro(poly)ether structure. In addition, in Patent Documents 2 to 7, there are described moisture-curable compositions having a perfluoro(poly)ether structure.

Patent Document 8 discloses a curable composition comprising a perfluoropolyether group-containing silane compound, an organosilicon, a catalyst and a solvent.

### PRIOR ART DOCUMENTS

### PATENT DOCUMENTS

Patent Document 1: JP 2008-214566A
Patent Document 2: JP Hei.6-166690A
Patent Document 3: JP Hei.6-234923A
Patent Document 4: JP Hei.9-77777A
Patent Document 5: JP Hei.9-77944A
Patent Document 6: JP Hei.9-263639A
Patent Document 7: JP Hei.9-263640A
Patent Document 8: WO 2019/088110 A1

### SUMMARY OF THE INVENTION

### PROBLEMS TO BE SOLVED BY THE INVENTION

A cured product of a perfluoro(poly)ether composition can be utilized as rubber having water repellent property, oil repellent property, etc., but it has been known that the fluorine-containing compound is difficultly mixed with a compound containing no fluorine, and it sometimes becomes a problem whether it has compatibility or not at the time of preparing a composition. In addition, a fluorine-containing resin is rigid in many cases, and when bending it, a process accompanied by heating is necessary in some cases, and resistance to bending is sometimes insufficient. If there is no compatibility, the cured product may also impair the uniformity, and if cracks are generated at the time of bending, reliability of the material is affected, and thus, a demand for a curable composition that satisfies these characteristics is present.

Thus, an object of the present invention is to provide a moisture-curable fluorine-containing curable composition excellent in compatibility, and providing a cured product excellent in crack resistance.

### MEANS TO SOLVE THE PROBLEMS

According to the present invention, it is provided a curable composition which comprises
(a1) a perfluoro(poly)ether group-containing silane compound (a1) represented by the following formula (I): 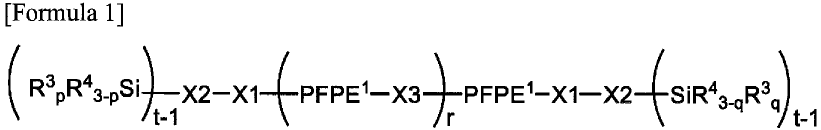 [wherein,
   R³s each independently represent a hydrogen atom or a monovalent hydrocarbon group at each appearance,
   R⁴s each independently represent a hydroxyl group or a hydrolyzable group(s) at each appearance,
   X1s each independently represent a single bond or a divalent organic group at each appearance,
   X2s each independently represent a t valent organic group at each appearance, here, t is an integer of 2 or more,
   X3s each independently represent a divalent organic group at each appearance, PFPE¹s are each independently a divalent perfluoro(poly)ether group represented by the formula:

      -(C_{f}F_{2f})-(OCF₂)ₐ₁-(OC₂F₄)ₐ₂-(OC₃X¹⁰₆)ₐ₃-(OC₄F₈)ₐ₄-(OC₅F₁₀)ₐ₅-(OC₆F₁₂)ₐ₆-(OC₇F₁₄)ₐ₇-(OC₈F₁₆)ₐ₈-
   (wherein, f is an integer of 1 or more and 10 or less, a1, a2, a3, a4, a5, a6, a7 and a8 are each independently an integer of 0 or more and 200 or less, a sum of a1, a2, a3, a4, a5, a6, a7 and a8 is an integer of 5 or more and 200 or less, and the unit represented by (C_{f}F_{2f}) is located at the left end of the group, the order of existence of each repeating unit enclosed in parentheses with the subscript a1, a2, a3, a4, a5, a6, a7 or a8 is arbitrary in the formula, X¹⁰s are each independently a hydrogen atom, a fluorine atom or a chlorine atom at each appearance, provided that when all X¹⁰s are hydrogen atoms or chlorine atoms, at least one of a1, a2, a4, a5, a6, a7 and a8 is an integer of 1 or more) at each appearance,
   p and q are each 0 or 1, and
   r is an integer of 1 or more];
(a2) a perfluoro(poly)ether group-containing silane compound (a2) (provided that, a compound that can be represented by the above-mentioned formula (I) is excluded) represented by the following formula (II): 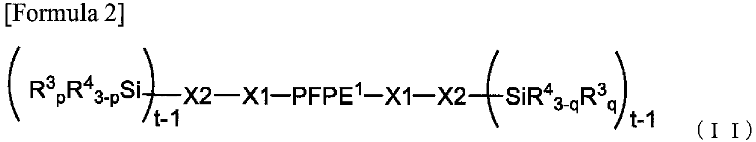 [wherein, R³, R⁴, PFPE¹, X1, X2, p, q and t have the same meanings as defined above];
(b) an organic silicon compound having at least two OR² groups (here, R²s are each independently a hydrogen atom or a monovalent organic group at each appearance) bonded to an Si atom (provided that, (a1) and (a2) are excluded) or a partially hydrolyzed condensate thereof; and
(c) a condensation catalyst.

### EFFECTS OF THE INVENTION

According to the present invention, it can be provided a moisture-curable curable composition which is excellent in compatibility and provides a cured product having high crack resistance.

### EMBODIMENTS TO CARRY OUT THE INVENTION

Hereinafter, the curable composition of the present invention will be explained.

The curable composition of the present invention comprises
a perfluoro(poly)ether group-containing silane compound (a1) (hereinafter, it is sometimes referred to as a "PFPE-containing silane compound (al)") which is a compound having two or more Si atoms bonded to at least one group selected from the group consisting of a hydroxyl group and a hydrolyzable group(s), and a perfluoro(poly)ether group, and (a1) represented by the following formula (I): 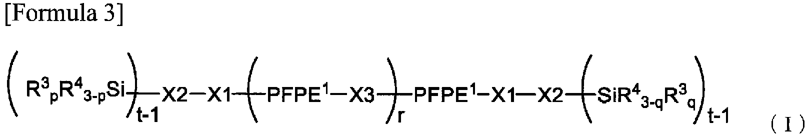 [wherein,
   R³s each independently represent a hydrogen atom or a monovalent hydrocarbon group at each appearance,
   R⁴s each independently represent a hydroxyl group or a hydrolyzable group(s) at each appearance,
   X1s each independently represent a single bond or a divalent organic group at each appearance,
   X2s each independently represent a t valent organic group at each appearance, here, t is an integer of 2 or more,
   X3s each independently represent a divalent organic group at each appearance,
   PFPE¹s are each independently a divalent perfluoro(poly)ether group represented by the formula:

      -(C_{f}F_{2f})-(OCF₂)ₐ₁-(OC₂F₄)ₐ₂-(OC₃X¹⁰₆)ₐ₃-(OC₄F₈)ₐ₄-(OC₅F₁₀)ₐ₅-(OC₆F₁₂)ₐ₆-(OC₇F₁₄)ₐ₇-(OC₈F₁₆)ₐ₈-
   (wherein, f is an integer of 1 or more and 10 or less, a1, a2, a3, a4, a5, a6, a7 and a8 are each independently an integer of 0 or more and 200 or less, a sum of a1, a2, a3, a4, a5, a6, a7 and a8 is an integer of 5 or more and 200 or less, and the unit represented by (C_{f}F_{2f}) is located at the left end of the group, the order of existence of each repeating unit enclosed in parentheses with the subscript a1, a2, a3, a4, a5, a6, a7 or a8 is arbitrary in the formula, X¹⁰s are each independently a hydrogen atom, a fluorine atom or a chlorine atom at each appearance, provided that when all X¹⁰s are hydrogen atoms or chlorine atoms, at least one of a1, a2, a4, a5, a6, a7 and a8 is an integer of 1 or more) at each appearance,
   p and q are each 0 or 1, and
   r is an integer of 1 or more];
(a2) a perfluoro (poly)ether group-containing silane compound (a2) (provided that, the compound that can be represented by the above-mentioned formula (I) is excluded) (hereinafter, it is sometimes referred to as a "PFPE-containing silane compound (a2)") represented by the following formula (II): 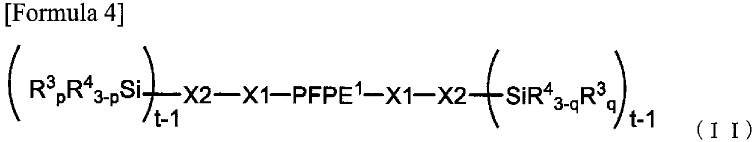 [wherein, R³, R⁴, PFPE¹, X1, X2, p, q and t have the same meanings as defined above],
(b) an organic silicon compound having at least two OR² groups (here, R²s are each independently a hydrogen atom or a monovalent organic group at each appearance) bonded to an Si atom (provided that, (a1) and (a2) are excluded) or a partially hydrolyzed condensate thereof (hereinafter, it is sometimes referred to as a "crosslinking agent (b)"), and
(c) a condensation catalyst (c).

Incidentally, when used in the present specification, the "2 to 10 valent organic group" means a group of 2 to 10 valent containing a carbon(s). Such a 2 to 10 valent organic group is not particularly limited, and may be mentioned a 2 to 10 valent group in which 1 to 9 hydrogen atoms is/are further eliminated from the hydrocarbon group. The divalent organic group is not particularly limited, and may be mentioned a divalent group in which one hydrogen atom is further eliminated from the hydrocarbon group.

When used in the present specification, the "hydrocarbon group" means a group which is a group containing carbon and hydrogen, and one hydrogen atom is eliminated from the molecule. Such a hydrocarbon group is not particularly limited, and may be mentioned a hydrocarbon group having 1 to 20 carbon atoms which may be substituted by one or more substituents, for example, an aliphatic hydrocarbon group, an aromatic hydrocarbon group, etc. The above-mentioned "aliphatic hydrocarbon group" may be any of linear, branched or cyclic, and may be any of saturated or unsaturated. Also, the hydrocarbon group may contain one or more cyclic structure. Incidentally, such a hydrocarbon group may have one or more N, O, S, Si, amide, sulfonyl, siloxane, carbonyl, carbonyloxy, etc., at the terminal(s) or in the molecular chain.

When used in the present specification, the substituent of the "hydrocarbon group" is not particularly limited, and may be mentioned, for example, one or more groups selected from a halogen atom; a C₁₋₆ alkyl group, a C₂₋₆ alkenyl group, a C₂₋₆ alkynyl group, a C₃₋₁₀ cycloalkyl group, a C₃₋₁₀ unsaturated cycloalkyl group, a 5 to 10-membered heterocyclyl group, a 5 to 10-membered unsaturated heterocyclyl group, a C₆₋₁₀ aryl group and a 5 to 10-membered heteroaryl group, each of which may be substituted by one or more halogen atoms.

In the present specification, the alkyl group and the phenyl group may be unsubstituted or may be substituted, otherwise specifically mentioned. The substituent of such a group is not particularly limited, and there may be mentioned, for example, one or more groups selected from a halogen atom, a C₁₋₆ alkyl group, a C₂₋₆ alkenyl group and a C₂₋₆ alkynyl group.

### (PFPE-containing silane compound (al))

The above-mentioned PFPE-containing silane compound (a1) is a compound having two or more Si atoms bonded to at least one group selected from the group consisting of a hydroxyl group and a hydrolyzable group(s), and having a perfluoro(poly)ether group, and having at least two structures represented by the PFPE¹ linked through X3.

The term "hydrolyzable group" mean, when used in the present specification, a group capable of undergoing a hydrolysis reaction, that is, a group capable of being eliminated from the main skeleton of a compound by a hydrolysis reaction. Examples of the hydrolyzable group may be mentioned -OR, -OCOR, -O-N=CR₂, -NR₂, -NHR, a halogen atom (in these formulae, Rs each independently represent a substituted or unsubstituted alkyl group having 1 to 4 carbon atoms), etc., and preferably -OR (that is, an alkoxy group). Examples of R contain an unsubstituted alkyl group such as a methyl group, an ethyl group, a propyl group, an isopropyl group, an n-butyl group, an isobutyl group, a t-butyl group, etc.; and a substituted alkyl group such as a chloromethyl group, etc. Among these, an alkyl group, in particular, an unsubstituted alkyl group is preferable, and a methyl group or an ethyl group is more preferable. A hydroxyl group is not particularly limited, and may be a group generated by hydrolysis of a hydrolyzable group. As the halogen atom, there may be mentioned a fluorine atom, a chlorine atom, a bromine atom and an iodine atom, and among these, a chlorine atom is preferable.

The above-mentioned Si atoms bonded to at least one group selected from the group consisting of a hydroxyl group and a hydrolyzable group(s) are present at the both terminals of the molecular main chain of the PFPE-containing silane compound (a1). In the present specification, the molecular main chain of the PFPE-containing silane compound (a1) represents the relatively longest bonding chain in the molecule of the PFPE-containing silane compound (a1).

The perfluoro(poly)ether group represented by PFPE¹ is the formula:

-(C_{f}F_{2f})-(OCF₂)ₐ₁-(OC₂F₄)ₐ₂-(OC₃X¹⁰₆)ₐ₃-(OC₄F₈)ₐ₄-(OC₅F₁₀)ₐ₅-(OC₆F₁₂)ₐ₆-(OC₇F₁₄)ₐ₇-(OC₈F₁₆)ₐ₈-.

Wherein, f is an integer of 1 to 10, a1, a2, a3, a4, a5, a6, a7 and a8 are each independently an integer of 10 or more and 200 or less, a sum of a1, a2, a3, a4, a5, a6, a7 and a8 is at least more than 5, more preferably more than 10, for example, 10-200. The unit represented by (C_{f}F_{2f}) is located at the left end of the group, the order of existence of each repeating unit enclosed in parentheses with the subscript a1, a2, a3, a4, a5, a6, a7 or a8 is arbitrary in the formula, X¹⁰s are each independently a hydrogen atom, a fluorine atom or a chlorine atom at each appearance, provided that all X¹⁰s are hydrogen atoms or chlorine atoms, at least one of a1, a2, a4, a5, a6, a7 and a8 is an integer of 1 or more. In the following, the perfluoro(poly)ether group having the above-mentioned structure sometimes refers to as "PFPE¹". The curable composition of the present invention can have a low glass transition temperature (Tg) by having the above PFPE¹. The -PFPE¹- portion in the present specification is a polymer structure comprising one kind or a plural kind of fluoroalkyl ether structures in combination. al to a8 or a sum thereof refers to the number of recurring units of the fluoroalkyl ether structure in the polymer, and these values are an average value in each structure unit in the polymer, and it can be understood for those skilled in the art that it is an approximate value. For example, when PFPE¹ is represented by -(C_{f}F_{2f})-(OCF₂)ₐ₁-(OC₂F₄)ₐ₂-, the value of a1 represents an average of the number of the (OCF₂)ₐₗ unit per each -PFPE¹- portion, and the value of a2 represents an average of the number of the (OC₂F₄)ₐ₂ unit per each -PFPE¹- portion, respectively, and when it is described as a1+a2=, it represents that the average of the sum of each recurring unit is the value (approximate value).

In one embodiment, a1 and a2 are each independently an integer of 0 or more and 200 or less, in one preferred embodiment, a1 and a2 are each independently an integer of 1 or more and 200 or less. The value of a1 and a2 are preferably, each independently an integer of 1 or more and 50 or less. A sum of a1 and a2 is an integer of preferably 30 or more, more preferably 40 or more.

In one embodiment, a3, a4, a5, a6, a7 and a8 are integers each independently, preferably 0 or more and 30 or less, more preferably integers of 20 or less, further preferably integers of 10 or less, particularly preferably integers of 5 or less, and may be 0.

In one embodiment, a sum of a3, a4, a5, a6, a7 and a8 is preferably 30 or less, more preferably integers of 20 or less, further preferably 10 or less, and particularly preferably integers of 5 or less.

In one embodiment, it is preferable that a1 is an integer of 0 or more and 50 or less, a2 is an integer of 0 or more and 50 or less, a3 is an integer of 0 or more and 30 or less, a4 to a8 are 0, and a sum of a1, a2 and a3 is 5 or more and 50 or less.

These recurring units may be linear or branched. Also, even if the recurring units have the same number of carbon atoms, two or more kinds of different linear or branched structures can be simultaneously contained in PFPE¹. These recurring units are preferably linear. For example, -(OC₈F₁₆)- may be -(OCF₂CF₂CF₂CF₂CF₂CF₂CF₂CF₂)-, -(OCF(CF₃)CF₂CF₂CF₂CF₂CF₂CF₂)-, -(OCF₂CF(CF₃)CF₂CF₂CF₂CF₂CF₂)-, -(OCF₂CF₂CF(CF₃)CF₂CF₂CF₂CF₂)-, -(OCF₂CF₂CF₂CF(CF₃)CF₂CF₂CF₂)-, -(OCF₂CF₂CF₂CF₂CF(CF₃)CF₂CF₂)-, -(OCF₂CF₂CF₂CF₂CF₂CF(CF₃)CF₂)-, -(OCF₂CF₂CF₂CF₂CF₂CF₂CF(CF₃))-, etc., and preferably -(OCF₂CF₂CF₂CF₂CF₂CF₂CF₂CF₂)-. -(OC₇F₁₄)- may be -(OCF₂CF₂CF₂CF₂CF₂CF₂CF₂)-, -(OCF(CF₃)CF₂CF₂CF₂CF₂CF₂)-, -(OCF₂CF(CF₃)CF₂CF₂CF₂CF₂)-, -(OCF₂CF₂CF(CF₃)CF₂CF₂CF₂)-, -(OCF₂CF₂CF₂CF(CF₃)CF₂CF₂)-, -(OCF₂CF₂CF₂CF₂CF(CF₃)CF₂)-, -(OCF₂CF₂CF₂CF₂CF₂CF(CF₃))-, etc., and preferably -(OCF₂CF₂CF₂CF₂CF₂CF₂CF₂)-. -(OC₆F₁₂)- may be -(OCF₂CF₂CF₂CF₂CF₂CF₂)-, -(OCF(CF₃)CF₂CF₂CF₂CF₂)-, -(OCF₂CF(CF₃)CF₂CF₂CF₂)-, -(OCF₂CF₂CF(CF₃)CF₂CF₂)-, -(OCF₂CF₂CF₂CF(CF₃)CF₂)-, -(OCF₂CF₂CF₂CF₂CF(CF₃))-, etc., and preferably -(OCF₂CF₂CF₂CF₂CF₂CF₂)-. -(OC₅F₁₀)- may be -(OCF₂CF₂CF₂CF₂CF₂)-, -(OCF(CF₃)CF₂CF₂CF₂)-, -(OCF₂CF(CF₃)CF₂CF₂)-, -(OCF₂CF₂CF(CF₃)CF₂)-, -(OCF₂CF₂CF₂CF(CF₃))-, etc., and preferably -(OCF₂CF₂CF₂CF₂CF₂)-. -(OC₄F₈)-may be any of -(OCF₂CF₂CF₂CF₂)-, -(OCF(CF₃)CF₂CF₂)-, -(OCF₂CF(CF₃)CF₂)-, - (OCF₂CF₂CF(CF₃))-, -(OC(CF₃)₂CF₂)-, -(OCF₂C(CF₃)₂)-, -(OCF(CF₃)CF(CF₃))-, - (OCF(C₂F₅)CF₂)- and -(OCF₂CF(C₂F₅))-, and preferably -(OCF₂CF₂CF₂CF₂)-. -(OC₃F₆)- (that is, X¹⁰ is a fluorine atom in the above-mentioned formula) may be any of -(OCF₂CF₂CF₂)-, -(OCF(CF₃)CF₂)- and -(OCF₂CF(CF₃))-, and preferably -(OCF₂CF₂CF₂)-. Also, -(OC₂F₄)- may be any of -(OCF₂CF₂)- and -(OCF(CF₃))-, and preferably -(OCF₂CF₂)-.

The unit represented by -(C_{f}F_{2f})- is a structure located at the end of the left side of PFPE¹. "f" is an integer of 1 to 10, preferably an integer of 1 to 6, more preferably an integer of 1 to 3. It is more preferable that the value of f is the same as the number of carbon atoms contained in any one of the recurring units possessed by PFPE¹. The unit represented by -(C_{f}F_{2f})- may be linear or may be branched. Accordingly, the unit represented by -(C_{f}F2_{f})- can have a structure, for example, in addition to -(CF₂)-, such as -(CF₂CF₂)-, -(CF(CF₃))-, -(CF₂CF₂CF₂)-, -(CF(CF₃)CF₂)-, -(CF₂CF(CF₃))-, -(CF₂CF₂CF₂CF₂)-, -(CF(CF₃)CF₂CF₂)-, -(CF₂CF(CF₃)CF₂)-, -(CF₂CF₂CF(CF₃))-, -(CF(CF₂CF₃)CF₂)-, -(CF₂CF(CF₂CF₃))-, -(CF₂C(CF₃)₂CF₂)-, etc.

The PFPE-containing silane compound (a1) may have a recurring units comprising an oxygen atom and a perfluoroalkylene group having 9 or more carbon atoms in addition to these recurring units, as long as it is a material capable of preparing as a perfluoropolyether group.

In one embodiment, PFPE¹ has a linear recurring units. In this embodiment, motility of the molecule of the PFPE-containing silane compound (a) at a low temperature is less likely to lower. By having a linear recurring units, physical property values (for example, elastic modulus at a low temperature) of the PFPE-containing silane compound (a) can be less likely to low as compared with the values at room temperature. Therefore, the composition can be applied on the wide range of temperature. Incidentally, in the present specification, "elastic modulus" indicates dynamic elastic modulus, more specifically storage elastic modulus.

PFPE¹ is preferably -(CfF2f)-(OCF2)ai-(OC2F4)a2-(OC3F6)a3-(OC4F8)a4-(wherein, f is an integer of 1 to 4, preferably an integer of 1 to 3, a1 and a2 are each independently an integer of 1 or more and 200 or less, preferably 5 or more and 200 or less, more preferably 10 or more and 200 or less, a3 and a4 are each independently an integer of 0 or more and 30 or less, and the order of existence of each repeating unit with the subscripts a1, a2, a3 or a4 and enclosed in parentheses is arbitrary in the formula). PFPE¹ is preferably -(C_{f}F_{2f})-(OCF₂)ₐ₁-(OCF₂CF₂)ₐ₂-(OCF₂CF₂CF₂)ₐ₃-(OCF₂CF₂CF₂CF₂)ₐ₄-. In one more preferred embodiment, PFPE¹ is -(C_{f}F_{2f})-(OCF₂)ₐ₁-(OC₂F₄)ₐ₂- (wherein, f is 1 or 2, a1 and a2 are each independently an integer of 1 or more and 200 or less, preferably 5 or more and 200 or less, more preferably 10 or more and 200 or less, and the order of existence of each repeating unit with the subscripts a1 or a2 and enclosed in parentheses is arbitrary in the formula).

In the above-mentioned PFPE¹, the quantitative relationship between the respective values of the values of a1, a2, a3, a4, a5, a6, a7 and a8 is not particularly limited as long as they satisfy the respective ranges. For example, when the structure represented by -(OCF₂)ₐ₁- is used with a much amount, rubber characteristics can be easily maintained even at a low temperature and it can be made a composition suitable for low temperature use. Also, when the structure represented by -(OC₂F₄)ₐ₂- is used with a much amount, it is more advantageous due to formation of a cured product which is difficultly decomposed at a high temperature. Depending on the physical properties required for the final use, the structure and the composition of PFPE¹ can be appropriately adjusted.

In another preferred embodiment, PFPE¹ is a divalent perfluoro(poly)ether group represented by the formula:

-(C_{f}F_{2f})-(OCF₂)ₐ₁-(OCF₂CF₂)ₐ₂₁-(OCF(CF₃))_{a2'}-(OCF₂CF₂CF₂)ₐ₃₁-(OCF₂CF(CF₃))_{a3'}-(OCF(CF₃)CF₂)_{a3"}-(OCF₂CF₂CF₂CF₂)ₐ₄-

(here, f is an integer of 1 or more and 4 or less, and more preferably 1 or more and 3 or less, a1, a21, a2', a31, a3', a3" and a4 are each independently an integer of 10 or more and 200 or less, a sum of a21 and a2' equals to a2, a sum of a31, a3' and a3" equals to a3, a sum of a1, a21, a2', a31, a3', a3" and a4 is 5 or more, and the order of existence of each repeating unit is arbitrary in the formula). In a more preferable example as an embodiment, PFPE¹ is a divalent perfluoro(poly)ether group wherein, in the above-mentioned formula, a1 is an integer of 0 or more and 50 or less, a2 is an integer of 0 or more and 50 or less, a3 is an integer of 0 or more and 30 or less, a4 is an integer of 0 or more and 30 or less, and a sum of a1, a2, a3 and a4 is 5 or more and 200 or less. In a further preferable example as an embodiment, PFPE¹ is a perfluoro(poly)ether group having recurring units represented by -(OCF₂CF(CF₃))_{a3'}- and/or -(OCF(CF₃)CF₂)_{a3"}-. That is, in another more preferable embodiment, PFPE¹ has a branched perfluoroalkyl group, in particular, has a perfluoropropyl group. Specific examples thereof may be mentioned the following structures.

-(C_{f}F_{2f})-(OCF₂CF(CF₃))_{a3'}-(OCF₂CF₂)-(OCF(CF₃)CF₂)_{a3"}-(OCF(CF₃))--(C_{f}F_{2f})-(OCF₂CF(CF₃))_{a3'}-(OCF₂CF₂CF₂CF₂)-(OCF(CF₃)CF₂)_{a3"}-(OCF(CF₃))-

In the curable composition of the present invention, the cured product thereof is difficultly decomposed at a high temperature. In the present specification, the cured product is "difficultly decomposed at a high temperature" refers to that 1% decomposition temperature of the cured product is in a relatively high temperature. That is, the curable composition of the present invention can contribute to formation of a cured product that can be used in a wide temperature range. In the present specification, "1% decomposition temperature" means a temperature at which 1% by mass of the cured product decomposes based on the whole cured product. The 1% decomposition temperature means a value measured by thermogravimetric and differential thermal analysis (TG/DTA), and specifically, it is measured under an Air atmosphere with a temperature raising rate of 10°C/min and in the range of 25°C to 600°C. As the above-mentioned TG/DTA, for example, there may be mentioned DTG-60 manufactured by Shimadzu Corporation.

A number average molecular weight of the -PFPE¹- portion is preferably in the range of 2,000 to 200,000, and more preferably in the range of 3,000 to 100,000. The above-mentioned number average molecular weight is defined to be a value measured by ¹⁹F-NMR.

In one embodiment, the number average molecular weight of the -PFPE¹-portion can be in the range of 2,000 to 10,000, and preferably to be in the range of 2,000 to 5,000. By having the number average molecular weight of the -PFPE¹- portion as mentioned above, a viscosity of the curable composition can be low and handling property thereof can be good. The curable composition having the number average molecular weight of the -PFPE¹- portion as mentioned above is also advantageous, for example, in the point of suppressing the viscosity when it is made a solution state using together with a solvent.

In one embodiment, the number average molecular weight of the -PFPE¹-portion can be in the range of 10,000 to 100,000, and preferably to be in the range of 10,000 to 50,000. By having the number average molecular weight of the -PFPE¹-portion as mentioned above, physical properties such as elongation characteristics of the curable composition after curing can be good.

In the above-mentioned PFPE-containing silane compound (a1), the structure represented by the PFPE¹ is bonded to the structure represented by the -X1-X2-, and due to the structure represented by the -X1-X2-, it is linked to the structure represented by R³ₚR⁴₃₋ₚSi- or R³_{q}R⁴_{3-q}Si- which is a structure at the molecular terminal.

The structure represented by the -X1-X2- is a group that acts as a linker which links the silicon atom at the terminal and the structure represented by the PFPE¹. X1s independently represent a single bond or a divalent organic group at each appearance. The said X1 may be a single bond or any of the organic groups as long as the above-mentioned PFPE-containing silane compound (a1) can be stably present. Specific examples of X1 may be mentioned those described as a portion corresponding to X1 in the formula mentioned later.

X1 is preferably a divalent organic group. As X1, it preferably represents a 2 to 10 valent organic group having at least one selected from the group consisting of a divalent alkylene group, -C₆H₄- (that is, -phenylene-. Hereinafter, it represents a phenylene group), -O- (an ether group), -CO- (a carbonyl group), -NR⁴⁰- and -SO₂-. The above-mentioned R⁴⁰s each independently represent a hydrogen atom, a phenyl group or a C_{1 to 6} alkyl group, preferably a hydrogen atom, or a methyl group. X1 can be a combination of these structures and, for example, it can take a structure such as alkylene-CO-, -CO-NR⁴⁰-, alkylene-O-alkylene and -O-CO-NR⁴⁰-. The above-mentioned -C₆H₄-, -CO-, -NR⁴- or -SO₂- is preferably contained in the molecular main chain of the PFPE-containing silane compound (a1). As more preferable X1, there may be mentioned a urethane bond or an amide bond. The two X1s present in the above-mentioned PFPE-containing silane compound (a1) may be the same or different from each other, and are preferably the same since preparation of the compound becomes easy. Also, when X1 is a divalent organic group, as long as it can be prepared as a stable compound, it may be bonded to PFPE¹ or X2 with either of the bonding arms. For example, when it is -CO-C₆H₄-, the -C₆H₄-portion may be bonded to X2, or the carbonyl group may be bonded to X2.

X2 is a portion linking to the silicon atom at the terminal, and is a group acting as a linker integrated with X1. X2s independently represent a t valent organic group at each appearance. Here, the value of t relates to a number of the group containing a silicon atom(s) existing at the terminal of the above-mentioned PFPE-containing silane compound (a1), and the value is an integer of 2 or more. Accordingly, R⁵s independently represent a divalent or more of an organic group, in particular, a 2 to 10 valent organic group at each appearance. Accordingly, the said X2 may be any group as long as it is a 2 to 10 valent organic group and the above-mentioned PFPE-containing silane compound (a1) can exist stably. The definition of the "2 to 10 valent organic group" is as defined above. Specific examples of X2 may be mentioned those described as the portion corresponding to X2 in the formula mentioned later. Also, X2 is to have bonding arms with a number of t, and it may be bonded to X1 with any of the bonding arms.

X2 is preferably a divalent organic group. X2 is preferably a divalent alkylene group, more preferably a C₁₋₂₀ alkylene group, further preferably a C₁₋₆ alkylene group, and particularly specifically a methylene group, an ethylene group, a propylene group, a methylethylene group, a butylene group, a hexamethylene group, etc. The two X2s existing in the above-mentioned PFPE-containing silane compound (a1) may be the same or different from each other, and are preferably the same since preparation of the compound becomes easy.

X3 is a divalent organic group linking the structures represented by the above-mentioned PFPE¹. The definition of the "divalent organic group" is as defined above. As preferable X3, those previously mentioned as the examples of X1 can be applied. It is more preferably a group containing a divalent alkylene group, and further preferably a divalent alkylene group having amide bonds at the both terminals. The alkylene portion is preferably a C₁₋₂₀ alkylene group, further preferably a C₁₋₆ alkylene group, particularly specifically a methylene group, an ethylene group, a propylene group, a methylethylene group, a butylene group, a hexamethylene group, etc. Also, X3 is a group linking two PFPE's, and as long as it can be prepared as a stable compound, two bonding arms possessed by X3 may be bonded to either of the both sides of PFPE¹, similar to X1. For example, in the above-mentioned formula (I), when X3 is a methylethylene group (-CH(CH₃)CH₂-), the CH₂- portion of the methylethylene group may be bonded to the PFPE¹ on the right side of the formula (I), or may be bonded to the PFPE¹ on the left side. The X3 portion can be introduced by, for example, bonding with X1 or X3 to the both terminals of the PFPE¹, in particular, to a compound having a reactive functional group capable of forming an amide bond or a urethane bond (hereinafter, such a compound sometimes referred to as a "PFPE modified product" and, for example, the said compound when the terminal is an ester group sometimes referred to as a "PFPE ester modified product"), a compound having two groups capable of forming a covalent bond by reacting with the said reactive functional group, for example, a diamine is reacted. A number of the X3 portion (in other words, the value of r) in the molecular chain can be operated by adjusting a relationship of the amounts of the reactants.

The above-mentioned PFPE-containing silane compound (a1) has a structure represented by R³ₚR⁴₃₋ₚSi- or R³_{q}R⁴_{3-q}Si- as the structure of the molecular terminals. The definitions of R³, R⁴, p and q are as defined above. That is, at the molecular terminals of the above-mentioned PFPE-containing silane compound (a), a structure in which two or three hydroxyl groups or hydrolyzable groups are bonded to the silicon atom is present. The "hydrolyzable group" has the same meaning as defined above. Different groups may be mixedly present in each of R³s and R⁴s in one molecule or one molecular terminal structure. The structure(s) in which two or three hydroxyl groups or hydrolyzable groups are bonded to the silicon atom is/are present at each terminal of the molecule with a number of t-1. The value of t is in the range of 2 to 10. Accordingly, the PFPE-containing silane compound (a) has at least two above-mentioned terminal structures. The value of j is preferably 2.

In the above-mentioned formula, R³s are each independently a hydrogen atom or a monovalent organic group at each appearance. As R³, it is preferably an alkyl group having 1 to 22 carbon atoms, and more preferably an alkyl group having 1 to 4 carbon atoms.

R⁴ is a hydroxyl group or a hydrolyzable group, and is preferably a hydrolyzable group. Examples of the hydrolyzable group are as mentioned above, and among these, in particular, -OR (here, R represents a substituted or unsubstituted alkyl group having 1 to 4 carbon atoms), that is, an alkoxy group is preferred. Examples of the alkoxy group may be mentioned an unsubstituted alkoxy group such as a methoxy group, an ethoxy group, a propoxy group, an isopropoxy group, an n-butoxy group, an isobutoxy group, etc.; and a substituted alkoxy group such as a chloromethoxy group, etc. Among these, a methoxy group or an ethoxy group is more preferred.

p or q is each 0 or 1. It is preferably to be 0. Accordingly, the PFPE-containing silane compound (a1) has a structure in which two or three hydroxyl groups or hydrolyzable groups are bonded to the silicon atom. Also, the structure at the molecular terminal of the PFPE-containing silane compound (a1) is preferably a trialkoxysilyl group, and more preferably a trimethoxysilyl group.

"r" represents a number of the recurring units of the structure represented by - PFPE'-X3-. The value of r is 1 or more, which is not particularly limited as long as it is in the range that the above-mentioned PFPE-containing silane compound (a1) can be prepared, and is preferably an integer of 1 or more and 5 or less. By using the PFPE-containing silane compound having the structure represented by -PFPE¹-X3- as a recurring unit, crack resistance of the cured product is improved. As a non-limitative example of the specific PFPE-containing silane compound (a1), there may be mentioned a compound having the following structure.

(CH₃O)₃Si-CH₂CH₂CH₂-NHCO-CF₂-(OCF₂)₂₉-(OCF₂CF₂)₁₇-OCF₂-CONHCH₂CH₂NHCO-CF₂-(OCF₂)₂₉-(OCF₂CF₂)₁₇-OCF₂-CONH-CH₂CH₂CH₂-Si(OCH₃)₃

Here, the subscripts of the fluoroalkyl ether structure represent an average number of recurring units represented by each structure.

### PFPE-containing silane compound (a2))

The PFPE-containing silane compound (a2) has a structure similar to the above-mentioned PFPE-containing silane compound (a1), but it does not have the structure represented by -PFPE¹-X3-. In other words, when r in the above-mentioned formula (I) is made 0, it corresponds to the PFPE-containing silane compound (a2) represented by the formula (II). The respective groups, R³, R⁴, PFPE¹, X1, X2, p, q and t in the PFPE-containing silane compound (a2) are the same as the definitions described previously in the PFPE-containing silane compound (a1), and as for the preferred embodiment, the same can be adopted. Provided that the structure represented by the above-mentioned formula (I) is not contained in the PFPE-containing silane compound (a2). As the preferable PFPE-containing silane compound (a2), it is a compound wherein X1 is a urethane bond or an amide bond, X2 is a divalent alkylene group, and t is 2 in the above-mentioned formula (II). By formulating such a compound not having the structure represented by -PFPE¹-X3- as a recurring unit in the curable composition, compatibility of the composition is good and the curable composition excellent in operatability can be obtained. As the non-limitative examples of the specific PFPE-containing silane compound (a2), there may be mentioned a compound in which the recurring unit corresponding to -PFPE¹-X3- is removed from the compound mentioned as (a). That is, a compound having the structure as mentioned below may be mentioned.

(CH₃O)₃Si-CH₂CH₂CH₂-NHCO-CF₂-(OCF₂)₂₉-(OCF₂CF₂)₁₇-OCF₂-CONH-CH₂CH₂CH₂-Si(OCH₃)₃

The present invention is based on the finding that compatibility of a curable composition becomes good, and excellent crack resistance can be obtained when it is made a cured product by using a compound having the structure represented by -PFPE'-X3-, that is, having the structure represented by the PFPE¹ as a recurring unit two or more times, and a compound which does not have the structure represented by - PFPE¹-X3- as a recurring unit in combination.

The PFPE-containing silane compounds (a1) and (a2) may be used each one kind of the compound alone, or may be used as a mixture of two or more kinds. The PFPE-containing silane compounds (a1) and (a2) can be mixed at any optional ratio. A mass ratio of the above-mentioned PFPE-containing silane compounds (a1) and (a2) is preferably in the range of 10:90 to 90:10, and more preferably in the range of 75:25 to 25:75. By making it in this range, a good curable composition with well balanced between compatibility and crack resistance can be obtained.

In a particularly preferred embodiment, the PFPE-containing silane compound (a1) is a compound wherein X1 is an amide bond or a urethane bond, X2 and X3 are divalent alkylene groups, r is in the range of 1 to 5, and p and q are 0. In a particularly preferred embodiment, the PFPE-containing silane compound (a2) is a compound having the same structure as the PFPE-containing silane compound (a1) except that it does not have the structure represented by -PFPE¹-X3-.

Depending on the preparation method of the PFPE-containing silane compound (a1) or (a2), a compound having a structure in which a silyl group and optionally a linker portion are not introduced at one or both terminal portions of PFPE-modified product or a compound in which the PFPE-modified products are connected with X3 may be produced in some cases. Hereinafter, a compound in which a silyl group is not contained at least one of the both terminals of the molecular chain constituted by such PFPE¹ may be sometimes indicated to as a "non-terminalized PFPE modified product". The purity of the compound represented by the formula (I) or (II) is preferably high, that is, a contained ratio of such a non-terminalized PFPE modified product is preferably small, and the PFPE-containing silane compound (a1) or (a2) may contain the non-terminalized PFPE modified product within the range which does not impair the function as a curable composition. For example, in the case of the above-mentioned general formula (I), a compound having a structure in which a carboxylic acid group, an ester group, a hydroxyl group or an alkylene-OH group is bonded to the structure represented by {-PFPE¹-C(=O)NR⁷-R⁶-NR⁷C(=O)-}ᵣ-PFPE¹- may be contained.

The purity of the PFPE-containing silane compound (a1) or (a2) can be made a terminalization rate of the silane as a measure, which shows how much the silyl group is introduced into the terminals. In the case of the PFPE-containing silane compound (a1), the terminalization rate can be measured by the ratio of the material in which the silyl group is introduced into the portion based on the total amount of the substance in which it is not sandwiched by X3 among the PFPE¹ portion of the general formula (I). The terminalization rate is preferably 90 mol% or more, more preferably 93 mol% or more, and further preferably 95 mol% or more. By making it within this range, a compound in which both terminals of the molecule are silylated can be contained with a sufficient amount, and the function as a curable composition can be sufficiently exhibited.

The terminalization rate can be determined by, for example, NMR measurement. In the case of the compound of the general formula (I), by measuring the CF₂ group existing at the terminal of PFPE¹, that is, the CF₂ group adjacent to the amide group bonded to the linker is measured by ¹⁹F NMR, how many silyl groups are introduced into the molecular terminal can be obtained. In a compound having a structure different from that of the compound of the general formula (I), the terminalization rate can be calculated by the NMR measurement at the portion different between the compound in which the terminal is silylated or not, and the method is well known for those skilled in the art.

Hereinafter, as one embodiment of the above-mentioned PFPE-containing silane compound (a1) or (a2), a specific structure will be explained in detail. The above-mentioned PFPE-containing silane compound (a1) or (a2) is preferably at least one kind of the compound represented by the formula (A), (B), (C) or (D). Each group and subscript appearing in the following formulae can correspond to the group and subscript appearing in the above-mentioned general formula, respectively, and those skilled in the art can grasp the corresponding relationship between them.

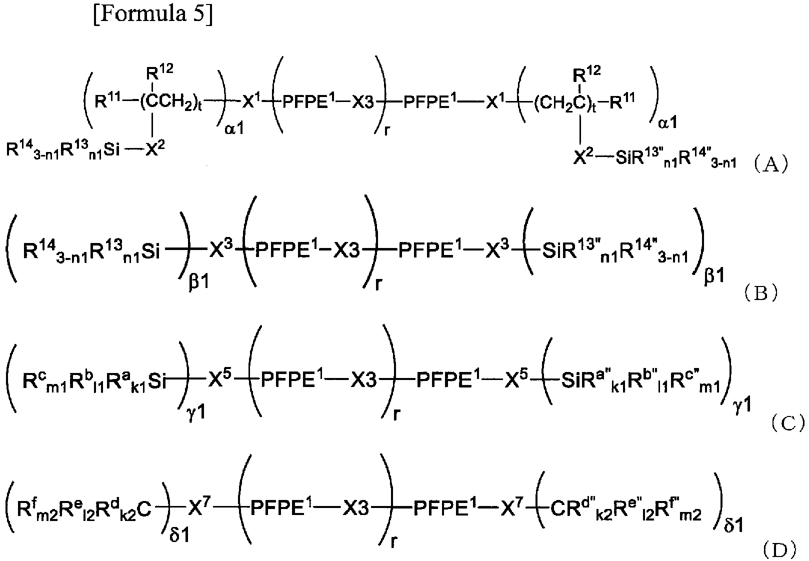

Hereinafter, the PFPE-containing silane compound represented by the above-mentioned formula (A), (B), (C) and (D) will be explained. In the following explanation, the case where r is 1 or more in each formula corresponds to the PFPE-containing silane compound (a1), and the case where r is 0 corresponds to the PFPE-containing silane compound (a2). That is, one embodiment of the PFPE-containing silane compound (a2) is at least one kind of the compounds represented by the following formula (A2), (B2), (C2) or (D2).

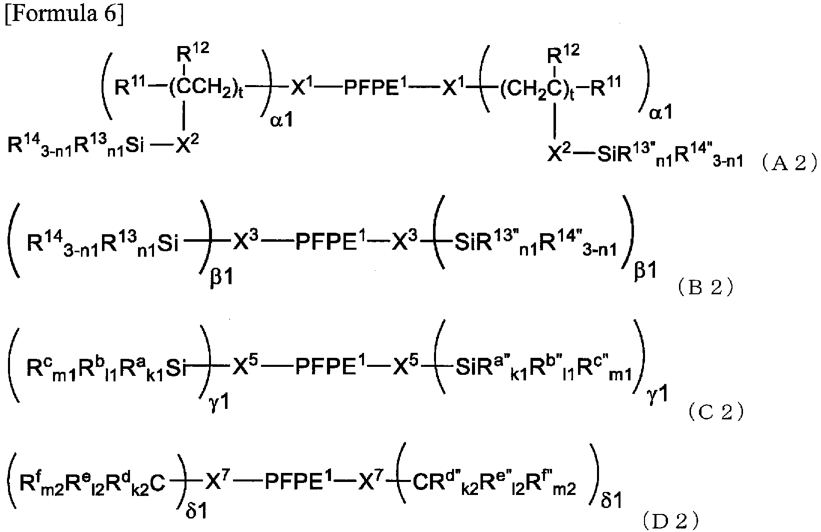

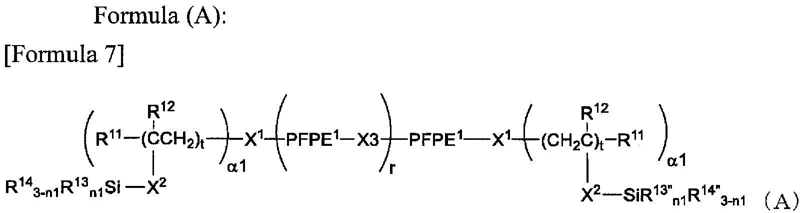

In the above-mentioned formula, PFPE¹, X3 have the same meanings as defined above.

In the above-mentioned formula, R¹³s each independently represent a hydroxyl group or a hydrolyzable group(s) at each appearance. The hydrolyzable group has the same meaning as defined above. That is, R¹³ can be corresponded to R⁴ of the above-mentioned general formula (I) or (II).

In the above-mentioned formula, R¹⁴s each independently represent a hydrogen atom or an alkyl group having 1 to 22 carbon atoms, and preferably an alkyl group having 1 to 4 carbon atoms at each appearance. That is, R¹⁴ can be corresponded to R³ of the above-mentioned general formula (I) or (II).

In the above-mentioned formula, R¹¹s each independently represent a hydrogen atom or a halogen atom at each appearance. The halogen atom is preferably an iodine atom, a chlorine atom or a fluorine atom, and more preferably a fluorine atom.

In the above-mentioned formula, R¹² s each independently represent a hydrogen atom or a lower alkyl group at each appearance. The lower alkyl group is preferably an alkyl group having 1 to 20 carbon atoms, more preferably an alkyl group having 1 to 6 carbon atoms, and may be mentioned, for example, a methyl group, an ethyl group, a propyl group, etc.

In the above-mentioned formula, R^{11"}, R^{12"}, R^{13"} and R^{14"} have the same meanings as R¹¹, R¹², R¹³ and R¹⁴, respectively.

In the above-mentioned formula (A), the Si atom bonded to at least one group selected from the group consisting of a hydroxyl group and a hydrolyzable group(s) refers to an Si atom wherein n1 is an integer of 1 to 3, and it is contained in (-SiR¹³ₙ₁R¹⁴₃₋ₙ₁) or (-SiR^{13"}ₙ₁R^{14"}₃₋ₙ₁).

In the above-mentioned formula, n1 is an integer of 0 to 3, is preferably 1 to 3, and is more preferably 3, which is independently each (-SiR¹³ₙ₁R¹⁴₃₋ₙ₁) unit or each (-SiR^{13"}ₙ₁R^{14"}₃₋ₙ₁) unit. In the formula, at least two of "n1"s are integers of 1 to 3, that is, all the "nl"s do not become 0 simultaneously. That is, in the formula, there exist at least two Si atoms to which R¹³or R^{13"} is bonded. In other words, in the formula (A), there exist at least two structures selected from the group consisting of the -SiR¹³ₙ₁R¹⁴₃₋ₙ₁ structure (that is, -SiR¹³ portion) wherein n1 is 1 or more and the -SiR^{13"}ₙ₁R^{14"}₃₋ₙ₁ structure (that is, -SiR^{13"} portion) wherein n1 is 1 or more. That is, n1 can be corresponded to the value of 3-p or 3-q of the above-mentioned general formula (I) or (II).

In the formula (A), the Si atom bonded to at least one group selected from the group consisting of a hydroxyl group and a hydrolyzable group(s) is preferably present at the both terminals of the molecular main chain. That is, in the formula (A), there exist at least one -SiR¹³ₙ₁R¹⁴₃₋ₙ₁ structure (that is, -SiR¹³ portion) wherein n1 is 1 or more, and at least one -SiR^{13"}ₙ₁R^{14"}₃₋ₙ₁ structure (that is, -SiR^{13"} portion) wherein n1 is 1 or more.

In the above-mentioned formula, X¹s each independently represent a single bond or a 2 to 10 valent organic group linked to an amide bond. The said X¹ is, in the compound represented by the formula (A), considered to be a part of a linker which links the perfluoro(poly)ether part (that is, a the group enclosed with parentheses and attached α) that mainly provides water repellent property and surface slipperiness, etc., and the silane part that provides a bonding ability to a substrate. Accordingly, the said X¹ may be a single bond, or either of the organic groups as long as the compound represented by the formula (A) can exist stably. That is, it can be understood that X¹ corresponds to a part of -X1-X2- in the above-mentioned general formula (I) or (II) with X² mentioned later and a hydrocarbon group linked thereto. Incidentally, in the present specification, in the group described as X¹, the left side of the description is bonded to an amide bond adjacent to the group represented by PFPE¹ and the right side is bonded to the group enclosed with parentheses and attached α, respectively. Provided that, the group described as X¹ includes, as long as it can be prepared as a stable compound, a group that binds in the opposite direction, for example, when it is - CO-C₆H₄-, that in which a phenylene group is bonded to an amide bond adjacent to the group represented by PFPE¹, described as -C₆H₄-CO-.

In another embodiment, X¹ can be X^{e}. X^{e} represents a single bond or a 2 to 10 valent organic group, and preferably a single bond or a 2 to 10 valent organic group having at least one selected from the group consisting of -C₆H₄- (that is, -phenylene-. Hereinafter, it represents a phenylene group.), -O- (an ether group), -CO- (a carbonyl group), -NR⁴⁰- and -SO₂-. The above-mentioned R⁴⁰s each independently represent a hydrogen atom, a phenyl group or a C_{1 to 6} alkyl group (preferably a methyl group), and preferably a hydrogen atom or a methyl group. X^{e} can be a combination of these structures and can take the structure such as, for example, alkylene-CO-, -CO-NR⁴⁰-, alkylene-O-alkylene, -O-CO-NR⁴⁰- and the like. The above-mentioned -C₆H₄-, -O-, - CO-, -NR⁴- or -SO₂- is preferably contained in the molecular main chain of the PFPE-containing silane compound.

X^{e} more preferably represents a single bond or a 2 to 10 valent organic group having at least one selected from the group consisting of -C₆H₄-, -CONR⁴⁰-, -CONR⁴⁰-C₆H₄-, -CO-, -CO-C₆H₄-, -O-CO-NR⁴⁰-, -SO₂NR⁴⁰-, -SO₂NR⁴⁰-C₆H₄-, -SO₂- and -SO₂-C₆H₄-. The above-mentioned -C₆H₄-, -CONR⁴⁰-, -CONR⁴⁰-C₆H₄-, -CO-, -CO-C₆H₄-, - SO₂NR⁴⁰-, -SO₂NR⁴⁰-C₆H₄-, -SO₂- or -SO₂-C₆H₄- is preferably contained in the molecular main chain of the PFPE-containing silane compound (A).

In the above-mentioned formula, α1 is an integer of 1 to 9, and can be changed depending on the number of the valence of X¹. In the formula (A), α1 is a value subtracting 1 from the value of the number of the valence of X¹. When X¹ is a single bond or a divalent organic group, then α1 is 1. That is, α1 can correspond to the value of j of the above-mentioned general formula.

The above-mentioned X¹ is preferably 2 to 7 valence, more preferably 2 to 4 valence, and further preferably a divalent organic group.

In one embodiment, X¹ is a 2 to 4 valent organic group, and α1 is 1 to 3.

In another embodiment, X¹ is a divalent organic group, and α1 is 1. In this case, the formula (A) is represented by the following formula (A').

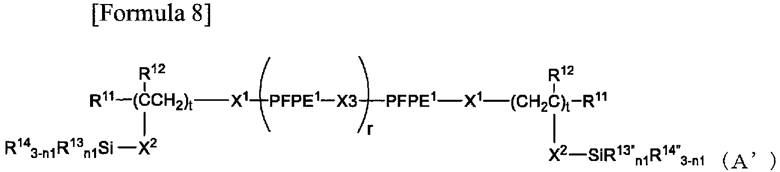

Examples of the above-mentioned X¹ are not particularly, for example, a divalent group represented by the following formula:

-(R³¹)_{p'}-(X^{a})q_{'}-

[wherein:
R³¹ represents a single bond, -(CH₂)_{s'}- or an o-, m- or p-phenylene group, and preferably -(CH₂)_{s'}-,
s' is an integer of 1 to 20, preferably an integer of 1 to 6, more preferably an integer of 1 to 3, and further more preferably 1 or 2,
X^{a} represents -(X^{b})_{1'}-,
X^{b}s each independently represent a group selected from the group consisting of -O-, -S-, an o-, m- or p-phenylene group, -C(O)O-, -Si(R³³)₂-, -(Si(R³³)₂O)_{m'}-Si(R³³)₂-, -CONR³⁴-, -O-CONR³⁴-, -NR³⁴- and -(CH₂)_{n'}- at each appearance,
R³³s each independently represent a phenyl group, a C₁₋₆ alkyl group or a C₁₋₆ alkoxy group at each appearance, preferably a phenyl group or a C₁₋₆ alkyl group, and more preferably a methyl group,
R³⁴s each independently represent a hydrogen atom, a phenyl group or a C₁₋₆ alkyl group (preferably a methyl group) at each appearance,
m' is each independently an integer of 1 to 100, and preferably an integer of 1 to 20 at each appearance,
n' is each independently an integer of 1 to 20, preferably an integer of 1 to 6, and more preferably an integer of 1 to 3 at each appearance,
1' is an integer of 1 to 10, preferably an integer of 1 to 5, and more preferably an integer of 1 to 3,
p' is 0 or 1,
q' is 0 or 1,
here, at least one of p' and q' is 1, and the order of existence of each recurring units enclosed with parentheses applied with p' or q' is arbitrary]
is exemplified. Here, R³¹ and X^{a} (typically a hydrogen atom of R³¹ and X^{a}) may be substituted by one or more substituents selected from a fluorine atom, a C₁₋₃ alkyl group and a C₁₋₃ fluoroalkyl group. With the proviso that, when R³¹ is a single bond or p' is 0, X^{a} is not -CONR³⁴- or -NR³⁴-.

In one embodiment, 1' in the above-mentioned formula is 1.

X¹ is preferably -(R³¹)_{p'}-(X^{a})_{q'}-R³²-. R³² represents a single bond, -(CH₂)_{t'}- or an o-, m- or p-phenylene group, and preferably -(CH₂)_{t'}-. t' is an integer of 1 to 20, preferably an integer of 2 to 6, and more preferably an integer of 2 to 3. Here, R³² (typically a hydrogen atom in R³²) may be substituted by one or more substituents selected from a fluorine atom, a C₁₋₃ alkyl group and a C₁₋₃ fluoroalkyl group.

X¹ can be preferably
a single bond,
a C₁₋₂₀ alkylene group,
-X^{b}-
-R³¹-X^{c}-R³²-, or
-X^{d}-R³¹-
[wherein, R³¹ and R³² have the same meanings as defined above.].
Incidentally, the alkylene group refers to a group having a -(C_{δ}H_{2δ})- structure, which may be substituted or unsubstituted, and may be linear or branched.

X¹ is more preferably
a single bond,
a C₁₋₂₀ alkylene group,
-X^{b}-
-(CH₂)_{s'}-X^{c}-,
-(CH₂)ₛ-X^{c}-(CH₂)_{t'}-,
-X^{d}-, or
-X^{d}-(CH₂)_{t'}-
[wherein, s' and t' have the same meanings as defined above.].

X¹ is further preferably
-X^{b}-
-X^{f}-,
-X^{f}-C₁₋₂₀ alkylene group,
-X^{f}-(CH₂)_{s'}-X^{c}-,
-X^{f}-(CH₂)_{s'}-X^{c}-(CH₂)_{t'}-
-X^{f}-X^{d}-, or
-X^{f}-X^{d}-(CH₂)_{t'}-.
In the formulae, s' and t' have the same meanings as defined above.

In the above-mentioned formulae, X^{f} is an alkylene group having 1 to 6 carbon atoms, preferably 1 to 4 carbon atoms, and more preferably 1 to 2 carbon atoms, for example, a methylene group. The hydrogen atom in X^{f} may be substituted by one or more substituents selected from a fluorine atom, a C₁₋₃ alkyl group and a C₁₋₃ fluoroalkyl group, and preferably substituted. X^{f} may be linear or branched, and preferably linear.

In the above-mentioned formula, X^{c} represents

-O-,

-S-,

-C(O)O-,

-CONR³⁴-,

-O-CONR³⁴-,

-Si(R³³)₂-,

-(Si(R³³)₂O)_{m'}-Si(R³³)₂-,

-O-(CH₂)_{u'}-(Si(R³³)₂O)_{m'}-Si(R³³)₂-,

-O-(CH₂)_{u'}-Si(R³³)₂-O-Si(R³³)₂-CH₂CH₂-Si(R³³)₂-O-Si(R³³)₂-,

-O-(CH₂)_{u'}-Si(OCH₃)₂OSi(OCH₃)₂-,

-CONR³⁴-(CH₂)_{u'}-(Si(R³³)₂O)_{m'}-Si(R³³)₂-,

-CONR³⁴-(CH₂)_{u'}-N(R³⁴)-, or

-CONR³⁴-(o-, m- or p-phenylene)-Si(R³³)₂-

[wherein, R³³, R³⁴ and m' have the same meanings as defined above, and
u' is an integer of 1 to 20, preferably an integer of 2 to 6, and more preferably an integer of 2 to 3.]. X^{c} is preferably -O-.

In the above-mentioned formula, X^{d} represents

-S-,

-C(O)O-,

-CONR³⁴-,

-CONR³⁴-(CH₂)_{u'}-(Si(R³³)₂O)_{m'}-Si(R³³)₂-,

-CONR³⁴-(CH₂)_{u'}-N(R³⁴)-, or

-CONR³⁴-(o-, m- or p-phenylene)-Si(R³³)₂-

[wherein, each symbol has the same meaning as defined above.].
and particularly preferably, X¹ is groups represented by

-X^{b}-

-X^{f}-,

-X^{f}-C₁₋₂₀ alkylene group,

-X^{f}-(CH₂)_{s'}-X^{c}-,

-X^{f}-(CH₂)_{s'}-X^{c}-(CH₂)_{t'}-

-X^{f}-X^{d}-,

or

-X^{f}-X^{d}-(CH₂)_{t'}-

[wherein, X^{b}, X^{f}, s' and t' have the same meanings as defined above.],
X^{b} is -CONR³⁴-
X^{c} is -O- or -CONR³⁴-,
X^{d} is -CONR³⁴-,
[R³⁴s each independently represent a hydrogen atom, a phenyl group or a C₁₋₆ alkyl group (preferably a methyl group) at each appearance.].

In one embodiment, X¹ is groups represented by

-X^{b}-

-X^{f}-(CH₂)_{s'}-X^{c}-,

-X^{f}-(CH₂)_{s'}-X^{c}-(CH₂)_{t'}-

-X^{f}-X^{d}-,

or

-X^{f}-X^{d}-(CH₂)_{t'}-

[wherein, X^{f}, s' and t' have the same meanings as defined above.],
X^{b} is -CONR³⁴-
X^{c} is -CONR³⁴-,
X^{d} is -CONR³⁴-,
[R³⁴s each independently represent a hydrogen atom, a phenyl group or a C₁₋₆ alkyl group (preferably a methyl group) at each appearance.].

In one embodiment, X¹ can be
a single bond,
a C₁₋₂₀ alkylene group,
-X^{b}-
-(CH₂)_{s'}-X^{c}-(CH₂)_{t'}-, or
-X^{d}-(CH₂)_{t'}-
[wherein, each symbol has the same meaning as defined above.]. With the proviso that X^{d} is not -CONR³⁴-

X¹ is preferably
a single bond,
a C₁₋₂₀ alkylene group,
-CONR³⁴-
-(CH₂)_{s'}-O-(CH₂)_{t'}-,
-(CH₂)_{s'}-(Si(R³³)₂O)_{m'}-Si(R³³)₂-(CH₂)_{t'}-,
-(CH₂)_{s'}-O-(CH₂)_{u'}-(Si(R³³)₂O)_{m'}-Si(R³³)₂-(CH₂)_{t'}-, or
-(CH₂)_{s'}-O-(CH₂)_{t'}-Si(R³³)₂-(CH₂)_{u'}-Si(R³³)₂-(CᵥH₂ᵥ)-
[wherein, R³³, R³⁴, m', s', t' and u' have the same meanings as defined above, v is an integer of 1 to 20, preferably an integer of 2 to 6, and more preferably an integer of 2 to 3.].

In the above-mentioned formula, -(CᵥH₂ᵥ)- may be linear or may be branched, and, for example, can be -CH₂-, -CH₂CH₂-, -CH₂CH₂CH₂-, -CH(CH₃)- or -CH(CH₃)CH₂-.

X¹ group may be substituted by one or more substituents selected from a fluorine atom, a C₁₋₃ alkyl group and a C₁₋₃ fluoroalkyl group (preferably a C₁₋₃ perfluoroalkyl group).

In one embodiment, X¹ group can be other than the -O-C₁₋₆ alkylene group.

In another embodiment, as the X¹¹ and X^{11'} groups, for example, there may be mentioned the following groups: 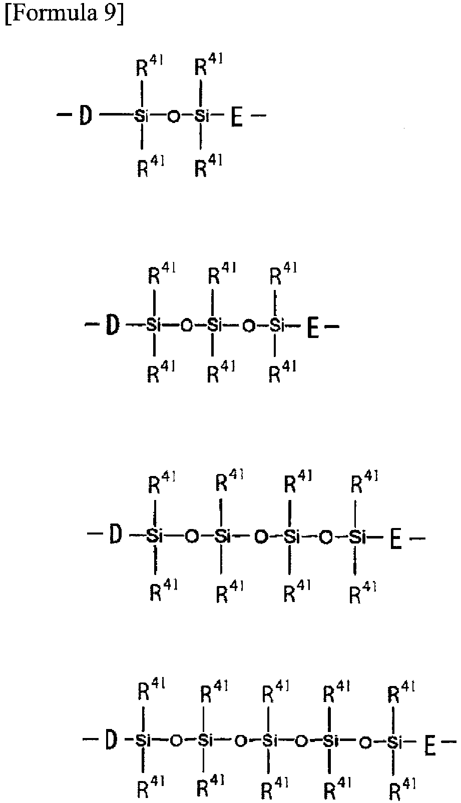 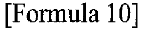 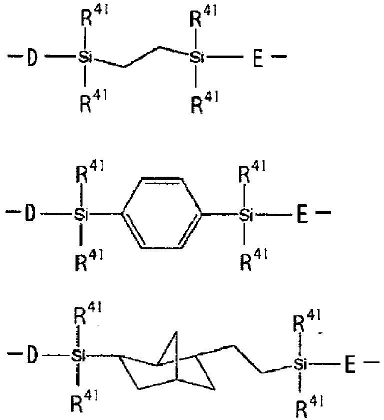 [wherein, R⁴¹s are each independently a hydrogen atom, a phenyl group, an alkyl group having 1 to 6 carbon atoms or a C₁₋₆ alkoxy group, preferably a methyl group;
D is a group selected from

   -CH₂O(CH₂)₂-,

   -CH₂O(CH₂)₃-,

   -CF₂O(CH₂)₃-,

   -(CH₂)₂-,

   -(CH₂)₃-,

   -(CH₂)₄-,

   -CONH-(CH₂)₃-,

   -CON(CH₃)-(CH₂)₃-,

   -CON(Ph)-(CH₂)₃- (wherein, Ph means phenyl), and 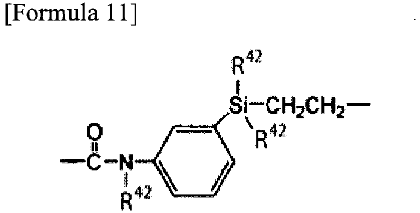 (wherein, R⁴²s each independently represent a hydrogen atom, a C₁₋₆ alkyl group or a C₁₋₆ alkoxy group, preferably a methyl group or a methoxy group, more preferably a methyl group.),
E is -(CH₂)ₙₑ- (ne is an integer of 2 to 6),
D binds to PFPE¹ of the main chain of the molecule, and E binds to the group opposite to PFPE¹.]

Specific examples of X¹ may be mentioned, for example:
a single bond,
-CH₂OCH₂-,
-CH₂O(CH₂)₂-,
-CH₂O(CH₂)₃-,
-CH₂O(CH₂)₆-,
-CF₂-CH₂-O-CH₂-,
-CF₂-CH₂-O-(CH₂)₂-,
-CF₂-CH₂-O-(CH₂)₃-,
-CF₂-CH₂-O-(CH₂)₆-,
-CH₂O(CH₂)₃Si(CH₃)₂OSi(CH₃)₂(CH₂)₂-,
-CH₂O(CH₂)₃Si(CH₃)₂OSi(CH₃)₂OSi(CH₃)₂(CH₂)₂-,
-CH₂O(CH₂)₃Si(CH₃)₂O(Si(CH₃)₂O)₂Si(CH₃)₂(CH₂)₂-,
-CH₂O(CH₂)₃Si(CH₃)₂O(Si(CH₃)₂O)₃Si(CH₃)₂(CH₂)₂-,
-CH₂O(CH₂)₃Si(CH₃)₂O(Si(CH₃)₂O)₁₀Si(CH₃)₂(CH₂)₂-,
-CH₂O(CH₂)₃Si(CH₃)₂O(Si(CH₃)₂O)₂₀Si(CH₃)₂(CH₂)₂-,
-CH₂OCF₂CHFOCF₂-,
-CH₂OCF₂CHFOCF₂CF₂-,
-CH₂OCF₂CHFOCF₂CF₂CF₂-,
-CH₂OCH₂CF₂CF₂OCF₂-,
-CH₂OCH₂CF₂CF₂OCF₂CF₂-,
-CH₂OCH₂CF₂CF₂OCF₂CF₂CF₂-,
-CH₂OCH₂CF₂CF₂OCF(CF₃)CF₂OCF₂-,
-CH₂OCH₂CF₂CF₂OCF(CF₃)CF₂OCF₂CF₂-,
-CH₂OCH₂CF₂CF₂OCF(CF₃)CF₂OCF₂CF₂CF₂-,
-CH₂OCH₂CHFCF₂OCF₂-,
-CH₂OCH₂CHFCF₂OCF₂CF₂-,
-CH₂OCH₂CHFCF₂OCF₂CF₂CF₂-,
-CH₂OCH₂CHFCF₂OCF(CF₃)CF₂OCF₂-,
-CH₂OCH₂CHFCF₂OCF(CF₃)CF₂OCF₂CF₂-,
-CH₂OCH₂CHFCF₂OCF(CF₃)CF₂OCF₂CF₂CF₂-,
-CH₂OCF₂CHFOCF₂CF₂CF₂-C(O)NH-CH₂-,
-CH₂OCH₂(CH₂)₇CH₂Si(OCH₃)₂OSi(OCH₃)₂(CH₂)₂Si(OCH₃)₂OSi(OCH₃)₂(CH₂)₂-,
-CH₂OCH₂CH₂CH₂Si(OCH₃)₂OSi(OCH₃)₂(CH₂)₃-,
-CH₂OCH₂CH₂CH₂Si(OCH₂CH₃)₂OSi(OCH₂CH₃)₂(CH₂)₃-,
-CH₂OCH₂CH₂CH₂Si(OCH₃)₂OSi(OCH₃)₂(CH₂)₂-,
-CH₂OCH₂CH₂CH₂Si(OCH₂CH₃)₂OSi(OCH₂CH₃)₂(CH₂)₂-,
-(CH₂)₂-Si(CH₃)₂-(CH₂)₂-,
-CH₂-,
-(CH₂)₂-,
-(CH₂)₃-,
-(CH₂)₄-,
-(CH₂)₅-,
-(CH₂)₆-,
-CF₂-,
-(CF₂)₂-,
-CF₂-CH₂-,
-CF₂-(CH₂)₂-,
-CF₂-(CH₂)₃-,
-CF₂-(CH₂)₄-,
-CF₂-(CH₂)₅-,
-CF₂-(CH₂)₆-,
-CO-,
-CONH-,
-CONH-CH₂-,
-CONH-(CH₂)₂-,
-CONH-(CH₂)₃-,
-CONH-(CH₂)₆-,
-CF₂CONH-,
-CF₂CONHCH₂-,
-CF₂CONH(CH₂)₂-,
-CF₂CONH(CH₂)₃-,
-CF₂CONH(CH₂)₆-,
-CON(CH₃)-,
-CON(CH₃)-(CH₂)₃-,
-CON(Ph)- (wherein, Ph means phenyl),
-CON(Ph)-(CH₂)₃- (wherein, Ph means phenyl),
-CON(CH₃)-(CH₂)₆-,
-CON(Ph)-(CH₂)₆- (wherein, Ph means phenyl),
-CF₂-CON(CH₃)-(CH₂)₃-,
-CF₂-CON(Ph)-(CH₂)₃- (wherein, Ph means phenyl),
-CF₂-CON(CH₃)-(CH₂)₆-,
-CF₂-CON(Ph)-(CH₂)₆- (wherein, Ph means phenyl),
-CONH-(CH₂)₂NH(CH₂)₃-,
-CONH-(CH₂)₆NH(CH₂)₃-,
-CH₂O-CONH-(CH₂)₃-,
-CH₂O-CONH-(CH₂)₆-,
-S-(CH₂)₃-,
-(CH₂)₂S(CH₂)₃-,
-CONH-(CH₂)₃Si(CH₃)₂OSi(CH₃)₂(CH₂)₂-,
-CONH-(CH₂)₃Si(CH₃)₂OSi(CH₃)₂OSi(CH₃)₂(CH₂)₂-,
-CONH-(CH₂)₃Si(CH₃)₂O(Si(CH₃)₂O)₂Si(CH₃)₂(CH₂)₂-,
-CONH-(CH₂)₃Si(CH₃)₂O(Si(CH₃)₂O)₃Si(CH₃)₂(CH₂)₂-,
-CONH-(CH₂)₃Si(CH₃)₂O(Si(CH₃)₂O)₁₀Si(CH₃)₂(CH₂)₂-,
-CONH-(CH₂)₃Si(CH₃)₂O(Si(CH₃)₂O)₂₀Si(CH₃)₂(CH₂)₂-,
-C(O)O-(CH₂)₃-,
-C(O)O-(CH₂)₆-,
-CH₂-O-(CH₂)₃-Si(CH₃)₂-(CH₂)₂-Si(CH₃)₂-(CH₂)₂-,
-CH₂-O-(CH₂)₃-Si(CH₃)₂-(CH₂)₂-Si(CH₃)₂-CH(CH₃)-,
-CH₂-O-(CH₂)₃-Si(CH₃)₂-(CH₂)₂-Si(CH₃)₂-(CH₂)₃-,
-CH₂-O-(CH₂)₃-Si(CH₃)₂-(CH₂)₂-Si(CH₃)₂-CH(CH₃)-CH₂-,
-OCH₂-,
-O(CH₂)₃-,
-OCFHCF₂-, 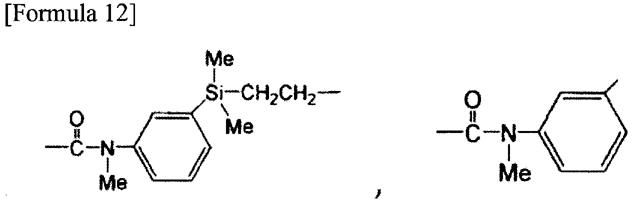
and the like.

Among the above, X¹ are preferably to be
-CH₂OCH₂-,
-CH₂O(CH₂)₂-,
-CH₂O(CH₂)₃-,
-CH₂O(CH₂)₆-,
-CF₂-CH₂-O-CH₂-,
-CF₂-CH₂-O-(CH₂)₂-,
-CF₂-CH₂-O-(CH₂)₃-,
-CF₂-CH₂-O-(CH₂)₆-,
-CH₂OCF₂CHFOCF₂-,
-CH₂OCF₂CHFOCF₂CF₂-,
-CH₂OCF₂CHFOCF₂CF₂CF₂-,
-CH₂OCH₂CF₂CF₂OCF₂-,
-CH₂OCH₂CF₂CF₂OCF₂CF₂-,
-CH₂OCH₂CF₂CF₂OCF₂CF₂CF₂-,
-CH₂OCH₂CF₂CF₂OCF(CF₃)CF₂OCF₂-,
-CH₂OCH₂CF₂CF₂OCF(CF₃)CF₂OCF₂CF₂-,
-CH₂OCH₂CF₂CF₂OCF(CF₃)CF₂OCF₂CF₂CF₂-,
-CH₂OCH₂CHFCF₂OCF₂-,
-CH₂OCH₂CHFCF₂OCF₂CF₂-,
-CH₂OCH₂CHFCF₂OCF₂CF₂CF₂-,
-CH₂OCH₂CHFCF₂OCF(CF₃)CF₂OCF₂-,
-CH₂OCH₂CHFCF₂OCF(CF₃)CF₂OCF₂CF₂-,
-CH₂OCH₂CHFCF₂OCF(CF₃)CF₂OCF₂CF₂CF₂-,
-CH₂OCF₂CHFOCF₂CF₂CF₂-C(O)NH-CH₂-,
-CH₂-,
-(CH₂)₂-,
-(CH₂)₃-,
-(CH₂)₄-,
-(CH₂)₅-,
-(CH₂)₆-,
-CF₂-,
-(CF₂)₂-,
-CF₂-CH₂-,
-CF₂-(CH₂)₂-,
-CF₂-(CH₂)₃-,
-CF₂-(CH₂)₄-,
-CF₂-(CH₂)₅-,
-CF₂-(CH₂)₆-,
-CONH-,
-CONH-CH₂-,
-CONH-(CH₂)₂-,
-CONH-(CH₂)₃-,
-CONH-(CH₂)₆-,
-CF₂CONH-,
-CF₂CONHCH₂-,
-CF₂CONH(CH₂)₂-,
-CF₂CONH(CH₂)₃-,
-CF₂CONH(CH₂)₆-,
-CON(CH₃)-,
-CON(CH₃)-(CH₂)₃-,
-CON(Ph)- (wherein, Ph means phenyl),
-CON(Ph)-(CH₂)₃- (wherein, Ph means phenyl),
-CON(CH₃)-(CH₂)₆-,
-CON(Ph)-(CH₂)₆- (wherein, Ph means phenyl),
-CF₂-CON(CH₃)-(CH₂)₃-,
-CF₂-CON(Ph)-(CH₂)₃- (wherein, Ph means phenyl),
-CF₂-CON(CH₃)-(CH₂)₆-,
-CF₂-CON(Ph)-(CH₂)₆- (wherein, Ph means phenyl),
-CONH-(CH₂)₂NH(CH₂)₃-,
-CONH-(CH₂)₆NH(CH₂)₃-,
-CH₂O-CONH-(CH₂)₃-,
-CH₂O-CONH-(CH₂)₆-,
-OCH₂-,
-O(CH₂)₃-, or
-OCFHCF₂-.

Among the above, X¹ are more preferably
-CH₂OCF₂CHFOCF₂CF₂CF₂-C(O)NH-CH₂-,
-CONH-,
-CONH-CH₂-,
-CONH-(CH₂)₂-,
-CONH-(CH₂)₃-,
-CONH-(CH₂)₆-,
-CF₂CONH-,
-CF₂CONHCH₂-,
-CF₂CONH(CH₂)₂-,
-CF₂CONH(CH₂)₃-,
-CF₂CONH(CH₂)₆-,
-CON(CH₃)-,
-CON(CH₃)-(CH₂)₃-,
-CON(Ph)- (wherein, Ph means phenyl),
-CON(Ph)-(CH₂)₃- (wherein, Ph means phenyl),
-CON(CH₃)-(CH₂)₆-,
-CON(Ph)-(CH₂)₆- (wherein, Ph means phenyl),
-CF₂-CON(CH₃)-(CH₂)₃-,
-CF₂-CON(Ph)-(CH₂)₃- (wherein, Ph means phenyl),
-CF₂-CON(CH₃)-(CH₂)₆-,
-CF₂-CON(Ph)-(CH₂)₆- (wherein, Ph means phenyl),
-CONH-(CH₂)₂NH(CH₂)₃-,
-CONH-(CH₂)₆NH(CH₂)₃-.

In one embodiment, X¹ represents X^{e'}. X^{e'} is a single bond, an alkylene group having 1 to 6 carbon atoms, -R⁵¹-C₆H₄-R⁵²-, -R⁵¹-CONR⁴⁰-R⁵²-, -R⁵¹-CONR⁴⁰-C₆H₄-R⁵²-, -R⁵¹-CO-R⁵²-, -R⁵¹-CO-C₆H₄-R⁵²-, -R⁵¹-SO₂NR⁴⁰-R⁵²-, -R⁵¹-SO₂NR⁴⁰-C₆H₄-R⁵²-, - R⁵¹-SO₂-R⁵²-, or -R⁵¹-SO₂-C₆H₄-R⁵²-. R⁵¹ and R⁵² each independently represent a single bond or an alkylene group having 1 to 6 carbon atoms, and preferably a single bond or an alkylene group having 1 to 3 carbon atoms. R⁴³ has the same meaning as defined above. The above-mentioned alkylene group is substituted or unsubstituted, and preferably unsubstituted. As the substituent(s) of the above-mentioned alkylene group, there may be mentioned, for example, a halogen atom, and preferably a fluorine atom. The above-mentioned alkylene group is linear or branched, and preferably linear.

In a preferred embodiment, X^{e'} can be
a single bond,
-X^{f}-,
an alkylene group having 1 to 6 carbon atoms, preferably having 1 to 3 carbon atoms,
-X^{f}-C₁₋₆ alkylene group, preferably -X^{f}-C₁₋₃ alkylene group, and more preferably
-X^{f}-C₁₋₂ alkylene group,
-C₆H₄-R^{52'}-,
-CONR^{4'}-R^{52'}-,
-CONR^{4'}-C₆H₄-R^{52'}-,
-X^{f}-CONR^{4'}-R^{52'}-,
-X^{f}-CONR^{4'}-C₆H₄-R^{52'}-,
-CO-R^{52'}-,
-CO-C₆H₄-R^{52'}-,
-SO₂NR^{4'}-R^{52'}-,
-SO₂NR^{4'}-C₆H₄-R^{52'}-,
-SO₂-R^{52'}-,
-SO₂-C₆H₄-R^{52'}-,
-R⁵¹'-C₆H₄-,
-R^{51'}-CONR^{4'}-,
-R^{51'}-CONR^{4'}-C₆H₄-,
-R^{51'}-CO-,
-R^{51'}-CO-C₆H₄-,
-R^{51'}-SO₂NR^{4'}-,
-R^{51'}-SO₂NR^{4'}-C₆H₄-,
-R^{51'}-SO₂-,
-R^{51'}-SO₂-C₆H₄-,
-C₆H₄-,
-CONR^{4'}-,
-CONR^{4'}-C₆H₄-,
-X^{f}-CONR^{4'}-,
-X^{f}-CONR^{4'}-C₆H₄-,
-CO-,
-CO-C₆H₄-,
-SO₂NR^{4'}-,
-SO₂NR^{4'}-C₆H₄-,
-SO₂-, or
-SO₂-C₆H₄-
(wherein, R^{51'} and R^{52'} are each independently a linear alkylene group having 1 to 6 carbon atoms, and preferably 1 to 3 carbon atoms. As mentioned above, the above-mentioned alkylene group is substituted or unsubstituted, and as the substituent for the above-mentioned alkylene group, there may be mentioned, for example, a halogen atom, and preferably a fluorine atom.
   R^{4'} is a hydrogen atom or a methyl group.).

Among the above-mentioned, X^{e'} is preferably
-X^{f}-,
an alkylene group having 1 to 6 carbon atoms, and preferably having 1 to 3 carbon atoms,
-X^{f}-C₁₋₆ alkylene group, preferably -X^{f}-C₁₋₃ alkylene group, and more preferably
-X^{f}-C₁₋₂ alkylene group,
-CONR^{4'}-R^{52'}-,
-CONR^{4'}-C₆H₄-R^{52'}-,
-X^{f}-CONR^{4'}-R^{52'}-,
-X^{f}-CONR^{4'}-C₆H₄-R^{52'}-,
-R^{51'}-CONR^{4'}-,
-R^{51'}-CONR^{4'}-C₆H₄-,
-CONR^{4'}-,
-CONR^{4'}-C₆H₄-,
-X^{f}-CONR^{4'}-,
-X^{f}-CONR^{4'}-C₆H₄-,
-R^{51'}-CONR^{4'}-, or
-R^{51'}-CONR^{4'}-C₆H₄-.
In the formula, X^{f}, R^{4'}, R^{51'} and R^{52'} each have the same meanings as defined above.

Among the above-mentioned, X^{e'} can be more preferably
-CONR^{4'}-R^{52'}-,
-CONR^{4'}-C₆H₄-R^{52'}-,
-X^{f}-CONR^{4'}-R^{52'}-,
-X^{f}-CONR^{4'}-C₆H₄-R^{52'}-,
-R^{51'}-CONR^{4'}-,
-R^{51'}-CONR^{4'}-C₆H₄-,
-CONR^{4'}-,
-CONR^{4'}-C₆H₄-,
-X^{f}-CONR^{4'}-, or
-X^{f}-CONR^{4'}-C₆H₄-.

In this embodiment, specific examples of X^{e'} may be mentioned, for example, a single bond,
an alkylene group having 1 to 6 carbon atoms,
a perfluoroalkylene group having 1 to 6 carbon atoms (for example, -CF₂-, -(CF₂)₂-, etc.),
-CF₂-C₁₋₆ alkylene group,
-CONH-,
-CONH-CH₂-,
-CONH-(CH₂)₂-,
-CONH-(CH₂)₃-,
-CF₂-CONH-,
-CF₂CONHCH₂-,
-CF₂CONH(CH₂)₂-,
-CF₂CONH(CH₂)₃-,
-CON(CH₃)-,
-CON(CH₃)-CH₂-,
-CON(CH₃)-(CH₂)₂-,
-CON(CH₃)-(CH₂)₃-,
-CF₂-CON(CH₃)-,
-CF₂-CON(CH₃)CH₂-,
-CF₂-CON(CH₃)-(CH₂)₂-,
-CF₂-CON(CH₃)-(CH₂)₃-,
-CH₂-CONH-,
-CH₂-CONH-CH₂-,
-CH₂-CONH-(CH₂)₂-,
-CH₂-CONH-(CH₂)₃-,
-CF₂-CH₂-CONH-,
-CF₂-CH₂-CONH-CH₂-,
-CF₂-CH₂-CONH-(CH₂)₂-,
-CF₂-CH₂-CONH-(CH₂)₃-,
-CONH-C₆H₄-,
-CON(CH₃)-C₆H₄-,
-CH₂-CON(CH₃)-CH₂-,
-CH₂-CON(CH₃)-(CH₂)₂-,
-CH₂-CON(CH₃)-(CH₂)₃-,
-CON(CH₃)-C₆H₄-,
-CF₂-CONH-C₆H₄-,
-CF₂-CON(CH₃)-C₆H₄-,
-CF₂-CH₂-CON(CH₃)-CH₂-,
-CF₂-CH₂-CON(CH₃)-(CH₂)₂-,
-CF₂-CH₂-CON(CH₃)-(CH₂)₃-,
-CF₂-CON(CH₃)-C₆H₄-,
-CO-,
-CO-C₆H₄-,
-C₆H₄-,
-SO₂NH-,
-SO₂NH-CH₂-,
-SO₂NH-(CH₂)₂-,
-SO₂NH-(CH₂)₃-,
-SO₂NH-C₆H₄-,
-SO₂N(CH₃)-,
-SO₂N(CH₃)-CH₂-,
-SO₂N(CH₃)-(CH₂)₂-,
-SO₂N(CH₃)-(CH₂)₃-,
-SO₂N(CH₃)-C₆H₄-,
-SO₂-,
-SO₂-CH₂-,
-SO₂-(CH₂)₂-,
-SO₂-(CH₂)₃-, or
-SO₂-C₆H₄-,
etc.

Among the above-mentioned exemplification, preferred X^{e'} may be mentioned an alkylene group having 1 to 6 carbon atoms,
a perfluoroalkylene group having 1 to 6 carbon atoms (for example, -CF₂-, -(CF₂)₂-, etc.),
-CF₂-C₁₋₆ alkylene group,
-CONH-,
-CONH-CH₂-,
-CONH-(CH₂)₂-,
-CONH-(CH₂)₃-,
-CF₂CONH-,
-CF₂CONHCH₂-,
-CF₂CONH(CH₂)₂-,
-CF₂CONH(CH₂)₃-,
-CON(CH₃)-,
-CON(CH₃)-CH₂-,
-CON(CH₃)-(CH₂)₂-,
-CON(CH₃)-(CH₂)₃-,
-CF₂-CON(CH₃)-,
-CF₂-CON(CH₃)CH₂-,
-CF₂-CON(CH₃)-(CH₂)₂-,
-CF₂-CON(CH₃)-(CH₂)₃-,
-CH₂-CONH-,
-CH₂-CONH-CH₂-,
-CH₂-CONH-(CH₂)₂-,
-CH₂-CONH-(CH₂)₃-,
-CF₂-CH₂-CONH-,
-CF₂-CH₂-CONH-CH₂-,
-CF₂-CH₂-CONH-(CH₂)₂-,
-CF₂-CH₂-CONH-(CH₂)₃-,
-CONH-C₆H₄-,
-CON(CH₃)-C₆H₄-,
-CH₂-CON(CH₃)-CH₂-,
-CH₂-CON(CH₃)-(CH₂)₂-,
-CH₂-CON(CH₃)-(CH₂)₃-,
-CON(CH₃)-C₆H₄-
-CF₂-CONH-C₆H₄-,
-CF₂-CON(CH₃)-C₆H₄-,
-CF₂-CH₂-CON(CH₃)-CH₂-,
-CF₂-CH₂-CON(CH₃)-(CH₂)₂-,
-CF₂-CH₂-CON(CH₃)-(CH₂)₃-,
-CF₂-CON(CH₃)-C₆H₄-,
etc.

Among the above-mentioned exemplification, more preferred X^{e'} may be mentioned
-CONH-,
-CONH-CH₂-,
-CONH-(CH₂)₂-,
-CONH-(CH₂)₃-,
-CF₂CONH-,
-CF₂CONHCH₂-,
-CF₂CONH(CH₂)₂-,
-CF₂CONH(CH₂)₃-,
-CON(CH₃)-,
-CON(CH₃)-CH₂-,
-CON(CH₃)-(CH₂)₂-,
-CON(CH₃)-(CH₂)₃-,
-CF₂-CON(CH₃)-,
-CF₂-CON(CH₃)CH₂-,
-CF₂-CON(CH₃)-(CH₂)₂-,
-CF₂-CON(CH₃)-(CH₂)₃-,
-CH₂-CONH-,
-CH₂-CONH-CH₂-,
-CH₂-CONH-(CH₂)₂-,
-CH₂-CONH-(CH₂)₃-,
-CF₂-CH₂-CONH-,
-CF₂-CH₂-CONH-CH₂-,
-CF₂-CH₂-CONH-(CH₂)₂-,
-CF₂-CH₂-CONH-(CH₂)₃-,
-CONH-C₆H₄-,
-CON(CH₃)-C₆H₄-,
-CH₂-CON(CH₃)-CH₂-,
-CH₂-CON(CH₃)-(CH₂)₂-,
-CH₂-CON(CH₃)-(CH₂)₃-,
-CON(CH₃)-C₆H₄-
-CF₂-CONH-C₆H₄-,
-CF₂-CON(CH₃)-C₆H₄-,
-CF₂-CH₂-CON(CH₃)-CH₂-,
-CF₂-CH₂-CON(CH₃)-(CH₂)₂-,
-CF₂-CH₂-CON(CH₃)-(CH₂)₃-, or
-CF₂-CON(CH₃)-C₆H₄-,
etc.

In one embodiment, X^{e'} is a single bond. In this embodiment, PFPE¹ and a group (that is, in (A-1), a group enclosed with parentheses to which j and k are applied) having a bonding ability to a substrate is directly bonded.

In yet another embodiment, X¹ is a group represented by the formula: -(R¹⁶)ₓ-(CFR¹⁷)_{y}-(CH₂)_{z}-. In the formula, x, y and z are each independently an integer of 0 to 10, a sum of x, y and z is 1 or more, and the order of existence of each recurring units enclosed with parentheses is arbitrary in the formula.

In the above-mentioned formula, R¹⁶s each independently represent an oxygen atom, phenylene, carbazolylene, -NR¹⁸- (wherein, R¹⁸ represents a hydrogen atom or an organic group at each appearance) or a divalent organic group. R¹⁶ is preferably an oxygen atom or a divalent polar group.

The above-mentioned "divalent polar group" is not particularly limited, and may be mentioned -C(O)-, -C(=NR¹⁹)- and -C(O)NR¹⁹- (wherein R¹⁹ represents a hydrogen atom or a lower alkyl group). The "lower alkyl group" is, for example, an alkyl group having 1 to 6 carbon atoms, for example, a methyl group, an ethyl group and an n-propyl group, and these may be substituted by one or more fluorine atoms.

In the above-mentioned formula, R¹⁷s are each independently a hydrogen atom, a fluorine atom or a lower fluoroalkyl group, and preferably a fluorine atom at each appearance. The "lower fluoroalkyl group" is, for example, a fluoroalkyl group having 1 to 6 carbon atoms, preferably 1 to 3 carbon atoms, preferably a perfluoroalkyl group having 1 to 3 carbon atoms, more preferably a trifluoromethyl group or a pentafluoroethyl group, and further preferably a trifluoromethyl group.

In this embodiment, X¹ is preferably a group represented by the formula: -(O)ₓ-(CF₂)_{y}-(CH₂)_{z}- (wherein, x, y and z have the same meanings as defined above, and the order of existence of each recurring units enclosed with parentheses is arbitrary in the formula).

As the group represented by the above-mentioned formula: -(O)ₓ-(CF₂)_{y}-(CH₂)_{z}-, there may be mentioned, for example, a group represented by -(O)_{x'}-(CH₂)_{z"}-O-[(CH₂)_{z‴}-O-]_{zʺʺ}, and -(O)_{x'-}(CF₂)_{y"-}(CH₂)_{z"}-O-[(CH₂)_{z‴}-O-]_{zʺʺ} (wherein, x' is 0 or 1, y", z" and z‴ are each independently an integer of 1 to 10, and z"" is 0 or 1).
Incidentally, the left end of these groups is bonded to the PFPE¹ side.

In another preferred embodiment, X¹ is -O-CFR²⁰-(CF₂)_{e'}-.

The above-mentioned R²⁰s each independently represent a fluorine atom or a lower fluoroalkyl group. Here, the lower fluoroalkyl group is, for example, a fluoroalkyl group having 1 to 3 carbon atoms, preferably a perfluoroalkyl group having 1 to 3 carbon atoms, more preferably a trifluoromethyl group and a pentafluoroethyl group, and further preferably a trifluoromethyl group.

The above-mentioned e's are each independently 0 or 1.

In one specific example, R²⁰ is a fluorine atom, and e' is 1.

In yet another embodiment, examples of X¹ group may be mentioned the following groups: 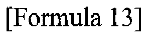 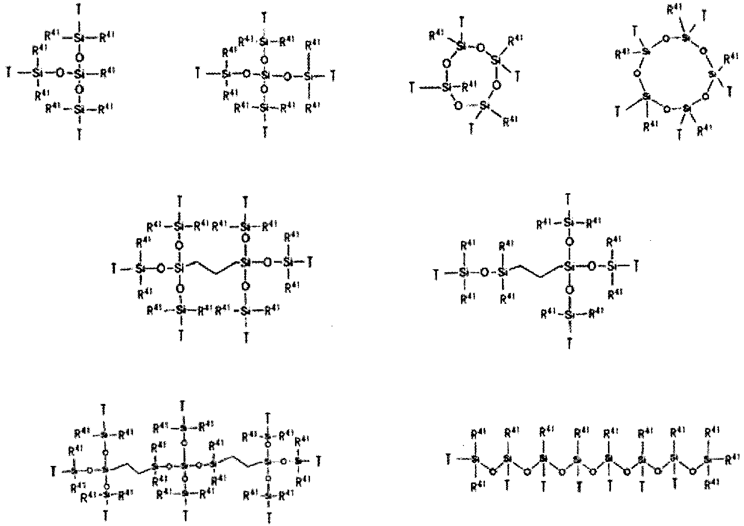 [wherein,
R⁴¹s are each independently a hydrogen atom, a phenyl group, an alkyl group having 1 to 6 carbon atoms or a C_{1 to 6} alkoxy group, and preferably a methyl group;
in each X¹ group, some of optional Ts is/are the following group bonded to PFPE of the main chain of the molecule:

   -CH₂O(CH₂)₂-,

   -CH₂O(CH₂)₃-,

   -CF₂O(CH₂)₃-,

   -CH₂-,

   -(CH₂)₂-,

   -(CH₂)₃-,

   -(CH₂)₄-,

   -CONH-(CH₂)₃-,

   -CON(CH₃)-(CH₂)₃-,

   -CON(Ph)-(CH₂)₃- (wherein, Ph means phenyl), or 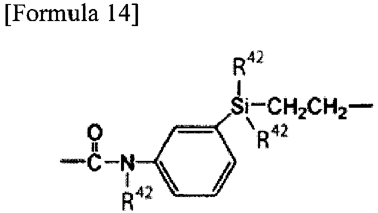
[wherein, R⁴²s each independently represent a hydrogen atom, a C₁₋₆ alkyl group or a C₁₋₆ alkoxy group, preferably a methyl group or a methoxy group, and more preferably a methyl group.],
some of the other Ts is/are -(CH₂)_{n"}-(n" is an integer of 2 to 6) bonded to the group opposite to PFPE¹ of the main chain of the molecule, and the remaining Ts, when it is present, can be each independently a methyl group, a phenyl group, a C₁₋₆ alkoxy group or a radical capturing group or an ultraviolet absorbing group.]. Incidentally, also in the above-mentioned embodiment, in the groups described as X¹, left side is bonded to the group represented by PFPE¹ and the right side is bonded to the group enclosed with parentheses by applying α, respectively.

The radical capturing group is not particularly limited as long as it can capture radicals generated by photoirradiation, and there may be mentioned, for example, residues of benzophenones, benzotriazoles, benzoic acid esters, phenyl salicylate, crotonic acids, malonic acid esters, organoacrylates, hindered amines, hindered phenols or triazines.

The ultraviolet absorbing group is not particularly limited as long as it can absorb ultraviolet rays, and there may be mentioned, for example, residues of benzotriazoles, hydroxybenzophenones, esters of substituted and unsubstituted benzoic acid or salicylic acid compounds, acrylates or alkoxy cinnamates, oxamides, oxanilides, benzoxazinones or benzoxazoles.

In a preferred embodiment, as the preferred radical capturing group or ultraviolet absorbing group, there may be mentioned

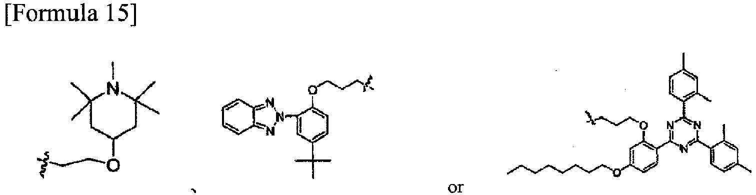

In this embodiment, X¹ (and X³, X⁵ and X⁷ mentioned below) can be a 3 to 10 valent organic group.

In the formula, X² each represent a single bond or a divalent organic group. X² is preferably alkylene groups having 1 to 20 carbon atoms, more preferably -(CH₂)ᵤ-(wherein, u is an integer of 0 to 2).

In the above formula, "t"s are each independently an integer of 1 to 10. In a preferred embodiment, t is an integer of 1 to 6. In another preferred embodiment, t is an integer of 2 to 10, and is preferably an integer of 2 to 6.

The compound represented by the formula (A) is preferably a compound represented by the following formula (A'): 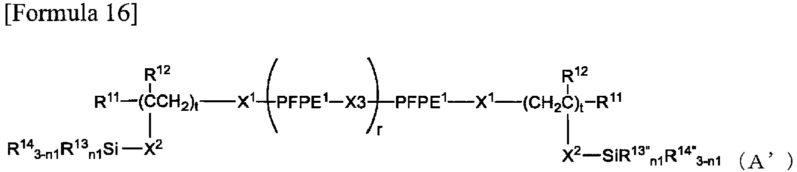 [wherein:
PFPE¹, X3 independently are as defined above;
R¹³s each independently represent a hydroxyl group or a hydrolyzable group at each appearance,
R¹⁴s each independently represent a hydrogen atom or an alkyl group having 1 to 22 carbon atoms at each appearance;
R¹¹s each independently represent a hydrogen atom or a halogen atom at each appearance;
R¹²s each independently represent a hydrogen atom or a lower alkyl group at each appearance;
R^{11"}, R^{12"}, R^{13"}, and R^{14"} are same as R¹¹, R¹², R¹³, and R¹⁴, respectively;
n1 is an integer of 1 to 3, and preferably 3,
X¹ is each independently -O-CFR¹⁰-(CF₂)_{e'}-;
R²⁰s each independently represent a fluorine atom or a lower fluoroalkyl group at each appearance;
e's are each independently 0 or 1 at each appearance;
X² is each independently -(CH₂)ᵤ-;
"u"s are each independently an integer of 0 to 2; and
"t"s are each independently an integer of 2 to 10.].

The compound represented by the above-mentioned formula (A) can be obtained by, for example, using a perfluoro(poly)ether derivative corresponding to the -PFPE¹- portion as a raw material, and after introducing iodine into the terminal, reacting a vinyl monomer corresponding to -CH₂CR¹²(X²-SiR¹³ₙ₁R¹⁴₃₋ₙ₁)-.

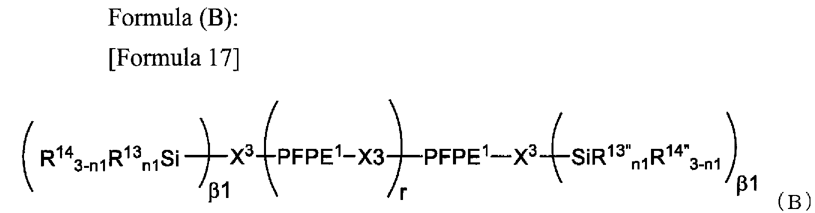

In the above-mentioned formula (B), PFPE¹, X3, R¹³, R^{13"}, R¹⁴, R^{14"} and n1 have the same meanings as the description regarding the above-mentioned formula (A).

In the above-mentioned formula (B), the Si atom bonded to at least one group selected from the group consisting of a hydroxyl group and a hydrolyzable group(s) refers to an Si atom wherein n1 is an integer of 1 to 3 and contained in (SiR¹³ₙ₁R¹⁴₃₋ₙ₁) or (-SiR^{13"}ₙ₁R^{14"}₃₋ₙ₁).

In the above-mentioned formula, n1 is an integer of 0 to 3, preferably 1 to 3, and more preferably 3 independently per each (-S₁R¹³ₙ₁R¹⁴₃₋ₙ₁) unit or per each (-SiR^{13"}ₙ₁R^{14"}₃₋ₙ₁) unit. In the formula, at least two n1s are integers of 1 to 3, that is, all n1s do not become 0 simultaneously. That is, in the formula, at least two of R¹³s or R^{13"}s exist. That is, in the formula (B), there exist at least two structures selected from the -SiR¹³ₙ₁R¹⁴₃₋ₙ₁ structure (that is, -SiR¹³ portion) where n1 is 1 or more and the -SiR^{13"}ₙ₁R^{14"}₃₋ₙ₁ structure (that is, -SiR^{13"} portion) where n1 is 1 or more.

In the formula (B), it is more preferable that at least one Si bonded to a hydroxyl group or a hydrolyzable group(s) is present at the both terminals of the molecular main chain of the PFPE-containing silane compound (a1) or (a2). That is, at least one -SiR¹³ portion is present and at least one -SiR^{13"} portion is present.

In the above-mentioned formula, X³s each independently represent a single bond or a 2 to 10 valent organic group. That is, X³ corresponds to R⁵ of the above-mentioned general formula. The said X³ is considered to be a linker which links, in the compound represented by the formula (B), the perfluoro(poly)ether part (that is, - PFPE¹- part) which mainly provides water repellent property and surface slipperiness, etc., and the silane part (specifically, -SiR¹³ₙ₁R¹⁴₃₋ₙ₁ or -SiR^{13"}ₙ₁R^{14"}₃₋ₙ₁) which provides a bonding ability to a substrate. Accordingly, the said X³ may be single bond or any organic group as long as the compound represented by the formula (B) can exist stably. Incidentally, in the present specification, the structure described as X³ is bonded to an amide bond that links to a group represented by PFPE¹ on the left side and to a group enclosed in parentheses attaching with β1 on the right side, respectively.

In another embodiment, X³ represents X^{e}. X^{e} has the same meaning as defined above.

β1 in the above-mentioned formula is an integer of 1 to 9, and can be changed depending on the number of the valence of X³. In the formula (B), β1 is a value subtracting 1 from the value of the number of the valence of X³. When X³ is a single bond, then β1 is 1.

The above-mentioned X³ is preferably a 2 to 7 valent, more preferably a 2 to 4 valent, and further preferably a divalent organic group.

In one embodiment, X³ is a 2 to 4 valent organic group, and β1 is 1 to 3.

In another embodiment, X³ is a divalent organic group, and β1 is 1. In this case, the formula (B) is represented by the following formula (B').

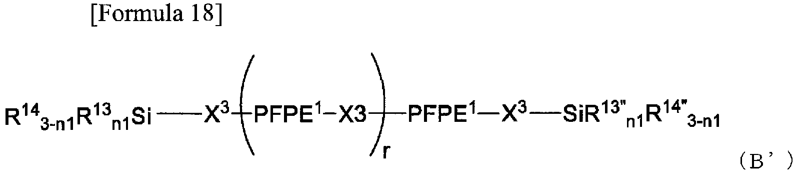

Examples of the above-mentioned X³ are not particularly limited, and there may be mentioned, for example, those which are the same as described regarding X¹ and except for a single bond.

Among these, as preferable specific X³, there may be mentioned a single bond,

-CH₂OCH₂-,

-CH₂O(CH₂)₂-,

-CH₂O(CH₂)₃-,

-CH₂O(CH₂)₆-,

-CF₂-CH₂-O-CH₂-,

-CF₂-CH₂-O-(CH₂)₂-,

-CF₂-CH₂-O-(CH₂)₃-,

-CF₂-CH₂-O-(CH₂)₆-,

-CH₂O(CH₂)₃Si(CH₃)₂OSi(CH₃)₂(CH₂)₂-,

-CH₂O(CH₂)₃Si(CH₃)₂OSi(CH₃)₂OSi(CH₃)₂(CH₂)₂-,

-CH₂O(CH₂)₃Si(CH₃)₂O(Si(CH₃)₂O)₂Si(CH₃)₂(CH₂)₂-,

-CH₂O(CH₂)₃Si(CH₃)₂O(Si(CH₃)₂O)₃Si(CH₃)₂(CH₂)₂-,

-CH₂O(CH₂)₃Si(CH₃)₂O(Si(CH₃)₂O)₁₀Si(CH₃)₂(CH₂)₂-,

-CH₂O(CH₂)₃Si(CH₃)₂O(Si(CH₃)₂O)₂₀Si(CH₃)₂(CH₂)₂-,

-CH₂OCF₂CHFOCF₂-,

-CH₂OCF₂CHFOCF₂CF₂-,

-CH₂OCF₂CHFOCF₂CF₂CF₂-,

-CH₂OCH₂CF₂CF₂OCF₂-,

-CH₂OCH₂CF₂CF₂OCF₂CF₂-,

-CH₂OCH₂CF₂CF₂OCF₂CF₂CF₂-,

-CH₂OCH₂CF₂CF₂OCF(CF₃)CF₂OCF₂-,

-CH₂OCH₂CF₂CF₂OCF(CF₃)CF₂OCF₂CF₂-,

-CH₂OCH₂CF₂CF₂OCF(CF₃)CF₂OCF₂CF₂CF₂-,

-CH₂OCH₂CHFCF₂OCF₂-,

-CH₂OCH₂CHFCF₂OCF₂CF₂-,

-CH₂OCH₂CHFCF₂OCF₂CF₂CF₂-,

-CH₂OCH₂CHFCF₂OCF(CF₃)CF₂OCF₂-,

-CH₂OCH₂CHFCF₂OCF(CF₃)CF₂OCF₂CF₂-,

-CH₂OCH₂CHFCF₂OCF(CF₃)CF₂OCF₂CF₂CF₂-,

-CH₂OCF₂CHFOCF₂CF₂CF₂-C(O)NH-CH₂-,

-CH₂OCH₂(CH₂)₇CH₂Si(OCH₃)₂OSi(OCH₃)₂(CH₂)₂Si(OCH₃)₂OSi(OCH₃)₂(CH₂)₂-,

-CH₂OCH₂CH₂CH₂Si(OCH₃)₂OSi(OCH₃)₂(CH₂)₃-,

-CH₂OCH₂CH₂CH₂Si(OCH₂CH₃)₂OSi(OCH₂CH₃)₂(CH₂)₃-,

-CH₂OCH₂CH₂CH₂Si(OCH₃)₂OSi(OCH₃)₂(CH₂)₂-,

-CH₂OCH₂CH₂CH₂Si(OCH₂CH₃)₂OSi(OCH₂CH₃)₂(CH₂)₂-,

-(CH₂)₂-Si(CH₃)₂-(CH₂)₂-,

-CH₂-,

-(CH₂)₂-,

-(CH₂)₃-,

-(CH₂)₄-,

-(CH₂)₅-,

-(CH₂)₆-,

-CF₂-,

-(CF₂)₂-,

-CF₂-CH₂-,

-CF₂-(CH₂)₂-,

-CF₂-(CH₂)₃-,

-CF₂-(CH₂)₄-,

-CF₂-(CH₂)₅-,

-CF₂-(CH₂)₆-,

-CO-,

-CONH-,

-CONH-CH₂-,

-CONH-(CH₂)₂-,

-CONH-(CH₂)₃-,

-CONH-(CH₂)₆-,

-CF₂CONH-,

-CF₂CONHCH₂-,

-CF₂CONH(CH₂)₂-,

-CF₂CONH(CH₂)₃-,

-CF₂CONH(CH₂)₆-,

-CON(CH₃)-(CH₂)₃-,

-CON(Ph)-(CH₂)₃-

(wherein, Ph means phenyl),

-CON(CH₃)-(CH₂)₆-,

-CON(Ph)-(CH₂)₆-

(wherein, Ph means phenyl),

-CF₂-CON(CH₃)-(CH₂)₃-,

-CF₂-CON(Ph)-(CH₂)₃-

(wherein, Ph means phenyl),

-CF₂-CON(CH₃)-(CH₂)₆-,

-CF₂-CON(Ph)-(CH₂)₆-

(wherein, Ph means phenyl),

-CONH-(CH₂)₂NH(CH₂)₃-,

-CONH-(CH₂)₆NH(CH₂)₃-,

-CH₂O-CONH-(CH₂)₃-,

-CH₂O-CONH-(CH₂)₆-,

-S-(CH₂)₃-,

-(CH₂)₂S(CH₂)₃-,

-CONH-(CH₂)₃Si(CH₃)₂OSi(CH₃)₂(CH₂)₂-,

-CONH-(CH₂)₃Si(CH₃)₂OSi(CH₃)₂OSi(CH₃)₂(CH₂)₂-,

-CONH-(CH₂)₃Si(CH₃)₂O(Si(CH₃)₂O)₂Si(CH₃)₂(CH₂)₂-,

-CONH-(CH₂)₃Si(CH₃)₂O(Si(CH₃)₂O)₃Si(CH₃)₂(CH₂)₂-,

-CONH-(CH₂)₃Si(CH₃)₂O(Si(CH₃)₂O)ᵢ₀Si(CH₃)₂(CH₂)₂-,

-CONH-(CH₂)₃Si(CH₃)₂O(Si(CH₃)₂O)₂₀Si(CH₃)₂(CH₂)₂-,

-C(O)O-(CH₂)₃-,

-C(O)O-(CH₂)₆-,

-CH₂-O-(CH₂)₃-Si(CH₃)₂-(CH₂)₂-Si(CH₃)₂-(CH₂)₂-,

-CH₂-O-(CH₂)₃-Si(CH₃)₂-(CH₂)₂-Si(CH₃)₂-CH(CH₃)-,

-CH₂-O-(CH₂)₃-Si(CH₃)₂-(CH₂)₂-Si(CH₃)₂-(CH₂)₃-,

-CH₂-O-(CH₂)₃-Si(CH₃)₂-(CH₂)₂-Si(CH₃)₂-CH(CH₃)-CH₂-,

-OCH₂-,

-O(CH₂)₃-,

-OCFHCF₂-,

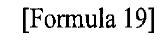

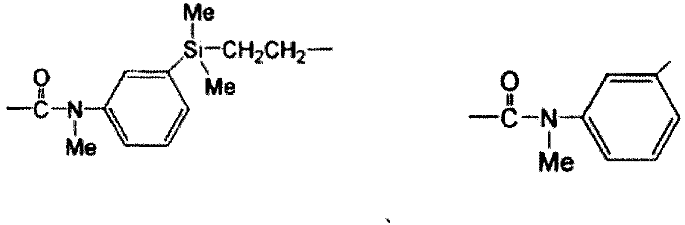

etc.

Among the above, X³ is preferably to be

-CH₂OCH₂-,

-CH₂O(CH₂)₂-,

-CH₂O(CH₂)₃-,

-CH₂O(CH₂)₆-,

-CF₂-CH₂-O-CH₂-,

-CF₂-CH₂-O-(CH₂)₂-,

-CF₂-CH₂-O-(CH₂)₃-,

-CF₂-CH₂-O-(CH₂)₆-,

-CH₂OCF₂CHFOCF₂-,

-CH₂OCF₂CHFOCF₂CF₂-,

-CH₂OCF₂CHFOCF₂CF₂CF₂-,

-CH₂OCH₂CF₂CF₂OCF₂-,

-CH₂OCH₂CF₂CF₂OCF₂CF₂-,

-CH₂OCH₂CF₂CF₂OCF₂CF₂CF₂-,

-CH₂OCH₂CF₂CF₂OCF(CF₃)CF₂OCF₂-,

-CH₂OCH₂CF₂CF₂OCF(CF₃)CF₂OCF₂CF₂-,

-CH₂OCH₂CF₂CF₂OCF(CF₃)CF₂OCF₂CF₂CF₂-,

-CH₂OCH₂CHFCF₂OCF₂-,

-CH₂OCH₂CHFCF₂OCF₂CF₂-,

-CH₂OCH₂CHFCF₂OCF₂CF₂CF₂-,

-CH₂OCH₂CHFCF₂OCF(CF₃)CF₂OCF₂-,

-CH₂OCH₂CHFCF₂OCF(CF₃)CF₂OCF₂CF₂-,

-CH₂OCH₂CHFCF₂OCF(CF₃)CF₂OCF₂CF₂CF₂-,

-CH₂OCF₂CHFOCF₂CF₂CF₂-C(O)NH-CH₂-,

-CF₂-CH₂OCF₂CHFOCF₂CF₂CF₂-C(O)NH-CH₂-,

-CH₂-,

-(CH₂)₂-,

-(CH₂)₃-,

-(CH₂)₄-,

-(CH₂)₅-,

-(CH₂)₆-,

-CF₂-,

-(CF₂)₂-,

-CF₂-CH₂-,

-CF₂-(CH₂)₂-,

-CF₂-(CH₂)₃-,

-CF₂-(CH₂)₄-,

-CF₂-(CH₂)₅-,

-CF₂-(CH₂)₆-,

-CONH-,

-CONH-CH₂-,

-CONH-(CH₂)₂-,

-CONH-(CH₂)₃-,

-CONH-(CH₂)₆-,

-CF₂CONH-,

-CF₂CONHCH₂-,

-CF₂CONH(CH₂)₂-,

-CF₂CONH(CH₂)₃-,

-CF₂CONH(CH₂)₆-,

-CON(CH₃)-(CH₂)₃-,

-CON(Ph)-(CH₂)₃-

(wherein, Ph means phenyl),

-CON(CH₃)-(CH₂)₆-,

-CON(Ph)-(CH₂)₆-

(wherein, Ph means phenyl),

-CF₂-CON(CH₃)-(CH₂)₃-,

-CF₂-CON(Ph)-(CH₂)₃-

(wherein, Ph means phenyl),

-CF₂-CON(CH₃)-(CH₂)₆-,

-CF₂-CON(Ph)-(CH₂)₆-

(wherein, Ph means phenyl),

-CONH-(CH₂)₂NH(CH₂)₃-,

-CONH-(CH₂)₆NH(CH₂)₃-,

-CH₂O-CONH-(CH₂)₃-,

-CH₂O-CONH-(CH₂)₆-,

-OCH₂-,

-O(CH₂)₃-,

or

-OCFHCF₂-.

Among the above, X³ is more preferably

-CH₂OCF₂CHFOCF₂CF₂CF₂-C(O)NH-CH₂-,

-CF₂-CH₂OCF₂CHFOCF₂CF₂CF₂-C(O)NH-CH₂-,

-CONH-,

-CONH-CH₂-,

-CONH-(CH₂)₂-,

-CONH-(CH₂)₃-,

-CONH-(CH₂)₆-,

-CF₂CONH-,

-CF₂CONHCH₂-,

-CF₂CONH(CH₂)₂-,

-CF₂CONH(CH₂)₃-,

-CF₂CONH(CH₂)₆-,

-CON(CH₃)-(CH₂)₃-,

-CON(Ph)-(CH₂)₃-

(wherein, Ph means phenyl),

-CON(CH₃)-(CH₂)₆-,

-CON(Ph)-(CH₂)₆-

(wherein, Ph means phenyl),

-CF₂-CON(CH₃)-(CH₂)₃-,

-CF₂-CON(Ph)-(CH₂)₃-

(wherein, Ph means phenyl),

-CF₂-CON(CH₃)-(CH₂)₆-,

-CF₂-CON(Ph)-(CH₂)₆-

(wherein, Ph means phenyl),

-CONH-(CH₂)₂NH(CH₂)₃-,

or

-CONH-(CH₂)₆NH(CH₂)₃-.

In another preferred embodiment, X³ represents X^{e'}. X^{e'} has the same meaning as defined above except for removing a single bond.

In one embodiment, X^{e'} is a single bond. In the present embodiment, the PFPE¹ and the group (that is, in (B), the group enclosed in parentheses by applying β1) having a binding ability with a substrate are directly bonded.

In one embodiment, in the formula (B), Si bonded to a hydroxyl group or a hydrolyzable group(s) exists at least two. That is, in the formula (B), -SiR¹³ portion exists at least two.

A preferable compound represented by the formula (B) is a compound represented by the following formula (B'): 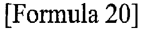 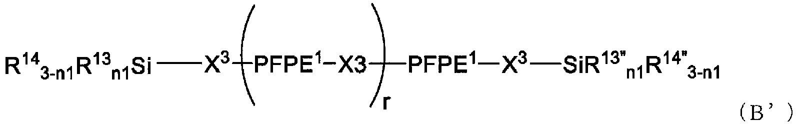 [wherein:
PFPE¹, X3 are as defined above;
R¹³s each independently represent a hydroxyl group or a hydrolyzable group(s) at each appearance;
R¹⁴s each independently represent a hydrogen atom or an alkyl group having 1 to 22 carbon atoms at each appearance;
R^{13"} and R^{14"} are the same meanings as those of R¹³ and R¹⁴, respectively;
n1 is an integer of 1 to 3, and is preferably 3;
X³ is an alkylene group having 1 to 20 carbon atoms, -CH₂O(CH₂)₂-, -CH₂O(CH₂)₃- or -CH₂O(CH₂)₆-.].

The compound represented by the above-mentioned formula (B) can be produced by the conventionally known method, for example, the method described in JP 2013-117012A or an improved method thereof.

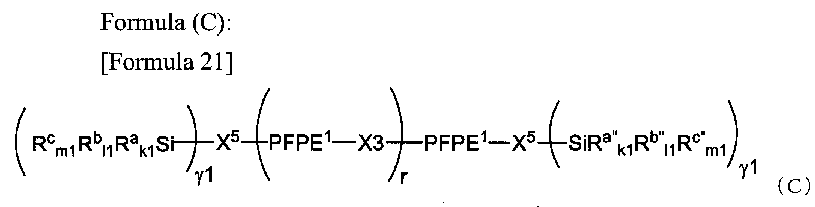

In the above-mentioned formula (C), PFPE¹, X3 have the same meanings as the description regarding the above-mentioned formula (A).

In the above formula, X⁵s each independently represent a single bond or a 2 to 10 valent organic group. That is, X⁵ corresponds to R⁵ of the above general formula. X⁵ is understood to be a linker, in the compound represented by the formula (C), which links a perfluoro(poly)ether portion (that is, -PFPE¹- portion) which mainly provides water repellent property and surface slipperiness, etc., and a silane portion (that is, the group represented by -SiR^{a}ₖ₁R^{b}₁₁R^{c}ₘ₁ or -SiR^{a"}ₖ₁R^{b"}ₗ₁R^{c"}ₘ₁) which provides a bonding ability to a substrate. Accordingly, X⁵ may be a single bond or any organic group, as long as the compound represented by the formula (C) can be stably present. Incidentally, in the present specification, in the structure described as X⁵, the left side is bonded to the group represented by PFPE¹ and the right side is bonded to the group enclosed with parentheses to which γ1 is applied, respectively.

In another embodiment, X⁵ represents X^{e}. X^{e} have the same meanings as defined above.

"γ1" in the above-mentioned formula is an integer of 1 to 9, and γ1 can be changed depending on the number of the valence of X⁵. In the formula (C), γ1 is a value subtracting 1 from the value of the number of the valence of X⁵. When X⁵ is a single bond, then γ1 is 1.

The above-mentioned X⁵ is preferably a 2 to 7 valent, more preferably a 2 to 4 valent, further preferably a divalent organic group.

In one embodiment, X⁵ is a 2 to 4 valent organic group, and γ1 is 1 to 3.

In another embodiment, X⁵ is a divalent organic group, and γ1 is 1. In this case, the formula (C) is represented by the following formula (C').

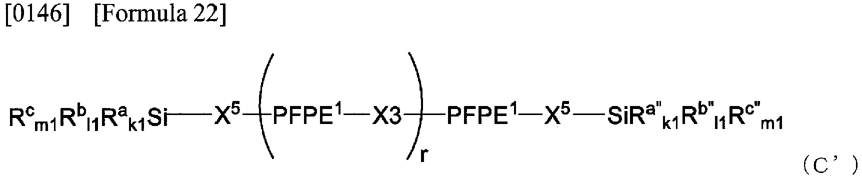

Examples of the above-mentioned X⁵ are not particularly limited, and there may be mentioned, for example, those which are the same as described regarding X¹ and except for a single bond.

Among these, as preferable specific X⁵, there may be mentioned a single bond,

-CH₂OCH₂-,

-CH₂O(CH₂)₂-,

-CH₂O(CH₂)₃-,

-CH₂O(CH₂)₆-,

-CF₂-CH₂-O-CH₂-,

-CF₂-CH₂-O-(CH₂)₂-,

-CF₂-CH₂-O-(CH₂)₃-,

-CF₂-CH₂-O-(CH₂)₆-,

-CH₂O(CH₂)₃Si(CH₃)₂OSi(CH₃)₂(CH₂)₂-,

-CH₂O(CH₂)₃Si(CH₃)₂OSi(CH₃)₂OSi(CH₃)₂(CH₂)₂-,

-CH₂O(CH₂)₃Si(CH₃)₂O(Si(CH₃)₂O)₂Si(CH₃)₂(CH₂)₂-,

-CH₂O(CH₂)₃Si(CH₃)₂O(Si(CH₃)₂O)₃Si(CH₃)₂(CH₂)₂-,

-CH₂O(CH₂)₃Si(CH₃)₂O(Si(CH₃)₂O)₁₀Si(CH₃)₂(CH₂)₂-,

-CH₂O(CH₂)₃Si(CH₃)₂O(Si(CH₃)₂O)₂₀Si(CH₃)₂(CH₂)₂-,

-CH₂OCF₂CHFOCF₂-,

-CH₂OCF₂CHFOCF₂CF₂-,

-CH₂OCF₂CHFOCF₂CF₂CF₂-,

-CH₂OCH₂CF₂CF₂OCF₂-,

-CH₂OCH₂CF₂CF₂OCF₂CF₂-,

-CH₂OCH₂CF₂CF₂OCF₂CF₂CF₂-,

-CH₂OCH₂CF₂CF₂OCF(CF₃)CF₂OCF₂-,

-CH₂OCH₂CF₂CF₂OCF(CF₃)CF₂OCF₂CF₂-,

-CH₂OCH₂CF₂CF₂OCF(CF₃)CF₂OCF₂CF₂CF₂-,

-CH₂OCH₂CHFCF₂OCF₂-,

-CH₂OCH₂CHFCF₂OCF₂CF₂-,

-CH₂OCH₂CHFCF₂OCF₂CF₂CF₂-,

-CH₂OCH₂CHFCF₂OCF(CF₃)CF₂OCF₂-,

-CH₂OCH₂CHFCF₂OCF(CF₃)CF₂OCF₂CF₂-,

-CH₂OCH₂CHFCF₂OCF(CF₃)CF₂OCF₂CF₂CF₂-,

-CH₂OCF₂CHFOCF₂CF₂CF₂-C(O)NH-CH₂-,

-CH₂OCH₂(CH₂)₇CH₂Si(OCH₃)₂OSi(OCH₃)₂(CH₂)₂Si(OCH₃)₂OSi(OCH₃)₂(CH₂)₂-,

-CH₂OCH₂CH₂CH₂Si(OCH₃)₂OSi(OCH₃)₂(CH₂)₃-,

-CH₂OCH₂CH₂CH₂Si(OCH₂CH₃)₂OSi(OCH₂CH₃)₂(CH₂)₃-,

-CH₂OCH₂CH₂CH₂Si(OCH₃)₂OSi(OCH₃)₂(CH₂)₂-,

-CH₂OCH₂CH₂CH₂Si(OCH₂CH₃)₂OSi(OCH₂CH₃)₂(CH₂)₂-,

-(CH₂)₂-Si(CH₃)₂-(CH₂)₂-,

-CH₂-,

-(CH₂)₂-,

-(CH₂)₃-,

-(CH₂)₄-,

-(CH₂)₅-,

-(CH₂)₆-,

-CF₂-,

-(CF₂)₂-,

-CF₂-CH₂-,

-CF₂-(CH₂)₂-,

-CF₂-(CH₂)₃-,

-CF₂-(CH₂)₄-,

-CF₂-(CH₂)₅-,

-CF₂-(CH₂)₆-,

-CO-,

-CONH-,

-CONH-CH₂-,

-CONH-(CH₂)₂-,

-CONH-(CH₂)₃-,

-CONH-(CH₂)₆-,

-CF₂CONH-,

-CF₂CONHCH₂-,

-CF₂CONH(CH₂)₂-,

-CF₂CONH(CH₂)₃-,

-CF₂CONH(CH₂)₆-,

-CON(CH₃)-(CH₂)₃-,

-CON(Ph)-(CH₂)₃-

(wherein, Ph means phenyl),

-CON(CH₃)-(CH₂)₆-,

-CON(Ph)-(CH₂)₆-

(wherein, Ph means phenyl),

-CF₂-CON(CH₃)-(CH₂)₃-,

-CF₂-CON(Ph)-(CH₂)₃-

(wherein, Ph means phenyl),

-CF₂-CON(CH₃)-(CH₂)₆-,

-CF₂-CON(Ph)-(CH₂)₆-

(wherein, Ph means phenyl),

-CONH-(CH₂)₂NH(CH₂)₃-,

-CONH-(CH₂)₆NH(CH₂)₃-,

-CH₂O-CONH-(CH₂)₃-,

-CH₂O-CONH-(CH₂)₆-,

-S-(CH₂)₃-,

-(CH₂)₂S(CH₂)₃-,

-CONH-(CH₂)₃Si(CH₃)₂OSi(CH₃)₂(CH₂)₂-,

-CONH-(CH₂)₃Si(CH₃)₂OSi(CH₃)₂OSi(CH₃)₂(CH₂)₂-,

-CONH-(CH₂)₃Si(CH₃)₂O(Si(CH₃)₂O)₂Si(CH₃)₂(CH₂)₂-,

-CONH-(CH₂)₃Si(CH₃)₂O(Si(CH₃)₂O)₃Si(CH₃)₂(CH₂)₂-,

-CONH-(CH₂)₃Si(CH₃)₂O(Si(CH₃)₂O)₁₀Si(CH₃)₂(CH₂)₂-,

-CONH-(CH₂)₃Si(CH₃)₂O(Si(CH₃)₂O)₂₀Si(CH₃)₂(CH₂)₂-,

-C(O)O-(CH₂)₃-,

-C(O)O-(CH₂)₆-,

-CH₂-O-(CH₂)₃-Si(CH₃)₂-(CH₂)₂-Si(CH₃)₂-(CH₂)₂-,

-CH₂-O-(CH₂)₃-Si(CH₃)₂-(CH₂)₂-Si(CH₃)₂-CH(CH₃)-,

-CH₂-O-(CH₂)₃-Si(CH₃)₂-(CH₂)₂-Si(CH₃)₂-(CH₂)₃-,

-CH₂-O-(CH₂)₃-Si(CH₃)₂-(CH₂)₂-Si(CH₃)₂-CH(CH₃)-CH₂-,

-OCH₂-,

-O(CH₂)₃-,

-OCFHCF₂-,

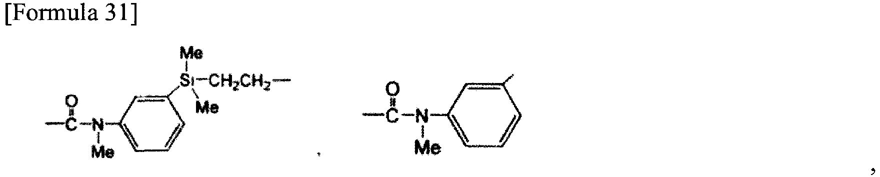

etc.

Among the above, X⁵ is preferably to be

-CH₂OCH₂-,

-CH₂O(CH₂)₂-,

-CH₂O(CH₂)₃-,

-CH₂O(CH₂)₆-,

-CF₂-CH₂-O-CH₂-,

-CF₂-CH₂-O-(CH₂)₂-,

-CF₂-CH₂-O-(CH₂)₃-,

-CF₂-CH₂-O-(CH₂)₆-,

-CH₂OCF₂CHFOCF₂-,

-CH₂OCF₂CHFOCF₂CF₂-,

-CH₂OCF₂CHFOCF₂CF₂CF₂-,

-CH₂OCH₂CF₂CF₂OCF₂-,

-CH₂OCH₂CF₂CF₂OCF₂CF₂-,

-CH₂OCH₂CF₂CF₂OCF₂CF₂CF₂-,

-CH₂OCH₂CF₂CF₂OCF(CF₃)CF₂OCF₂-,

-CH₂OCH₂CF₂CF₂OCF(CF₃)CF₂OCF₂CF₂-,

-CH₂OCH₂CF₂CF₂OCF(CF₃)CF₂OCF₂CF₂CF₂-,

-CH₂OCH₂CHFCF₂OCF₂-,

-CH₂OCH₂CHFCF₂OCF₂CF₂-,

-CH₂OCH₂CHFCF₂OCF₂CF₂CF₂-,

-CH₂OCH₂CHFCF₂OCF(CF₃)CF₂OCF₂-,

-CH₂OCH₂CHFCF₂OCF(CF₃)CF₂OCF₂CF₂-,

-CH₂OCH₂CHFCF₂OCF(CF₃)CF₂OCF₂CF₂CF₂-,

-CH₂OCF₂CHFOCF₂CF₂CF₂-C(O)NH-CH₂-,

-CF₂-CH₂OCF₂CHFOCF₂CF₂CF₂-C(O)NH-CH₂-,

-CH₂-,

-(CH₂)₂-,

-(CH₂)₃-,

-(CH₂)₄-,

-(CH₂)₆-,

-(CH₂)₆-,

-CF₂-,

-(CF₂)₂-,

-CF₂-CH₂-,

-CF₂-(CH₂)₂-,

-CF₂-(CH₂)₃-,

-CF₂-(CH₂)₄-,

-CF₂-(CH₂)₅-,

-CF₂-(CH₂)₆-,

-CONH-,

-CONH-CH₂-,

-CONH-(CH₂)₂-,

-CONH-(CH₂)₃-,

-CONH-(CH₂)₆-,

-CF₂CONH-,

-CF₂CONHCH₂-,

-CF₂CONH(CH₂)₂-,

-CF₂CONH(CH₂)₃-,

-CF₂CONH(CH₂)₆-,

-CON(CH₃)-(CH₂)₃-,

-CON(Ph)-(CH₂)₃-

(wherein, Ph means phenyl),

-CON(CH₃)-(CH₂)₆-,

-CON(Ph)-(CH₂)₆-

(wherein, Ph means phenyl),

-CF₂-CON(CH₃)-(CH₂)₃-,

-CF₂-CON(Ph)-(CH₂)₃-

(wherein, Ph means phenyl),

-CF₂-CON(CH₃)-(CH₂)₆-,

-CF₂-CON(Ph)-(CH₂)₆-

(wherein, Ph means phenyl),

-CONH-(CH₂)₂NH(CH₂)₃-,

-CONH-(CH₂)₆NH(CH₂)₃-,

-CH₂O-CONH-(CH₂)₃-,

-CH₂O-CONH-(CH₂)₆-,

-OCH₂-,

-O(CH₂)₃-,

or

-OCFHCF₂-.

Among the above, X⁵ is more preferably

-CH₂OCF₂CHFOCF₂CF₂CF₂-C(O)NH-CH₂-,

-CF₂-CH₂OCF₂CHFOCF₂CF₂CF₂-C(O)NH-CH₂-,

-CONH-,

-CONH-CH₂-,

-CONH-(CH₂)₂-,

-CONH-(CH₂)₃-,

-CONH-(CH₂)₆-,

-CF₂CONH-,

-CF₂CONHCH₂-,

-CF₂CONH(CH₂)₂-,

-CF₂CONH(CH₂)₃-,

-CF₂CONH(CH₂)₆-,

-CON(CH₃)-(CH₂)₃-,

-CON(Ph)-(CH₂)₃-

(wherein, Ph means phenyl),

-CON(CH₃)-(CH₂)₆-,

-CON(Ph)-(CH₂)₆-

(wherein, Ph means phenyl),

-CF₂-CON(CH₃)-(CH₂)₃-,

-CF₂-CON(Ph)-(CH₂)₃-

(wherein, Ph means phenyl),

-CF₂-CON(CH₃)-(CH₂)₆-,

-CF₂-CON(Ph)-(CH₂)₆-

(wherein, Ph means phenyl),

-CONH-(CH₂)₂NH(CH₂)₃-,

or

-CONH-(CH₂)₆NH(CH₂)₃-.

In another preferred embodiment, X⁵ represents X^{e'}. X^{e'} have the same meanings as defined above, except that single bonds are excluded..

In one embodiment, X^{e'} is a single bond. In this embodiment, the PFPE¹ and the group having a bonding ability to the substrate (that is, in the formula (C), the group enclosed in parentheses by applying γ1) are directly bonded.

In the above-mentioned formula, R^{a}s each independently represent -Z³-SiR⁷¹ₚ₁R⁷²_{q1}R⁷³ᵣ₁ at each appearance.

In the formula, Z³s each independently represent an oxygen atom or a divalent organic group at each appearance.

Z³ is preferably a divalent organic group, and does not include a group which forms a siloxane bond with the Si atom (Si atom to which R^{a} is bonded) at the terminal of the main chain of the molecule in the formula (C).

Z³ is preferably a C₁₋₆ alkylene group, -(CH₂)_{g}-O-(CH₂)ₕ- (wherein, g is an integer of 1 to 6, and h is an integer of 1 to 6) or -phenylene-(CH₂)ᵢ- (wherein, i is an integer of 0 to 6), and more preferably a C₁₋₃ alkylene group. These groups may be substituted by one or more substituents selected from, for example, a fluorine atom, a C₁₋₆ alkyl group, a C₂₋₆ alkenyl group and a C₂₋₆ alkynyl group. From the viewpoint that ultraviolet durability is particularly good, Z³ is more preferably a linear or branched alkylene group, and further preferably a linear alkylene group. A number of the carbon atoms constituting the alkylene group of Z³ is preferably in the range of 1 to 6, and more preferably in the range of 1 to 3. Incidentally, with regard to the alkylene group, it is the same as mentioned above.

In the formula, R⁷¹s each independently represent R^{a'} at each appearance. R^{a'} has the same meaning as that of R^{a}.

In R^{a}, a number of the Si atoms linked linearly through the Z³ group is 5 at the maximum. That is, in R^{a}, when R⁷¹ is present with a number of at least one, the Si atoms linked linearly through the Z³ group exist two or more in R^{a}, and a number of the Si atoms linked linearly through such a Z³ group is 5 at the maximum. Incidentally, a "number of the Si atoms linked linearly through the Z³ group in R^{a"} is equal to the number of repetitions of -Z³-Si- linked linearly in R^{a}.

For example, an example in which the Si atoms are linked through the Z³ group in R^{a} is shown below.

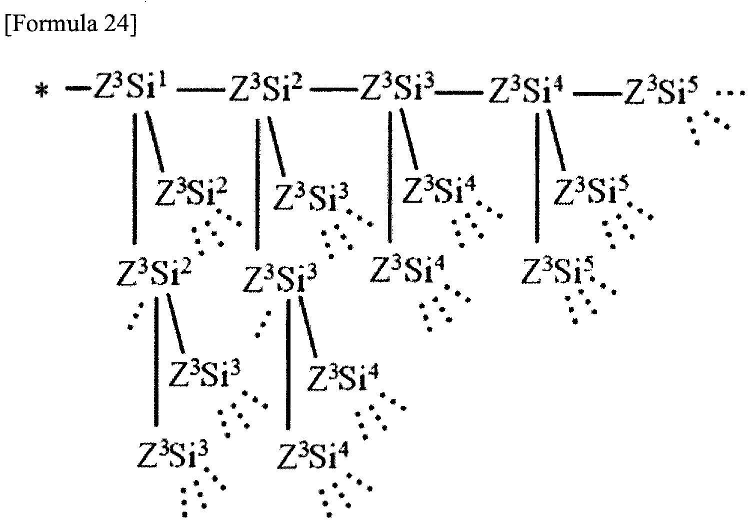

In the above-mentioned formula, * means a site that binds to Si in the main chain, and ··· means that a predetermined group other than Z³Si is bonded, that is, when all three bonding arms of the Si atom are ···, it means the end portion of the repetition of Z³Si. Also, the number on the right shoulder of Si means the number of the appearance of Si linked linearly through the Z³ group counted from *. That is, the chain in which the Z³Si repetition is terminated at Si² is "the number of the Si atoms linked linearly through the Z³ group in R^{a}" is 2, and similarly, the chain in which the Z³Si repetition is terminated at Si³, Si⁴ and Si⁵, "the number of the Si atoms linked linearly through the Z³ group in R^{a}" are 3, 4 and 5, respectively. Incidentally, as clearly seen from the above-mentioned formula, there are a plurality of the Z³Si chains in R^{a}, but it is not necessary that they all have the same length, and each may have an arbitrary length.

In a preferred embodiment, as shown below, "the number of the Si atoms linked linearly through the Z³ group in R^{a}" is one (left formula) or two (right formula) in all chains.

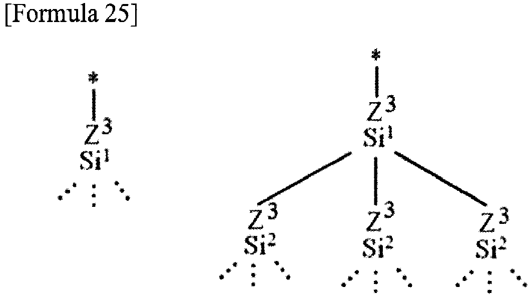

In one embodiment, the number of the Si atoms linked linearly through the Z³ group in R^{a} is 1 or 2, and preferably 1.

In the formula, R⁷²s each independently represent a hydroxyl group or a hydrolyzable group at each appearance. The "hydrolyzable group" has the same meaning as defined above.

R⁷² is preferably -OR (wherein, R represents a substituted or unsubstituted C₁₋₃ alkyl group, and more preferably a methyl group).

In the formula, R⁷³s each independently represent a hydrogen atom or a lower alkyl group at each appearance. The lower alkyl group is preferably an alkyl group having 1 to 20 carbon atoms, more preferably an alkyl group having 1 to 6 carbon atoms, and further preferably a methyl group.

In the formula, p1s are each independently an integer of 0 to 3 at each appearance; q1s are each independently an integer of 0 to 3 at each appearance; and r1s are each independently an integer of 0 to 3 at each appearance. Provided that in each (-Z³-SiR⁷¹ₚ₁R⁷²_{q1}R⁷³ᵣ₁), a sum of p1, q1 and r1 is 3.

In a preferred embodiment, in R^{a'} (R^{a} when no R^{a}' is present) at the terminal of R^{a}, the above-mentioned q1 is preferably 2 or more, for example, 2 or 3, and is more preferably 3.

In a preferred embodiment, at least one of the terminal part of R^{a} can be -Si(-Z³-SiR⁷²_{q1}R⁷³ᵣ₁)₂R^{b}₁₁R^{c}ₘ₁ (provided that, either one of l1 and m1 is 1, and the other is 0) or -Si(-Z³-SiR⁷²_{q1}R⁷³ᵣ₁)₃, and preferably -Si(-Z³-SiR⁷²_{q1}R⁷³ᵣ₁)₃ (here, a sum of q1 and r1 is 3). In the formula, the unit of (-Z³-SiR⁷²_{q1}R⁷³ᵣ₁) is preferably (-Z³-SiR⁷²₃). In a further preferred embodiment, the terminal part of R^{a} can be all -Si(-Z³-SiR⁷²_{q1}R⁷³ᵣ₁)₃, and preferably -Si(-Z³-SiR⁷²₃)₃.

In the above-mentioned formula, R^{a"}s each independently represent -Z³-SiR⁷¹ₚ₁R^{72"}_{q1}R⁷³ᵣ₁ at each appearance. Z³, R⁷¹, R⁷³, p1, q1, and r1 have the same meanings as defined above. R^{72"} has the same meaning as R⁷².

In a preferred embodiment, at least one of the terminal part of R^{a"} can be -Si(-Z³-SiR^{72"}_{q1}R⁷³ᵣ₁)₂R^{b"}₁₁R^{c"}ₘ₁ (provided that, either one of l1 and m1 is 1, and the other is 0) or -Si(-Z³-SiR^{72"}_{q1}R⁷³ᵣ₁)₃, and preferably -Si(-Z³-SiR^{72"}_{q1}R⁷³ᵣ₁)₃ (here, a sum of q1 and r1 is 3). In the formula, the unit of (-Z³-SiR^{72"}_{q1}R⁷³ᵣ₁) is preferably (-Z³-SiR^{72"}₃). In a further preferred embodiment, the terminal part of R^{a} can be all -Si(-Z³-SiR⁷²_{q1}R⁷³ᵣ₁)₃, and preferably -Si(-Z³-SiR^{72"}₃)₃.

In the formula (C), there exist at least two "Si"s bonded to a hydroxyl group or a hydrolyzable group(s). That is, there exist at least two structures selected from the group consisting of SiR⁷² (specifically the group represented by -SiR⁷¹ₚ₁R⁷²_{q1}R⁷³ᵣ₁, provided that, q1 is an integer of 1 to 3), SiR^{72"} (specifically, the group represented by -SiR⁷¹ₚ₁R^{72"}_{q1}R⁷³ᵣ₁, provided that, q1 is an integer of 1 to 3), SiR^{b} (specifically, the group represented by -SiR^{a}ₖ₁R^{b}ₗ₁R^{c}ₘ₁, provided that, 11 is an integer of 1 to 3) and SiR^{b"} (specifically, the group represented by -SiR^{a"}ₖ₁R^{b"}ₗ₁R^{c"}ₘ₁, provided that, 11 is an integer of 1 to 3). R^{b} and R^{b"} will be mentioned later.

In the formula (C), it is more preferable that at least one Si bonded to a hydroxyl group or a hydrolyzable group(s) is present at the both terminals of the molecular main chain of the PFPE-containing silane compound (a1) or (a2). That is, at least one structure of SiR⁷² and/or SiR^{b} is present and at least one structure of SiR^{72"} and/or SiR^{b"} is present.

In the above formula, R^{b} each independently represent a hydroxyl group or a hydrolyzable group at each appearance.

The above R^{b} is preferably a hydroxyl group, -OR, -OCOR, -O-N=C(R)₂, - N(R)₂, -NHR or halogen (in these formulae, R represents a substituted or unsubstituted alkyl group having 1 to 4 carbon atoms), and more preferably -OR. In R, an unsubstituted alkyl group such as a methyl group, an ethyl group, a propyl group, an isopropyl group, an n-butyl group, an isobutyl group, etc.; and a substituted alkyl group such as a chloromethyl group, etc., are contained. Among these, an alkyl group, in particular, an unsubstituted alkyl group is preferable, and a methyl group or an ethyl group is more preferable. The hydroxyl group is not particularly limited, and may be one in which it is generated by hydrolyzing a hydrolyzable group. R^{b} is more preferably -OR (wherein, R represents a substituted or unsubstituted C₁₋₃ alkyl group, and more preferably a methyl group).

In the above-mentioned formula, R^{b"} has the same meaning as in R^{b}.

In the above-mentioned formula, R^{c}s each independently represent a hydrogen atom or a lower alkyl group at each appearance. The lower alkyl group is preferably an alkyl group having 1 to 20 carbon atoms, more preferably an alkyl group having 1 to 6 carbon atoms, and further preferably a methyl group.

In the above-mentioned formula, R^{c"} has the same meaning as in R^{c}.

In the formula, k1 is an integer of 0 to 3 at each appearance; 11 is an integer of 0 to 3 at each appearance; and m1 is an integer of 0 to 3 at each appearance. Provided that, in each (SiR^{a}ₖ₁R^{b}ₗ₁R^{c}m₁) and each (SiR^{a"}ₖ₁R^{b"}ₗ₁R^{c"}ₘ₁), a sum of k1, l1 and m1 is 3.

In one embodiment, k1 is preferably an integer of 1 to 3, and more preferably 3.

The compound represented by the above-mentioned formula (C) can be synthesized by, for example, the method described in WO 2014/069592.

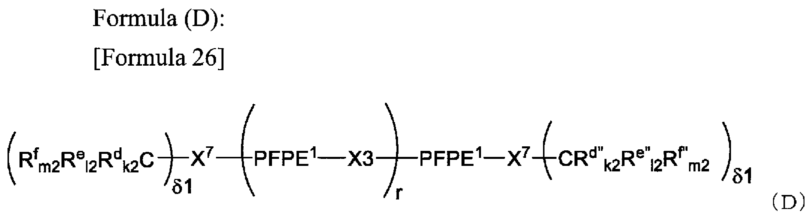

In the above-mentioned formula (D), PFPE¹, X3 have the same meanings as those defined in the above-mentioned formula (A).

In the above-mentioned formula, X⁷s each independently represent a single bond or 2 to 10 valent organic group. The said X⁷ is considered to be a linker which links, in the compound represented by the formula (D), the perfluoro(poly)ether part (that is, -PFPE¹- part) which mainly provides water repellent property and surface slipperiness, etc., and the part (that is, the group enclosed in parentheses attaching with δ1) which provides a bonding ability to a substrate. Accordingly, the said X⁷ may be a single bond or any organic group as long as the compound represented by the formula (D) can exist stably. Incidentally, in the present specification, the structure described as X⁷ is bonded to an amide bond that links to a group represented by PFPE¹ on the left side and to a group enclosed in parentheses attaching with δ1 on the right side, respectively.

In another embodiment, X⁷ represents X^{e}. X^{e} has the same meaning as defined above.

In the above-mentioned formula, δ1 is an integer of 1 to 9, and δ1 can change depending on the number of the valence of X⁷. In the formula (D), δ1 is a value subtracting 1 from the valence of X⁷. When X⁷ is a single bond, then δ1 is 1.

The above-mentioned X⁷ is preferably a 2 to 7 valent, more preferably a 2 to 4 valent, and further preferably a divalent organic group.

In one embodiment, X⁷ is a 2 to 4 valent organic group, and δ1 is 1 to 3.

In another embodiment, X⁷ is a divalent organic group, and δ1 is 1. In this case, the formula (D) is represented by the following formula (D').

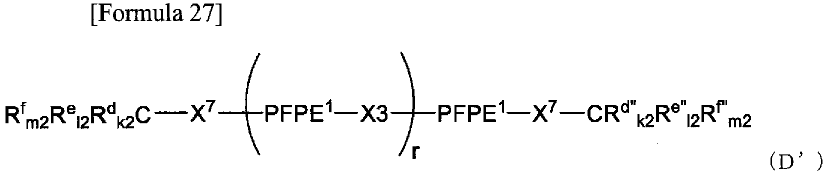

Examples of the above-mentioned X⁷ are not particularly limited as long as it can form a bond with an amide group linking to the PFPE¹ group and the compound can be prepared stably and, for example, those as described with regard to X¹ may be mentioned.

Among these, as preferable specific X⁷, there may be mentioned, a single bond,

-CH₂OCH₂-,

-CH₂O(CH₂)₂-,

-CH₂O(CH₂)₃-,

-CH₂O(CH₂)₆-,

-CF₂-CH₂-O-CH₂-,

-CF₂-CH₂-O-(CH₂)₂-,

-CF₂-CH₂-O-(CH₂)₃-,

-CF₂-CH₂-O-(CH₂)₆-,

-CH₂O(CH₂)₃Si(CH₃)₂OSi(CH₃)₂(CH₂)₂-,

-CH₂O(CH₂)₃Si(CH₃)₂OSi(CH₃)₂OSi(CH₃)₂(CH₂)₂-,

-CH₂O(CH₂)₃Si(CH₃)₂O(Si(CH₃)₂O)₂Si(CH₃)₂(CH₂)₂-,

-CH₂O(CH₂)₃Si(CH₃)₂O(Si(CH₃)₂O)₃Si(CH₃)₂(CH₂)₂-,

-CH₂O(CH₂)₃Si(CH₃)₂O(Si(CH₃)₂O)₁₀Si(CH₃)₂(CH₂)₂-,

-CH₂O(CH₂)₃Si(CH₃)₂O(Si(CH₃)₂O)₂₀Si(CH₃)₂(CH₂)₂-,

-CH₂OCF₂CHFOCF₂-,

-CH₂OCF₂CHFOCF₂CF₂-,

-CH₂OCF₂CHFOCF₂CF₂CF₂-,

-CH₂OCH₂CF₂CF₂OCF₂-,

-CH₂OCH₂CF₂CF₂OCF₂CF₂-,

-CH₂OCH₂CF₂CF₂OCF₂CF₂CF₂-,

-CH₂OCH₂CF₂CF₂OCF(CF₃)CF₂OCF₂-,

-CH₂OCH₂CF₂CF₂OCF(CF₃)CF₂OCF₂CF₂-,

-CH₂OCH₂CF₂CF₂OCF(CF₃)CF₂OCF₂CF₂CF₂-,

-CH₂OCH₂CHFCF₂OCF₂-,

-CH₂OCH₂CHFCF₂OCF₂CF₂-,

-CH₂OCH₂CHFCF₂OCF₂CF₂CF₂-,

-CH₂OCH₂CHFCF₂OCF(CF₃)CF₂OCF₂-,

-CH₂OCH₂CHFCF₂OCF(CF₃)CF₂OCF₂CF₂-,

-CH₂OCH₂CHFCF₂OCF(CF₃)CF₂OCF₂CF₂CF₂-,

-CH₂OCF₂CHFOCF₂CF₂CF₂-C(O)NH-CH₂-,

-CH₂OCH₂(CH₂)₇CH₂Si(OCH₃)₂OSi(OCH₃)₂(CH₂)₂Si(OCH₃)₂OSi(OCH₃)₂(CH₂)₂-,

-CH₂OCH₂CH₂CH₂Si(OCH₃)₂OSi(OCH₃)₂(CH₂)₃-,

-CH₂OCH₂CH₂CH₂Si(OCH₂CH₃)₂OSi(OCH₂CH₃)₂(CH₂)₃-,

-CH₂OCH₂CH₂CH₂Si(OCH₃)₂OSi(OCH₃)₂(CH₂)₂-,

-CH₂OCH₂CH₂CH₂Si(OCH₂CH₃)₂OSi(OCH₂CH₃)₂(CH₂)₂-,

-(CH₂)₂-Si(CH₃)₂-(CH₂)₂-,

-CH₂-,

-(CH₂)₂-,

-(CH₂)₃-,

-(CH₂)₄-,

-(CH₂)₅-,

-(CH₂)₆-,

-CF₂-,

-(CF₂)₂-,

-CF₂-CH₂-,

-CF₂-(CH₂)₂-,

-CF₂-(CH₂)₃-,

-CF₂-(CH₂)₄-,

-CF₂-(CH₂)₅-,

-CF₂-(CH₂)₆-,

-CO-,

-CONH-,

-CONH-CH₂-,

-CONH-(CH₂)₂-,

-CONH-(CH₂)₃-,

-CONH-(CH₂)₆-,

-CF₂CONH-,

-CF₂CONHCH₂-,

-CF₂CONH(CH₂)₂-,

-CF₂CONH(CH₂)₃-,

-CF₂CONH(CH₂)₆-,

-CON(CH₃)-(CH₂)₃-,

-CON(Ph)-(CH₂)₃-

(wherein, Ph means phenyl),

-CON(CH₃)-(CH₂)₆-,

-CON(Ph)-(CH₂)₆-

(wherein, Ph means phenyl),

-CF₂-CON(CH₃)-(CH₂)₃-,

-CF₂-CON(Ph)-(CH₂)₃-

(wherein, Ph means phenyl),

-CF₂-CON(CH₃)-(CH₂)₆-,

-CF₂-CON(Ph)-(CH₂)₆-

(wherein, Ph means phenyl),

-CONH-(CH₂)₂NH(CH₂)₃-,

-CONH-(CH₂)₆NH(CH₂)₃-,

-CH₂O-CONH-(CH₂)₃-,

-CH₂O-CONH-(CH₂)₆-,

-S-(CH₂)₃-,

-(CH₂)₂S(CH₂)₃-,

-CONH-(CH₂)₃Si(CH₃)₂OSi(CH₃)₂(CH₂)₂-,

-CONH-(CH₂)₃Si(CH₃)₂OSi(CH₃)₂OSi(CH₃)₂(CH₂)₂-,

-CONH-(CH₂)₃Si(CH₃)₂O(Si(CH₃)₂O)₂Si(CH₃)₂(CH₂)₂-,

-CONH-(CH₂)₃Si(CH₃)₂O(Si(CH₃)₂O)₃Si(CH₃)₂(CH₂)₂-,

-CONH-(CH₂)₃Si(CH₃)₂O(Si(CH₃)₂O)₁₀Si(CH₃)₂(CH₂)₂-,

-CONH-(CH₂)₃Si(CH₃)₂O(Si(CH₃)₂O)₂₀Si(CH₃)₂(CH₂)₂-,

-C(O)O-(CH₂)₃-,

-C(O)O-(CH₂)₆-,

-CH₂-O-(CH₂)₃-Si(CH₃)₂-(CH₂)₂-Si(CH₃)₂-(CH₂)₂-,

-CH₂-O-(CH₂)₃-Si(CH₃)₂-(CH₂)₂-Si(CH₃)₂-CH(CH₃)-,

-CH₂-O-(CH₂)₃-Si(CH₃)₂-(CH₂)₂-Si(CH₃)₂-(CH₂)₃-,

-CH₂-O-(CH₂)₃-Si(CH₃)₂-(CH₂)₂-Si(CH₃)₂-CH(CH₃)-CH₂-,

-OCH₂-,

-O(CH₂)₃-,

-OCFHCF₂-,

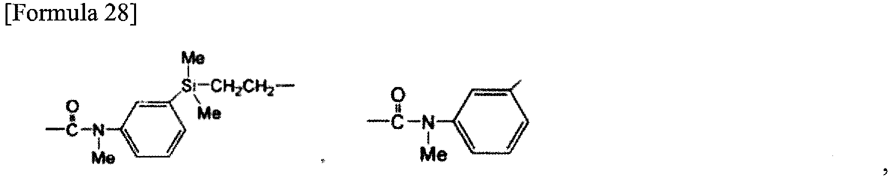

etc.

Among the above-mentioned, more preferred specific X⁷ is to be preferably

-CH₂OCH₂-,

-CH₂O(CH₂)₂-,

-CH₂O(CH₂)₃-,

-CH₂O(CH₂)₆-,

-CF₂-CH₂-O-CH₂-,

-CF₂-CH₂-O-(CH₂)₂-,

-CF₂-CH₂-O-(CH₂)₃-,

-CF₂-CH₂-O-(CH₂)₆-,

-CH₂OCF₂CHFOCF₂-,

-CH₂OCF₂CHFOCF₂CF₂-,

-CH₂OCF₂CHFOCF₂CF₂CF₂-,

-CH₂OCH₂CF₂CF₂OCF₂-,

-CH₂OCH₂CF₂CF₂OCF₂CF₂-,

-CH₂OCH₂CF₂CF₂OCF₂CF₂CF₂-,

-CH₂OCH₂CF₂CF₂OCF(CF₃)CF₂OCF₂-,

-CH₂OCH₂CF₂CF₂OCF(CF₃)CF₂OCF₂CF₂-,

-CH₂OCH₂CF₂CF₂OCF(CF₃)CF₂OCF₂CF₂CF₂-,

-CH₂OCH₂CHFCF₂OCF₂-,

-CH₂OCH₂CHFCF₂OCF₂CF₂-,

-CH₂OCH₂CHFCF₂OCF₂CF₂CF₂-,

-CH₂OCH₂CHFCF₂OCF(CF₃)CF₂OCF₂-,

-CH₂OCH₂CHFCF₂OCF(CF₃)CF₂OCF₂CF₂-,

-CH₂OCH₂CHFCF₂OCF(CF₃)CF₂OCF₂CF₂CF₂-,

-CH₂OCF₂CHFOCF₂CF₂CF₂-C(O)NH-CH₂-,

-CF₂-CH₂OCF₂CHFOCF₂CF₂CF₂-C(O)NH-CH₂-,

-CH₂-,

-(CH₂)₂-,

-(CH₂)₃-,

-(CH₂)₄-,

-(CH₂)₅-,

-(CH₂)₆-,

-CF₂-,

-(CF₂)₂-,

-CF₂-CH₂-,

-CF₂-(CH₂)₂-,

-CF₂-(CH₂)₃-,

-CF₂-(CH₂)₄-,

-CF₂-(CH₂)₅-,

-CF₂-(CH₂)₆-,

-CONH-,

-CONH-CH₂-,

-CONH-(CH₂)₂-,

-CONH-(CH₂)₃-,

-CONH-(CH₂)₆-,

-CF₂CONH-,

-CF₂CONHCH₂-,

-CF₂CONH(CH₂)₂-,

-CF₂CONH(CH₂)₃-,

-CF₂CONH(CH₂)₆-,

-CON(CH₃)-(CH₂)₃-,

-CON(Ph)-(CH₂)₃-

(wherein, Ph means phenyl),

-CON(CH₃)-(CH₂)₆-,

-CON(Ph)-(CH₂)₆-

(wherein, Ph means phenyl),

-CF₂-CON(CH₃)-(CH₂)₃-,

-CF₂-CON(Ph)-(CH₂)₃-

(wherein, Ph means phenyl),

-CF₂-CON(CH₃)-(CH₂)₆-,

-CF₂-CON(Ph)-(CH₂)₆-

(wherein, Ph means phenyl),

-CONH-(CH₂)₂NH(CH₂)₃-,

-CONH-(CH₂)₆NH(CH₂)₃-,

-CH₂O-CONH-(CH₂)₃-,

-CH₂O-CONH-(CH₂)₆-,

-OCHz-,

-O(CH₂)₃-,

or

-OCFHCF₂-.

Among the above, X⁷ is more preferably

-CH₂OCF₂CHFOCF₂CF₂CF₂-C(O)NH-CH₂-,

-CF₂-CH₂OCF₂CHFOCF₂CF₂CF₂-C(O)NH-CH₂-,

-CONH-,

-CONH-CH₂-,

-CONH-(CH₂)₂-,

-CONH-(CH₂)₃-,

-CONH-(CH₂)₆-,

-CF₂CONH-,

-CF₂CONHCH₂-,

-CF₂CONH(CH₂)₂-,

-CF₂CONH(CH₂)₃-,

-CF₂CONH(CH₂)₆-,

-CON(CH₃)-(CH₂)₃-,

-CON(Ph)-(CH₂)₃-

(wherein, Ph means phenyl),

-CON(CH₃)-(CH₂)₆-,

-CON(Ph)-(CH₂)₆-

(wherein, Ph means phenyl),

-CF₂-CON(CH₃)-(CH₂)₃-,

-CF₂-CON(Ph)-(CH₂)₃-

(wherein, Ph means phenyl),

-CF₂-CON(CH₃)-(CH₂)₆-,

-CF₂-CON(Ph)-(CH₂)₆-

(wherein, Ph means phenyl),

-CONH-(CH₂)₂NH(CH₂)₃-,

or

-CONH-(CH₂)₆NH(CH₂)₃-.

In a more preferred embodiment, X⁷ represents X^{e'}. X^{e'} has the same meaning as defined above. In one embodiment, X^{e'} is a single bond.

In one embodiment, X^{e'} is a single bond. In this embodiment, the PFPE¹ and the group having a bonding ability to the substrate (that is, in the formula (D), the group enclosed in parentheses by applying δ1) are directly bonded. By having such a structure, it is considered that the bonding force of the PFPE¹ and the group enclosed in parentheses by applying δ1 is more strengthened. Also, the carbon atom (that is, in the group enclosed in parentheses by applying δ1, the carbon atom bonded to R^{d}, R^{e} and R^{f}, or the carbon atom bonded to R^{d"}, R^{e"} and R^{f"}) directly bonding to the PFPE¹ is less biased in charge, and as a result, a nucleophilic reaction, etc., is difficult to occur at the above-mentioned carbon atom, so that the said compound is considered to be bonded to the substrate stably. Such a structure is advantageous since friction durability of the layer formed by the PFPE-containing silane compounds (a1) and (a2) can be more improved.

In the above-mentioned formula, R^{d}s each independently represent -Z⁴-CR⁸¹ₚ₂R⁸²_{q2}R⁸³ᵣ₂ at each appearance.

In the formula, Z⁴s each independently represent an oxygen atom or a divalent organic group at each appearance.

The above Z⁴ is preferably a C₁₋₆ alkylene group, -(CH₂)_{g}-O-(CH₂)ₕ- (wherein, g is an integer of 0 to 6, for example, an integer of 1 to 6, h is an integer of 0 to 6, for example, an integer of 1 to 6) or -phenylene-(CH₂)ᵢ- (wherein, i is an integer of 0 to 6), and more preferably a C₁₋₃ alkylene group. These groups may be substituted by one or more substituent(s), for example, selected from a fluorine atom, a C₁₋₆ alkyl group, a C₂₋₆ alkenyl group and a C₂₋₆ alkynyl group.

In the above formula, R⁸¹s each independently represent R^{d'} at each appearance. R^{d"} has the same meaning as R^{d}.

In R^{d}, a number of C atoms linearly linked through the Z⁴ group is five at the maximum. That is, in the above R^{d}, when R⁸¹ is present with at least one, two or more C atoms which linearly linked through the Z⁴ group in R^{d} are present, and a number of C atoms linearly linked through such a Z⁴ group is five at the maximum. Incidentally, a "number of C atoms linearly linked through the Z⁴ group in R^{d"} is equal to the number of repetitions of -Z⁴-C- linearly linked in R^{d}.

In a preferred embodiment, as shown below, the "number of C atoms linearly linked through the Z⁴ group in R^{d}" is one (left formula) or two (right formula) in all chains.

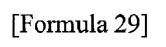

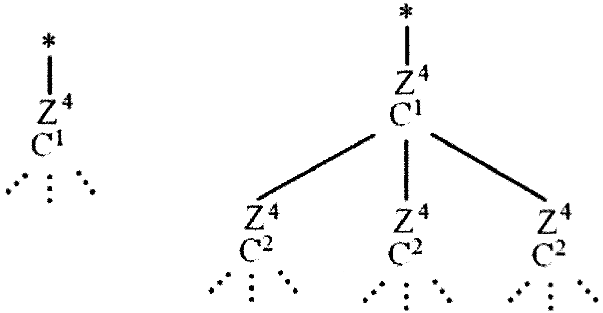

In one embodiment, the number of C atoms linearly linked through the Z⁴ group in R^{d} is 1 or 2, and preferably 1.

In the formula, R⁸²s each independently represent -Y-SiR⁸⁵ₙ₂R⁸⁶₃₋ₙ₂ at each appearance.

Ys each independently represent a divalent organic group at each appearance.

In a preferred embodiment, Y is a C₁₋₆ alkylene group, -(CH₂)_{g'}-O-(CH₂)_{h'}-(wherein, g' is an integer of 0 to 6, for example, an integer of 1 to 6, h' is an integer of 0 to 6, for example, an integer of 1 to 6) or -phenylene-(CH₂)_{i'}- (wherein, i' is an integer of 0 to 6). These groups may be substituted by one or more substituents selected from, for example, a fluorine atom, a C₁₋₆ alkyl group, a C₂₋₆ alkenyl group and a C₂₋₆ alkynyl group.

In one embodiment, Y can be a C₁₋₆ alkylene group or -phenylene-(CH₂)_{i'}-. When Y is the above-mentioned group, light resistance, in particular, ultraviolet durability can be more heightened.

The above-mentioned R⁸⁵s each independently represent a hydroxyl group or a hydrolyzable group(s) at each appearance.

The above-mentioned "hydrolyzable group" may be mentioned the same as the formula (C).

R⁸⁵ is preferably -OR (wherein, R represents a substituted or unsubstituted C₁₋₃ alkyl group, more preferably an ethyl group or a methyl group, and particularly a methyl group).

The above-mentioned R⁸⁶s each independently represent a hydrogen atom or a lower alkyl group at each appearance. The lower alkyl group is preferably an alkyl group having 1 to 20 carbon atoms, more preferably an alkyl group having 1 to 6 carbon atoms, and further preferably a methyl group.

n2 represents an integer of 0 to 3 independently for each (-Y-SiR⁸⁵ₙ₂R⁸⁶₃₋ₙ₂) unit or each (-Y-SiR^{85"}ₙ₂R^{86"}₃₋ₙ₂) unit, preferably an integer of 1 to 3, more preferably 2 or 3, and particularly preferably 3. R^{85"} and R^{86"} are explained later.

The above R⁸³s each independently represent a hydrogen atom, a hydroxyl group or a lower alkyl group at each appearance, and preferably a hydrogen atom or a lower alkyl group. The lower alkyl group is preferably an alkyl group having 1 to 20 carbon atoms, more preferably an alkyl group having 1 to 6 carbon atoms, and further preferably a methyl group.

In the formula, p2s are each independently an integer of 0 to 3 at each appearance; q2s are each independently an integer of 0 to 3 at each appearance; and r2s are each independently an integer of 0 to 3 at each appearance. Provided that a sum of p2, q2 and r2 is 3 per each (-Z⁴-CR⁸¹ₚ₂R⁸²_{q2}R⁸³ᵣ₂) or each (-Z⁴-CR⁸¹ₚ₂R^{82"}_{q2}R⁸³ᵣ₂). R^{82"} is explained later.

In a preferred embodiment, in the terminal R^{d}' (R^{d} when no R^{d'} is present) in R^{d}, the above-mentioned q2 is preferably 2 or more, for example, 2 or 3, and more preferably 3.

In a preferred embodiment, at least one of the terminal part of R^{d} can be -C(-Y-SiR⁸⁵ₙ₂R⁸⁶₃₋ₙ₂)₂ (specifically, -C(-Y-SiR⁸⁵R⁸⁶₃₋ₙ₂)₂R⁸³) or -C(-Y-SiR⁸⁵ₙ₂R⁸⁶₃₋ₙ₂)₃, and preferably -C(-Y-SiR⁸⁵ₙ₂R⁸⁶₃₋ₙ₂)₃. Here, n2 is an integer of 1 to 3. In the formula, the unit of (-Y-SiR⁸⁵ₙ₂R⁸⁶₃₋ₙ₂) is preferably (-Y-SiR⁸⁵₃). In a further preferred embodiment, the terminal part of R^{d} can be all -C(-Y-SiR⁸⁵ₙ₂R⁸⁶₃₋ₙ₂)₃, and preferably - C(-Y-SiR⁸⁵₃)₃.

In a more preferred embodiment, the terminal of the group represented by (CR^{d}ₖ₂R^{e}1₂R^{f}ₘ₂) is C(-Y-SiR⁸⁵ₙ₂R⁸⁶₃₋ₙ₂)₂R^{f}) or C(-Y-SiR⁸⁵ₙ₂R⁸⁶₃₋ₙ₂)₃, and preferably C(-Y-SiR⁸⁵ₙ₂R⁸⁶₃₋ₙ₂)₃. Here, n2 is an integer of 1 to 3. In the formula, the unit of (-Y-SiR⁸⁵ₙ₂R⁸⁶₃₋ₙ₂) is preferably (-Y-SiR⁸⁵₃). In a further preferred embodiment, the terminal portions of the above-mentioned group can be all -C(-Y-SiR⁸⁵ₙ₂R⁸⁶₃₋ₙ₂)₃, and preferably -C(-Y-SiR⁸⁵₃)₃.

In the above-mentioned formula, R^{d"}s each independently represent -Z⁴-CR⁸¹ₚ₂R^{82"}_{q2}R⁸³ᵣ₂ at each appearance. Z⁴, R⁸¹, R⁸³, p2, q2, and r2 have the same meanings as defined above. R^{82"}s each independently represent -Y-SiR^{85"}ₙ₂R^{86"}₃₋ₙ₂ at each appearance. Here, Y and n2 have the same meanings as defined above. R^{85"} and R^{86"} have the same meanings as R⁸⁵ and R⁸⁶, respectively.

In a preferred embodiment, in R^{d}'(R^{d"} when no R^{d}' is present) at the terminal in R^{d"}, the above-mentioned q2 is preferably 2 or more, for example, 2 or 3, and more preferably 3.

In a preferred embodiment, at least one of the terminal portion of R^{d"} can be -C(-Y-SiR^{85"}ₙ₂R^{86"}₃₋ₙ₂)₂ (specifically -C(-Y-SiR^{85"}ₙ₂R^{16"}₃₋ₙ₂)₂R⁸³) or -C(-Y-SiR^{85"}ₙ₂R^{86"}₃₋ₙ₂)₃, and preferably can be -C(-Y-SiR^{85"}ₙ₂R^{86"}₃₋ₙ₂)₃. Here, n2 is an integer of 1 to 3. In the formula, the unit of (-Y-SiR^{85"}ₙ₂R^{86"}₃₋ₙ₂) is preferably (-Y-SiR^{85"}₃). In a further preferred embodiment, the terminal portions of R^{d} can be all -C(-Y-SiR^{85"}ₙ₂R^{86"}₃₋ₙ₂)₃, and preferably can be -C(-Y-SiR^{85"}₃)₃.

In a more preferred embodiment, the terminal of the group represented by (CR^{d"}ₖ₂R^{e"}ₗ₂R^{f"}ₘ₂) is C(-Y-SiR^{85"}ₙ₂R^{86"}₃₋ₙ₂)₂R^{f"}) or C(-Y-SiR^{85"}ₙ₂R^{86"}₃₋ₙ₂)₃, and preferably C(-Y-SiR^{85"}ₙ₂R^{86"}₃₋ₙ₂)₃. Here, n2 is an integer of 1 to 3. In the formula, the unit of (-Y-SiR^{85"}ₙ₂R^{86"}₃₋ₙ₂) is preferably (-Y-SiR^{85"}₃). In a further preferred embodiment, the terminal part of the above-mentioned group can be all -C(-Y-SiR^{15"}ₙ₂R^{86"}₃₋ₙ₂)₃, and preferably -C(-Y-SiR^{85"}₃)₃.

In the above-mentioned formula, R^{e} each independently represent -Y-SiR⁸⁵ₙ₂R⁸⁶₃₋ₙ₂ at each appearance. Here, Y, R⁸⁵, R⁸⁶ and n2 have the same meanings in the description of the above-mentioned R⁸².

In the above-mentioned formula, R^{e"} each independently represent -Y-SiR^{85"}ₙ₂R^{86"}₃₋ₙ₂ at each appearance. Here, R^{85"}, R^{86"}, Y and n2 have the same meanings as defined above.

In the above-mentioned formula, R^{f}s each independently represent a hydrogen atom, a hydroxyl group or a lower alkyl group at each appearance. It is preferable that R^{f}s each independently represent a hydrogen atom or a lower alkyl group at each appearance. The lower alkyl group is preferably an alkyl group having 1 to 20 carbon atoms, more preferably an alkyl group having 1 to 6 carbon atoms, and further preferably a methyl group.

In the above-mentioned formula, R^{f"} has the same meaning as R^{f}.

In the formula, k2s are each independently an integer of 0 to 3 at each appearance; l2s are each independently an integer of 0 to 3 at each appearance; and m2s are each independently an integer of 0 to 3 at each appearance. Provided that a sum of k2, l2 and m2 is 3.

In one embodiment, at least one of k2s is 2 or 3, and preferably 3.

In one embodiment, k2 is 2 or 3, and preferably 3.

In one embodiment, 12 is 2 or 3, and preferably 3.

In the above-mentioned formula (D), two or more groups selected from the group consisting of the group represented by -Y-SiR⁸⁵ and the group represented by -Y-SiR^{85"} are present. In the above-mentioned formula (D), it is preferable that one or more groups represented by -Y-SiR⁸⁵, and one or more groups represented by -Y-SiR^{85"} are present.

It is more preferable that one or more carbon atoms bonded to two or more groups represented by -Y-SiR⁸⁵ₙ₂R⁸⁶₃₋ₙ₂ are present, and one or more carbon atoms bonded to two or more groups represented by -Y-SiR^{85"}ₙ₂R^{86"}₃₋ₙ₂ are present. In the formula, n2 is an integer of 1 to 3.

In one embodiment, in the above-mentioned formula (D), it is preferable that one or more groups represented by -C-(Y-SiR⁸⁵ₙ₂R⁸⁶₃₋ₙ₂)₂, and one or more groups represented by -C-(Y-SiR^{85"}ₙ₂R^{86"}₃₋ₙ₂)₂ are present (wherein, n2 is an integer of 1 to 3.).

In one embodiment, in the above-mentioned formula (D), it is preferable that one or more groups represented by -C-(Y-SiR⁸⁵ₙ₂R⁸⁶₃₋ₙ₂)₃, and one or more groups represented by -C-(Y-SiR^{85"}ₙ₂R^{86"}₃₋ₙ₂)₃ are present (wherein, n2 is an integer of 1 to 3.).

In the formula (D), n2 is an integer of 1 to 3, and at least one of q2s is 2 or 3, or at least one of 12 and m4 is 2 or 3.

In the above-mentioned formula (D), it is preferable in the formula that at least two groups of the -Y-SiR⁸⁵ₙ₂R⁸⁶₃₋ₙ₂ groups or the -Y-SiR^{85"}ₙ₂R^{86"}₃₋ₙ₂ groups are present. In the above-mentioned formula (D), it is more preferable that one or more -Y-SiR⁸⁵ₙ₂R⁸⁶₃₋ₙ₂ groups, and one or more -Y-SiR^{85"}ₙ₂R^{86"}₃₋ₙ₂ group are present. That is, it is preferable that the group containing -SiR⁸⁵ and the group containing -SiR^{85"} are present at the both terminals of the molecular main chain of the PFPE-containing silane compound (a1) or (a2).

The compound represented by the above-mentioned formula (D) can be produced by combining known methods.

In a preferred embodiment, the PFPE-containing silane compound (a1) or (a2) is represented by the formula (B) or (C).

In one embodiment, the PFPE-containing silane compound (a1) or (a2) is represented by the formula (A), (C) or (D).

In one embodiment, the PFPE-containing silane compound (a1) or (a2) has two or more, preferably three or more Si atoms having a hydroxyl group or a hydrolyzable group(s) at least one terminal thereof.

The PFPE-containing silane compound (a1) or (a2) is not particularly limited, and in one embodiment, it can have a number average molecular weight of 5×10² to 1×10⁵. Even in such a range, it is preferable to have a number average molecular weight of 2,000 to 50,000, more preferably 2,500 to 30,000, and further preferably 3,000 to 10,000. Incidentally, in the present invention, the number average molecular weight is made a value measured by ¹⁹F-NMR.

### < crosslinking agent (b)>

A crosslinking agent of the present invention is a compound having at least two OR² groups bonded to an Si atom (provided that the compounds falling under the above (a1) or (a2) are excluded) or a partially hydrolyzed condensate thereof (hereinafter, also referred to as "crosslinking agent".), which is subjected to crosslinking reaction (condensation reaction) with the PFPE-containing silane compound (a1) or (a2) (specifically, a hydroxyl group or a hydrolyzable group bonded to the Si atom of the PFPE-containing silane compound (a1) or (a2) ). By containing the PFPE-containing silane compound (a1) or (a2) and the cross-linking agent (b), physical properties (for example, tensile strength, elastic modulus) of the cured product obtained from the curable composition become good.

The crosslinking agent (b) is a compound having at least two OR² groups bonded to an Si atom (provided that the compounds falling under the above (a1) or (a2) are excluded.) or a partially hydrolyzed condensate thereof. In the formula, R²s are each independently a hydrogen atom or a monovalent organic group at each appearance. The monovalent organic group means a group containing a monovalent carbon. Such a monovalent organic group is not particularly limited, and may be mentioned a monovalent hydrocarbon group. The hydrocarbon group has the same meaning as defined above.

The crosslinking agent (b) has a different structure from that of the PFPE-containing silane compound (a1) or (a2). The crosslinking agent (b) preferably does not have a perfluoro(poly)ether portion. The crosslinking agent (b) may have any reactive functional groups other than the Si-OR² group, alkenyl group and alkynyl group, or may not have the same, and in the point of crosslinking property, it is preferable that it does not have other reactive functional group. In the present invention, the other reactive functional group refers to a primary amino group, an epoxy group, a (meth)acryloyl group, a (meth)acryloxy group, a mercapto group, an isocyanate group, etc. Hereinafter, the crosslinking agent (b) will be explained by dividing into a (B1) a crosslinking agent having no reactive functional group and a (B2) crosslinking agent having a reactive functional group.

### «(B1) Crosslinking agent having no reactive functional group»

As the (B1) crosslinking agent having no reactive functional group, there may be mentioned, for example, an organosilicon compound represented by R¹ₙSi(OR²)₄₋ₙ (wherein, R¹s are each independently a substituted or unsubstituted monovalent hydrocarbon group at each appearance, R²s are each independently a hydrogen atom or a monovalent organic group at each appearance, and n is 0, 1 or 2.).

R¹s are preferably each independently a substituted or unsubstituted monovalent hydrocarbon group having 1 to 12 carbon atoms at each appearance. R¹ may be specifically mentioned an alkyl group such as a methyl group, an ethyl group, a propyl group, an isopropyl group, a butyl group, an isobutyl group, a tert-butyl group, a pentyl group, a neopentyl group, a hexyl group, a heptyl group, an octyl group, a nonyl group, a decyl group, etc.; a cycloalkyl group such as a cyclopentyl group, a cyclohexyl group, a cycloheptyl group, etc.; an aryl group such as a phenyl group, a tolyl group, a xylyl group, a naphthyl group, etc.; an aralkyl group such as a benzyl group, a phenylethyl group, a phenylpropyl group, etc.; an alkenyl group such as a vinyl group, an allyl group, a propenyl group, a butenyl group, etc.; an alkynyl group such as an ethynyl group, a propynyl group, etc.; and a group in which a part or whole of the hydrogen atoms of these groups is/are substituted by a halogen atom(s) such as fluorine, chlorine, bromine, etc., (for example, a chloromethyl group, a bromoethyl group, a chloropropyl group, a trifluoropropyl group, a 3,3,4,4,5,5,6,6,6-nonafluorohexyl group), etc.

R² are preferably each independently CH₃-, C₂H₅-, C₃H₇-, CF₃CH₂-, CH₃CO-, CH₂=C(CH₃)-, CH₃CH₂C(CH₃)=N-, (CH₃)₂N-, (C₂H₅)₂N-, CH₂=C(OC₂H₅)-, (CH₃)₂C=C(OC₈H₁₇)-, or 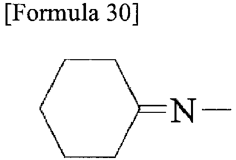 at each appearance, particularly preferably CH₃- or C₂H₅-.

n is preferably 1 or 2.

As the (B1) crosslinking agent having no reactive functional group, there may be further mentioned organosilicon compounds represented by the following (B1-1) to (B1-3). In one embodiment, the (B1) crosslinking agent having no reactive functional group may be mentioned a compound having at least two silanol group in one molecule as shown by the following formula (B1-1) or (B1-2).

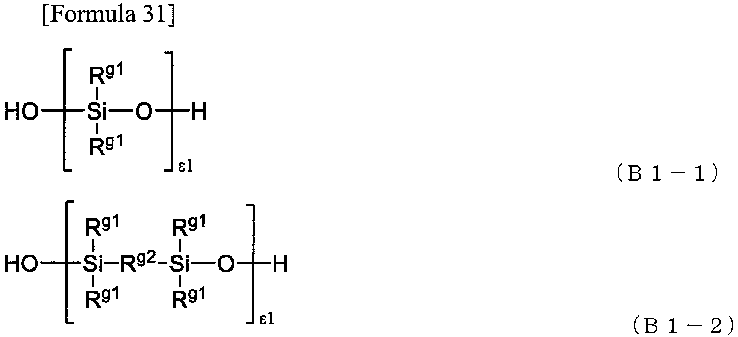

In the formulae (B1-1) and (B1-2), R^{g1}s are each independently a substituted or unsubstituted monovalent hydrocarbon group having 1 to 8 carbon atoms at each appearance. As R^{g1}, there may be specifically mentioned an alkyl group such as a methyl group, an ethyl group, a propyl group, an isopropyl group, a butyl group, an isobutyl group, a tert-butyl group, a pentyl group, a neopentyl group, a hexyl group, a heptyl group, an octyl group, a nonyl group, a decyl group, etc.; a cycloalkyl group such as a cyclopentyl group, a cyclohexyl group, a cycloheptyl group, etc.; an alkenyl group such as a vinyl group, an allyl group, a propenyl group, an isopropenyl group, a butenyl group, an isobutenyl group, a hexenyl group, a cyclohexenyl group, etc.; an aryl group such as a phenyl group, a tolyl group, a xylyl group, a naphthyl group, etc.; an aralkyl group such as a benzyl group, a phenylethyl group, a phenylpropyl group, etc.; and a group in which a part or whole of the hydrogen atoms of these groups is/are substituted by a halogen atom(s) (for example, a chloromethyl group, a bromoethyl group, a chloropropyl group, a trifluoropropyl group, a nonafluorohexyl group).

In the formula (B1-2), R^{g2}s are each independently a substituted or unsubstituted divalent hydrocarbon group having 1 to 20 carbon atoms at each appearance, and preferably having 2 to 10 carbon atoms. As R^{g2}, there may be specifically exemplified by an alkylene group such as a methylene group, an ethylene group, a propylene group, a methylethylene group, a butylene group, a hexamethylene group, etc.; a cycloalkylene group such as a cyclohexylene group, etc., an arylene group such as a phenylene group, a tolylene group, a xylylene group, a naphthylene group, a biphenylene group, etc.; a group in which a part or whole of the hydrogen atoms of these groups is/are substituted by a halogen atom(s); and a combination of these substituted or unsubstituted alkylene group(s) and an arylene group. Among these, the R^{g2} is preferably a methylene group, an ethylene group, a propylene group, a butylene group, a hexamethylene group, cyclohexylene group and phenylene group, and particularly preferably an ethylene group, propylene group, a butylene group and a phenylene group.

As the compound having a silanol group in the molecule, there may be mentioned a resinous compound constituted by bonding of one kind or a combination of two or more kinds of R^{g1}₃SiO_{1/2}, R^{g1}₂SiO_{2/2}, R^{g1}SiO_{3/2} and SiO_{4/2} units with a silanol group. The constitutional units in the above-mentioned resinous compound may be directly bonded to each other, or may be bonded to each other through a divalent or more of a hydrocarbon group.

In the formula (B1-1) or (B1-2), ε1s are each independently an integer of 1 or more at each appearance. ε1 is preferably 2 or more, more preferably 5 or more, preferably 50 or less, and more preferably 20 or less.

The compound represented by the formula (B1-1) or (B1-2) is preferably those having no PFPE¹ structure in the molecular structure.

The (B1) crosslinking agent having no reactive functional group can be an organosilicon compound represented by the formula (B1-3):

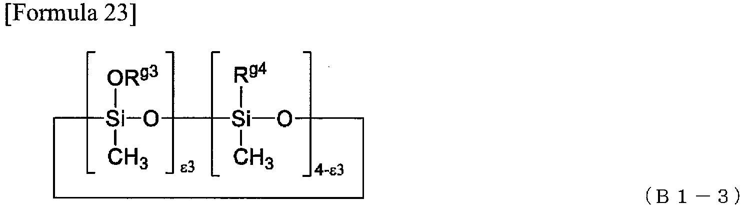

In the formula (B1-3), R^{g3} has the same meaning as that of R². The above-mentioned R^{g3} is a portion capable of reacting a hydroxyl group or a hydrolyzable group bonded to the Si atom of the PFPE-containing silane compound (a).

R^{g3} is preferably a monovalent organic group.

In the formula (B1-3), R^{g3} is more preferably each independently CH₃-, C₂H₅-, C₃H₇-, CF₃CH₂-, CH₃CO-, CH₂=C(CH₃)-, CH₃CH₂C(CH₃)=N-, (CH₃)₂N-, (C₂H₅)₂N-, CH₂=C(OC₂H₅)-, (CH₃)₂C=C(OC₈H₁₇)-, or 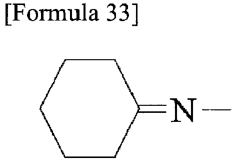 at each appearance.

In the formula (B1-3), R^{g4}s are each independently a monovalent organic group at each appearance. R^{g4} is preferably a substituted or unsubstituted monovalent hydrocarbon group, and more preferably a substituted or unsubstituted monovalent hydrocarbon group having 1 to 12 carbon atoms. R^{g4} may be specifically mentioned an alkyl group such as a methyl group, an ethyl group, a propyl group, an isopropyl group, a butyl group, an isobutyl group, a tert-butyl group, a pentyl group, a neopentyl group, a hexyl group, a heptyl group, an octyl group, a nonyl group, a decyl group, etc.; a cycloalkyl group such as a cyclopentyl group, a cyclohexyl group, a cycloheptyl group, etc.; an aryl group such as a phenyl group, a tolyl group, a xylyl group, a naphthyl group, etc.; an aralkyl group such as a benzyl group, a phenylethyl group, a phenylpropyl group, etc.; an alkenyl group such as a vinyl group, an allyl group, a propenyl group, a butenyl group, etc.; an alkynyl group such as an ethynyl group, a propynyl group, etc.; and a group in which a part or whole of the hydrogen atoms of these groups is/are substituted by a halogen atom(s) such as fluorine, chlorine, bromine, etc., (for example, a chloromethyl group, a bromoethyl group, a chloropropyl group, a trifluoropropyl group, a 3,3,4,4,5,5,6,6,6-nonafluorohexyl group, etc.

In the formula (B1-3), ε3 is 2 or 3.

The (B1) crosslinking agent having no reactive functional group is preferably a compound represented by the formula: R¹ₙSi(OR²)₄₋ₙ.

In a preferred embodiment, the (B 1) crosslinking agent having no reactive functional group may be exemplified by an alkoxy group-containing compound such as tetramethoxysilane, methyltrimethoxysilane, vinyltrimethoxysilane, phenyltrimethoxysilane, tetraethoxysilane, methyltriethoxysilane, vinyltriethoxysilane, phenyltriethoxysilane, tetrapropoxysilane, tetraisopropoxysilane, dimethyldimethoxysilane, vinylmethyldimethoxysilane, dimethyldiethoxysilane and 3-chloropropyltrimethoxysilane and a partially hydrolyzed condensate thereof; a substituted alkoxy group-containing compound such as tetrakis(2-ethoxyethoxy)silane, methyltris(2-methoxyethoxy)silane, vinyl(2-ethoxyethoxy)silane and phenyltris(2-methoxyethoxy)silane and a partially hydrolyzed condensate thereof; an enoxy group-containing compound such as methyltripropenoxysilane, methyltriisopropenoxysilane, vinyltriisopropenoxysilane, phenyltriisopropenoxysilane, dimethyldiisopropenoxysilane and methylvinyl-diisopropenoxysilane and a partially hydrolyzed condensate thereof; an acyloxy group-containing compound such as methyltriacetoxysilane and a partially hydrolyzed condensate thereof, etc. Component (B1) may be used one kind alone or may be used two or more kinds simultaneously.

### «(B2) Crosslinking agent having reactive functional group»

The (B2) crosslinking agent having a reactive functional group is a compound not only contributing to the crosslinking reaction (condensation reaction) of the PFPE-containing silane compound (a1) or (a2) but also functions as an adhesive imparting agent. As Component (B2), a compound represented by 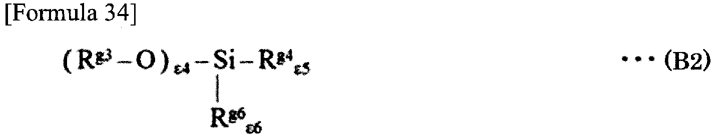 can be used.

In the formula (B2), R^{g3} and R^{g4} have the same meanings as defined above.

In the formula (B2), R^{g6}s each independently represent R^{g8}-R^{g7}- at each appearance.

R^{g7}s each independently represent a single bond, an oxygen atom or a divalent organic group at each appearance. The divalent organic group is as defined above.

R^{g7} is preferably an alkylene group having 1 to 10 carbon atoms, or a group having 1 to 10 carbon atoms and contains a nitrogen atom or an oxygen atom in the main chain.

R^{g7} is more preferably
an alkylene group having 1 to 3 carbon atoms,
CH₂CH₂-NH-CH₂CH₂CH₂, or
CH₂-O-CH₂CH₂CH₂.

R^{g8} is a reactive functional group. The above-mentioned R^{g8} is preferably each independently a primary amino group, an epoxy group, a (meth)acryloyl group, a (meth)acryloxy group, a mercapto group or an isocyanate group at each appearance, and more preferably a primary amino group.

In the formula (B2), ε4 is 2 or 3, and more preferably 3. In the formula (B2), ε5 is 0 or 1. In the formula (B2), ε6 is 1 or 2, and preferably 1. Provided that a sum of ε4, ε5 and ε6 is 4. Particularly preferablyε4 is 3, ε5 is 0, and ε6 is 1.

As the (B2) crosslinking agent having a reactive functional group, there may be exemplified by, for example, a substituted or unsubstituted amino group-containing silane such as 3-aminopropyltrimethoxysilane, 3-aminopropyltriethoxysilane, 3-aminopropyltriisopropoxysilane, 3-aminopropyltriacetamidesilane, N-(2-aminoethyl)-3-aminopropyltrimethoxysilane, N-(2-aminoethyl)-3-aminopropyltriethoxysilane, N-methyl-3-aminopropyltrimethoxysilane, N-phenyl-3-aminopropyltrimethoxysilane, N,N-dimethyl-3-aminopropyltrimethoxysilane; an epoxy group-containing silane such as 3-glycidoxypropyltrimethoxysilane, 3-glycidoxypropyltriethoxysilane, 3-glycidoxypropylmethyldimethoxysilane and 3,4-epoxycyclohexylethyltrimethoxysilane; an isocyanate group-containing silane such as 3-isocyanatepropyltrimethoxysilane, 3-isocyanatepropyltriethoxysilane and 3-isocyanatepropylmethyldimethoxysilane; a (meth)acryloxy group-containing silane such as 3-acryloxypropyltrimethoxysilane, 3-methacryloxypropyltrimethoxysilane, 3-acryloxypropylmethyldimethoxysilane, 3-methacryloxypropylmethyldimethoxysilane and 3-methacryloxypropylmethyldiethoxy-silane; a mercapto group-containing silane such as 3-mercaptopropyltrimethoxysilane; and a mixture or reactant of primary amino group-containing silane and epoxy group-containing silane.

In one embodiment, the crosslinking agent (b) does not have a group represented by PFPE¹ in the molecular chain.

In one embodiment, a molecular weight of the crosslinking agent (b) is 1,000 or less, preferably 600 or less, and more preferably 250 or less. The lower limit of the molecular weight of the crosslinking agent may be 90 or more, and may be 120 or more.

The crosslinking agent (b) may be used one kind alone or may be used two or more kinds simultaneously. When two or more kinds are used in combination, it may be either of the case where (B1) may be used in combination of two or more kinds, (B2) may be used in combination of two or more kinds, or (B1) and (B2) may be used in combination of each or more one kinds. From the viewpoint of crosslinking property, the crosslinking agent (b) is preferably contained at least (B1) with one or more kinds. Also, from the viewpoints of crosslinking property and adhesiveness to the substrate, it is preferable to use (B1) and (D) mentioned later, (B2) and (D) or (B1), (B2) and (D) in combination, and is more preferable to use (B1) and (D) in combination.

The crosslinking agent (b) can contain, for example, 0.1 part by mass or more, specifically contain 0.3 part by mass or more, and can contain 30 parts by mass or less, specifically 20 parts by mass or less, and more specifically 10 parts by mass or less based on 100 parts by mass of the total of the PFPE-containing silane compound (a1) and (a2) in the curable composition.

A total content of Components (B1) and (B2) based on the total of the PFPE-containing silane compound (a1) and (a2) is preferably 0.1% by mass or more from the viewpoint of crosslinking property, more preferably 0.3% by mass or more, and also preferably 30% by mass or less, more preferably 20% by mass or less, and particularly preferably 10% by mass or less.

A total content of Components (B1) and (B2) based on the total of the PFPE-containing silane compound (a1) and (a2) is preferably 0.1 to 30% by mass from the viewpoint of crosslinking property, more preferably 0.3 to 20% by mass, and particularly preferably 0.3 to 10% by mass.

A content of Component (B1) is preferably 10 to 100% by mass based on the sum of Components (B1) and (B2), more preferably 20 to 100% by mass, and particularly preferably 50 to 100% by mass. A preferred content of Components (B1) and (B2) to the total of the PFPE-containing silane compound (a1) and (a2) can be calculated from the preferred content of sum of Components (B1) and (B2) to the total of the PFPE-containing silane compound (a1) and (a2) and the preferred content of Component (B1) to the sum of Components (B1) and (B2), respectively.

The crosslinking agent (b) can contain, for example, 1 mol or more of the -OR² group, and specifically can contain 2 mol or more based on 1 mol of a hydroxyl group or a hydrolyzable group bonded to the Si atom of the PFPE-containing silane compound (a1) or (a2) in the curable composition. The crosslinking agent (b) can contain, for example, 30 mol or less of the -OR² group, specifically can contain 20 mol or less, and more specifically can contain 10 mol or less based on 1 mol of a hydroxyl group or a hydrolyzable group bonded to the Si atom of the PFPE-containing silane compound (a1) or (a2).

The crosslinking agent (b) can contain, for example, the -OR² group in the range of 1 to 30 mol, and specifically can contain in the range of 2 to 20 mol based on 1 mol of a hydroxyl group or a hydrolyzable group bonded to the Si atom of the PFPE-containing silane compound (a1) or (a2).

### <Condensation catalyst>

The condensation catalyst (c) is a component to promote hydrolysis condensation reaction of the PFPE-containing silane compound (a1) or (a2) and the crosslinking agent (b).

As the above-mentioned condensation catalyst, a metal-based catalyst, an organic acid-based catalyst, an inorganic acid-based catalyst, a base-based catalyst, etc., can be used. From the viewpoint of curing rate of the composition, as the condensation catalyst, it is preferable to be a metal-based catalyst.

As the metal atom contained in the above-mentioned metal-based catalyst, there may be mentioned, for example, titanium, zirconium, tin, etc.
In particular, organic tin compounds or alkoxy titaniums is preferred.

As an embodiment of the above-mentioned metal-based catalyst, a compound having an alkoxide (-O-R^{h}) as a ligand can be used.

When a compound having alkoxide is used as the above-mentioned metal-based catalyst, as R^{h}, an alkyl group having 1 to 4 carbon atoms is preferable. When such a catalyst is used, the condensation reaction is more promoted.

When a compound having alkoxide is used as the above metal-based catalyst, as the above-mentioned R^{h}, an alkyl group having 1 to 3 carbon atoms is more preferable. When a catalyst having an alkyl group as mentioned above is used, the condensation reaction is particularly promoted. The above-mentioned catalyst is easily dissolved or dispersed in the curable composition so that it can contribute to promote a uniform reaction. The above-mentioned catalyst contains less foreign substances so that it can contribute to form a cured product of a transparent curable composition.

Preferable metal-based catalyst may be exemplified by a carboxylic acid metal salt such as iron octoate, manganese octoate, zinc octoate, tin naphthate, tin caprylate and tin oleate; an organic tin compound such as dibutyltin diacetate, dibutyltin dioctoate, dibutyltin dilaurate, dibutyltin dioleate, diphenyltin diacetate, dibutyltin oxide, dibutyltin dimethoxide, dibutylbis(triethoxysiloxy)tin, dioctyltin dilaurate and dimethyltin dineodecanoate; an organic titanium compound such as tetraethoxy titanium, tetrapropoxy titanium, tetraisopropoxy titanium, tetra-n-butoxy titanium, tetraisobutoxy titanium, diisopropoxy titanium bis(ethylacetoacetate) and 1,3-propanedioxy titanium bis(ethylacetoacetate); organic aluminum such as aluminum trisacetylacetonate, aluminum trisethyl acetoacetate, diisopropoxyaluminum ethyl acetoacetate and triethoxyaluminum, etc.; and an organic zirconium compound such as zirconium tetraacetylacetonate, tetraisopropoxy zirconium, tetrapropoxy zirconium, tetra-n-butoxy zirconium, tetraisobutoxy zirconium, tetra-n-propoxy zirconium, tetrabutoxy zirconium, tributoxy zirconium acetylacetonate, tributoxy zirconium stearate, etc.

As the above-mentioned organic acid-based catalyst, there may be mentioned, for example, a compound having carboxylic acid, sulfonic acid or phosphoric acid, and specifically mentioned acetic acid, trifluoroacetic acid, methanesulfonic acid, toluenesulfonic acid, an alkylphosphoric acid, etc.

As the above-mentioned inorganic acid-based catalyst, there may be mentioned, for example, hydrochloric acid, sulfuric acid, etc.

As the above-mentioned base-based catalyst, there may be mentioned, for example, amine compounds such as ammonia, triethylamine, diethylamine; a dialkylhydroxylamine such as dimethylhydroxyamine, diethylhydroxylamine, etc.; and a guanidyl compound such as tetramethylguanidine, guanidyl group-containing silane or siloxane, etc.; and the like.

The condensation catalyst is preferably contained in the curable composition in an amount of 0.01 to 10.0 parts by mass, and more preferably 0.03 to 5.0 parts by mass based on 100 parts by mass of the total of the PFPE-containing silane compound (a1) and (a2).

The condensation catalyst may be used one kind alone or may be used two or more kinds simultaneously.

### (Additional components)

The curable composition of the present invention may contain additional components other than the above-mentioned PEPE-containing silane compound (a1) and (a2), the crosslinking agent (b) and the condensation catalyst (c) as long as the effects of the present invention are not impaired. Such components may be mentioned (D) an adhesiveness imparting agent, (E) a filler, (F) a solvent, (G) a PFPE-containing silane compound other than the PFPE-containing silane compound (a1) and (a2), (H) various kinds of additives, etc. (hereinafter, they are sometimes abbreviated to as "Component (D)", etc.).

### <(D) Adhesive-imparting agent Compound containing two or more alkoxysilyl groups in one molecule, and group linking between alkoxysilyl groups is -O- group; and group having group other than siloxane bond>

A compound used as an adhesive-imparting agent in the curable composition of the present invention is a compound containing two or more alkoxysilyl groups in one molecule, and a group linking between the alkoxysilyl groups being an -O- group; and a group other than a group having a siloxane bond, or a partially hydrolyzed condensate thereof (provided that (a1) and (a2) are excluded.) (hereinafter, also referred to as an adhesive-imparting agent containing two or more alkoxysilyl groups in one molecule.). Component (D) is a component improving adhesiveness of the cured product of the composition to a substrate such as glass, metal, plastic, etc. Component (D) does not have the perfluoro (poly) ether portion.

Component (D) is a compound which undergoes a crosslinking reaction (condensation reaction) with a hydroxyl group or a hydrolyzable group bonded to the Si atom of the PFPE-containing silane compound (a1) or (a2) or an Si-OR² group of the crosslinking agent (b) at the time of curing the curable composition. By containing Component (D), adhesiveness of the cured product of the composition to a substrate such as glass, metal, plastic, etc., is markedly improved.

Component (D) may have a reactive functional group, or may not have the same. In Component (D), the group linking between the alkoxysilyl groups is an -O-group; and a group having a group other than a siloxane bond. From the viewpoint of adhesiveness to a substrate, the group that links between the alkoxysilyl groups is preferably a group containing a nitrogen atom and/or a carbonyl group, and more preferably a group further containing, in addition to a nitrogen atom and/or a carbonyl group, an -O- group, an alkenylene group and/or an alkylene group.

As the group linking between the alkoxysilyl groups of Component (D), it is further preferably a group containing 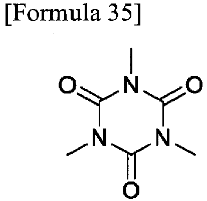 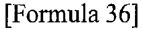 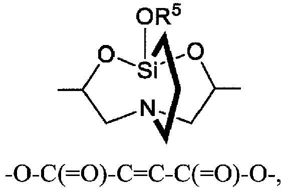 or 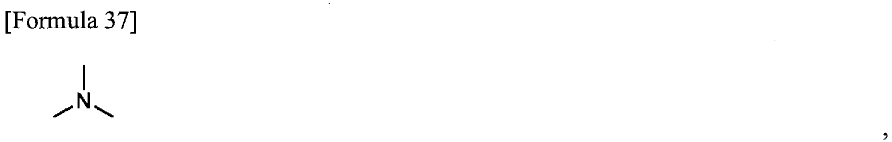 particularly preferably 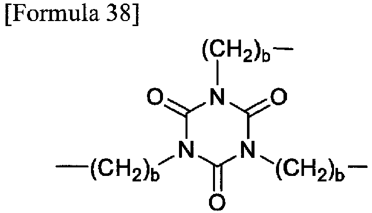 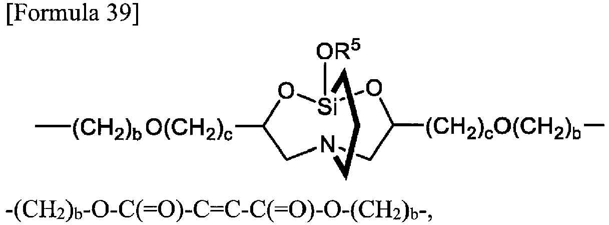 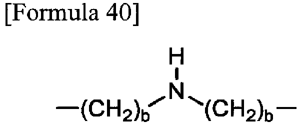 or 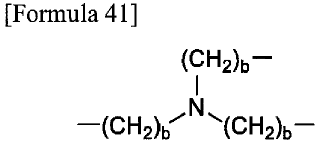 (wherein, R⁵s are each independently an alkyl group having 1 to 4 carbon atoms at each appearance, preferably a methyl group or an ethyl group, "b"s and "c"s are each independently an integer of 1 to 8 at each appearance, and preferably an integer of 1 to 4.).

From the viewpoint of adhesiveness to the substrate, Component (D) is preferably a compound selected from the group consisting of an alkoxysilyl group-containing isocyanurate compound, an alkoxysilyl group-containing carbasilatrane compound, an alkoxysilyl group-containing fumaric acid ester compound and an alkoxysilyl group-containing amine compound, and particularly preferably an alkoxysilyl group-containing isocyanurate compound or an alkoxysilyl group-containing carbasilatrane compound.

As the alkoxysilyl group-containing isocyanurate compound, there may be mentioned, for example, tris(3-trialkoxysilylpropyl)isocyanurate such as tris(3-trimethoxysilylpropyl)isocyanurate, tris(3-triethoxysilylpropyl)isocyanurate, etc.

As the alkoxysilyl group-containing carbasilatrane compound, there may be mentioned, for example, the following compounds:

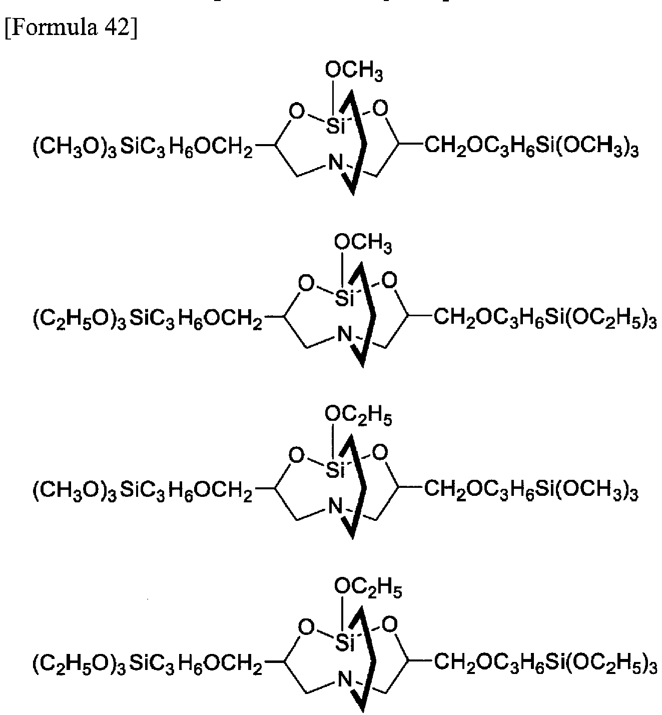

As the alkoxysilyl group-containing fumaric acid ester compound, there may be mentioned, for example, bis(3-trimethoxysilylpropyl)fumarate, bis(3-triethoxy-silylpropyl)fumarate, etc. As the alkoxysilyl group-containing amine compound, there may be mentioned bis(3-trimethoxysilylpropyl)amine, bis(3-triethoxysilylpropyl)amine, tris(3-trimethoxysilylpropyl)amine, tris(3-triethoxysilylpropyl)amine, etc.

Component (D) may be a compound in which a part of the hydrogen atom(s) is substituted by a fluorine atom(s). Component (D) may be used one kind alone or may be used two or more kinds simultaneously.

A content of Component (D) based on the total of the PFPE-containing silane compound (a1) and (a2) is preferably 0.01% by mass or more from the viewpoint of adhesiveness to the substrate, more preferably 0.02% by mass or more, and further preferably 0.05% by mass or more, and also preferably 30% by mass or less, more preferably 20% by mass or less, and further preferably 10% by mass or less.

The content of Component (D) based on the total of the PFPE-containing silane compound (a1) and (a2) is preferably 30% by mass or less from the viewpoint of adhesiveness to the substrate, more preferably 0.01 to 30% by mass, further preferably 0.02 to 20% by mass, and particularly preferably 0.05 to 10% by mass.

The content of Component (D) is preferably 0 to 90% by mass based on a sum of Components (B) and (D), more preferably 1 to 70% by mass, and particularly preferably 1 to 50% by mass.

Component (D) can contain, for example, 1 mol or more of an alkoxysilyl group, and specifically 2 mol or more based on 1 mol of a hydroxyl group or a hydrolyzable group bonded to the Si atom of the PFPE-containing silane compound (a1) or (a2) in the curable composition. Component (D) can contain, for example, 30 mol or less of an alkoxysilyl group, specifically 20 mol or less, and more specifically 10 mol or less based on 1 mol of a hydroxyl group or a hydrolyzable group bonded to the Si atom of the PFPE-containing silane compound (a1) or (a2) in the curable composition.

Component (D) can contain an alkoxysilyl group, for example, in the range of 1 to 30 mol, and specifically in the range of 2 to 20 mol based on 1 mol of a hydroxyl group or a hydrolyzable group bonded to the Si atom of the PFPE-containing silane compound (a1) or (a2) .

### <(E) Filler>

The curable composition may further contain a (E) filler. As the (E) filler, there may be exemplified by oxides such as fumed silica, calcined silica, silica aerogel, precipitated silica, diatomaceous earth, pulverized silica, fused silica, quartz powder, fumed titanium oxide, iron oxide, zinc oxide, titanium oxide, aluminum oxide, etc.; materials on the surface of which is treated with a hydrophobic agent such as trimethylchlorosilane, dimethyldichlorosilane, hexamethyldisilazane, octamethylcyclotetrasiloxane, etc.; silicates such as calcium carbonate, magnesium carbonate, zinc carbonate, etc.; silicates such as aluminosilicate, calcium silicate, etc.; talc; complex oxide such as glass wool, mica fine powder, etc.; conductive fillers such as carbon black, copper powder, nickel powder, etc.; synthetic resin powders such as polymethylsilsesquioxane, polystyrene, polyvinyl chloride, polypropylene, etc.; and fibrous fillers such as asbestos, glass fibers, organic fibers, etc., and can be selected depending on coating workability, and physical properties required for a rubber-like elastic body obtained by curing.

When the (E) filler is a particulate filler, an average particle diameter thereof is preferably 100 µm or less from the viewpoints of dispersibility of (E), fluidity of the curable composition and high mechanical strength of the cured product, more preferably 50 µm, and particularly preferably 10 µm or less. The measured value of the average particle diameter is a median diameter (d50) measured by the laser diffraction/scattering method.

The (E) filler can be contained in an amount of, for example, 200 parts by mass or less based on 100 parts by mass of the total of the PFPE-containing silane compound (a1) and (a2) in the curable composition, specifically can be contained 1 to 100 parts by mass, and more specifically can be contained 1 to 50 parts by mass.

### (F) Solvent

The curable composition may contain a solvent(s). In this case, depending on the use and purpose of the curable composition, it can be used by dissolving in a suitable solvent (for example, a fluorine atom-containing solvent) with a desired concentration. A concentration of the above-mentioned solvent may be, for example, 80 parts by mass or less based on 100 parts by mass of the curable composition, may be 50 parts by mass or less, may be 30 parts by mass or less, and may be 20 parts by mass or less. From the viewpoint of adjusting a viscosity of the curable composition, it is preferable to contain a solvent. By containing the solvent, handleability of the curable composition can be good. In addition, a shape of a cured product formed by the curable composition can be easily controlled, and for example, formation of a cured product with a large thickness can be facilitated.

As the above-mentioned solvent, there may be mentioned, for example,:
a fluorine atom-containing solvent selected from the group consisting of perfluorohexane, CF₃CF₂CHCl₂, CF₃CH₂CF₂CH₃, CF₃CHFCHFC₂F₅, 1,1,1,2,2,3,3,4,4,5,5,6,6-tridecafluorooctane, 1,1,2,2,3,3,4-heptafluorocyclopentane ((ZEORORA H (trade name), etc.), C₄F₉OCH₃, C₄F₉OC₂H₅, CF₃CH₂OCF₂CHF₂, C₆F₁₃CH=CH₂, xylene hexafluoride, perfluorobenzene, methyl pentadecafluoroheptyl ketone, trifluoroethanol, pentafluoropropanol, hexafluoroisopropanol, HCF₂CF₂CH₂OH, methyltrifluoromethanesulfonate, trifluoroacetic acid and CF₃O(CF₂CF₂O)_{w1}(CF₂O)_{w2}CF₂CF₃ [wherein, w1 and w2 are each independently an integer of 0 or more and 1,000 or less, and the order of existence of each recurring units enclosed with parentheses to which w1 or w2 are applied is arbitrary in the formula, provided that a sum of w1 and w2 is 1 or more.], 1,1-dichloro-2,3,3,3-tetrafluoro-1-propene, 1,2-dichloro-1,3,3,3 -tetrafluoro-1 -propene, 1,2-dichloro-3,3,3-trifluoro-1-propene, 1,1-dichloro-3,3,3-trifluoro-1-propene, 1,1,2-trichloro-3,3,3-trifluoro-1-propene, 1,1,1,4,4,4-hexafluoro-2-butene, ethyl perfluorobutyl ether and methyl perfluorobutyl ether, etc. These solvents can be used alone, or as a mixture of two or more kinds.

Incidentally, when the cured product obtained from the curable composition is adhered to various kinds of substrates, various kinds of primers can be used in combination.

In one embodiment, when the curable composition is used, the composition may be used by further diluting with a solvent depending on the use thereof and the purpose. As the solvent to be used for dilution, the fluorine atom-containing solvent exemplified above can be used. For example, it may be used by dissolving with 1,3-bis(trifluoromethyl)benzene, Fluorinert (available from 3M Company), perfluorobutyl methyl ether, perfluorobutyl ethyl ether, etc., with a desired concentration as the solvent. In particular, for the use of a thin film coating, it is preferable to use the above-mentioned solvent.

### (G) PFPE-containing silane compound other than the PFPE-containing silane compound (a1) or (a2)

The curable composition can further contain a PFPE-containing silane compound other than the PFPE-containing silane compound (a1) or (a2). The curable composition of the present invention can contain a compound represented by the following formula (G-1), (G-2), (G-3) or (G-4) (hereinafter, it may be also referred to as "PFPE-containing silane compound (b)").

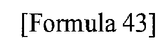

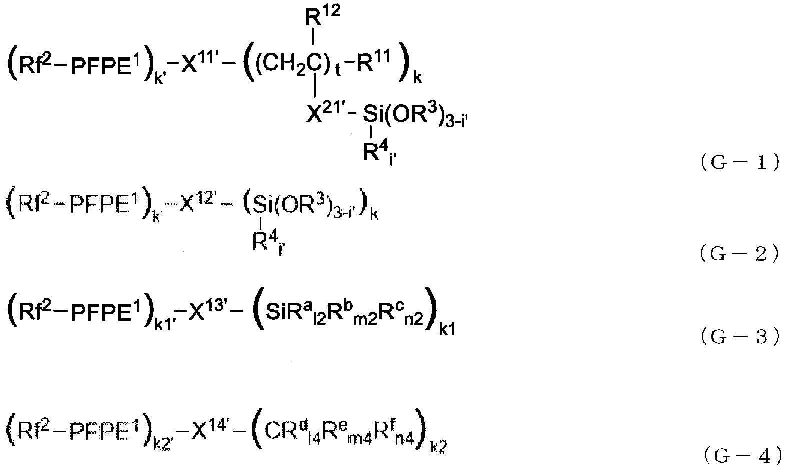

In the formulae (G-1), (G-2), (G-3) and (G-4), with regard to the portion that overlaps with the description regarding (A), (B), (C) and (D), the description may be sometimes omitted.

In the above-mentioned formulae, Rf²s each independently represent an alkyl group having 1 to 16 carbon atoms which may be substituted by one or more fluorine atoms at each appearance.

The "alkyl group having 1 to 16 carbon atoms" in the above-mentioned alkyl group having 1 to 16 carbon atoms which may be substituted by one or more fluorine atoms may be linear or may be branched, preferably linear or branched having 1 to 6 carbon atoms, particularly an alkyl group having 1 to 3 carbon atoms, and more preferably a linear alkyl group having 1 to 3 carbon atoms.

The above-mentioned Rf² is preferably an alkyl group having 1 to 16 carbon atoms substituted by 1 or more fluorine atoms, more preferably a CF₂H-C₁₋₁₅ fluoroalkylene group or a C₁₋₁₆ perfluoroalkyl group, and further preferably a C₁₋₁₆ perfluoroalkyl group.

The perfluoroalkyl group having 1 to 16 carbon atoms may be linear or may be branched, preferably linear or branched having 1 to 6 carbon atoms, particularly a perfluoroalkyl group having 1 to 3 carbon atoms, more preferably a linear perfluoroalkyl group having 1 to 3 carbon atoms, and specifically -CF₃, -CF₂CF₃, or -CF₂CF₂CF₃.

In the formula (G-1), k is an integer of 1 to 9, and k' is an integer of 1 to 9. k and k' can vary depending on the number of the valence of X^{11'}. In the formula (G-1), a sum of k and k' is the same as the number of the valence of X^{11'}. For example, when X^{11'} is a 10 valent organic group, a sum of k and k' is 10 and, for example, it can take k is 9 and k' is 1, k is 5 and k' is 5, or k is 1 and k' is 9. Also, when X^{11'} is a divalent organic group, k and k' are 1. In the formula (G-1), when X^{11'} is a single bond, k and k' are 1.

The above-mentioned X^{11'} is preferably 2 to 7 valent, more preferably 2 to 4 valent, and further preferably a divalent organic group.

In one embodiment, X^{11'} is a 2 to 4 valent organic group, k is 1 to 3, and k' is 1.

In another embodiment, X^{11'} is a divalent organic group, k is 1, and k' is 1.

In the above-mentioned formula (G-1), i's are each independently an integer of 0 to 3 at each appearance, preferably 0 to 2, and more preferably 0. It is preferable that, in the formula, at least one of i' is an integer of 0 to 2, that is, not all i's are 3 at the same time. In other words, in the formula (G-1), at least one OR³ is present.

In the formula (G-2), k is an integer of 1 to 9, and k' is an integer of 1 to 9. k and k' can vary depending on the number of the valence of X^{12'}. In the formula (G-2), a sum of k and k' is the same as the number of the valence of X^{12'}. For example, when X^{12'} is a 10 valent organic group, a sum of k and k' is 10 and, for example, it can take k is 9 and k' is 1, k is 5 and k' is 5, or k is 1 and k' is 9. Also, when X^{12'} is a divalent organic group, k and k' are 1. In the formula (G-2), when X^{12'} is a single bond, k and k' are 1.

The above-mentioned X^{12'} is preferably a 2 to 7 valent, more preferably a 2 to 4 valent, and further preferably a divalent organic group.

In one embodiment, X^{12'} is a 2 to 4 valent organic group, k is 1 to 3, and k' is 1.

In another embodiment, X^{12'} is a divalent organic group, k is 1, and k' is 1.

In the formula (G-2), i' has the same meaning as defined in (G-1).

In the above-mentioned formula (G-3), k1 is an integer of 1 to 9, and k1' is an integer of 1 to 9. k1 and k1' can vary depending on the number of the valences of X^{13'}. In the formula (G-3), a sum of k1 and k1' is the same as the number of the valence of X^{13'}. For example, when X^{13'} is a 10 valent organic group, a sum of k1 and k1' is 10 and, for example, it can take k1 is 9 and k1' is 1, k1 is 5 and k1' is 5, or k1 is 1 and k1' is 9. Also, when X^{13'} is a divalent organic group, k1 and k1' are 1. In the formula (G-3), when X^{13'} is a single bond, k1 and k1' are 1.

The above-mentioned X^{13'} is preferably a 2 to 7 valent, more preferably a 2 to 4 valent, further preferably a divalent organic group.

In one embodiment, X^{13'} is a 2 to 4 valent organic group, k1 is 1 to 3, and k1' is 1.

In another embodiment, X^{13'} is a divalent organic group, k1 is 1, and k1' is 1.

In the above-mentioned formula (G-4), k2 is an integer of 1 to 9, and k2' is an integer of 1 to 9. k2 and k2' can vary depending on the number of the valences of X^{14'}. In the formula (G-4), a sum of k2 and k2' is the same as the number of the valence of X^{14'}. For example, when X^{14'} is a 10 valent organic group, a sum of k2 and k2' is 10 and, for example, it can take k2 is 9 and k2' is 1, k2 is 5 and k2' is 5, or k2 is 1 and k2' is 9. Also, when X^{14'} is a divalent organic group, k2 and k2' are 1. In the formula (G-4), when X^{14'} is a single bond, k2 and k2' are 1.

The above-mentioned X^{14'} is preferably a 2 to 7 valent, more preferably a 2 to 4 valent, further preferably a divalent organic group.

In one embodiment, X^{14'} is a 2 to 4 valent organic group, k2 is 1 to 3, and k2' is 1.

In another embodiment, X^{14'} is a divalent organic group, k2 is 1, and k2' is 1.

In one embodiment, the PFPE-containing silane compound (b) can be a compound represented by the formula (G-1), (G-3) or (G-4). By using such a silane compound, adhesiveness to a substrate can be more improved.

In one embodiment, the PFPE-containing silane compound (b) has two or more Si atoms having a hydroxyl group or a hydrolyzable group at the terminal, preferably having 3 or more.

In one embodiment, in the curable composition, an amount of the compound represented by the formulae (G-1), (G-2), (G-3) and (G-4) is 0.1 mol% or more and 35 mol% or less based on a sum of the compound represented by the formulae (A), (B), (C) and (D) (hereinafter, also referred to as "Component (1)") and the compound represented by the formulae (G-1), (G-2), (G-3) and (G-4) (hereinafter, also referred to as "Component (2)"). A lower limit of the compound represented by the formulae (G-1), (G-2), (G-3) and (G-4) based on a sum of Component (1) and Component (2) can be preferably 0.1 mol%, more preferably 0.2 mol%, further preferably 0.5 mol%, further more preferably 1 mol%, particularly preferably 2 mol%, and specifically 5 mol%. An upper limit of the compound represented by the formulae (G-1), (G-2), (G-3) and (G-4) based on a sum of Component (1) and Component (2) can be preferably 35 mol%, more preferably 30 mol%, further preferably 20 mol%, and further more preferably 15 mol% or 10 mol%. A content of the compound represented by the formulae (G-1), (G-2), (G-3) and (G-4) based on a sum of Component (1) and Component (2) is preferably 0.1 mol% or more and 30 mol% or less, more preferably 0.1 mol% or more and 20 mol% or less, further preferably 0.2 mol% or more and 10 mol% or less, further more preferably 0.5 mol% or more and 10 mol% or less, and particularly preferably 1 mol% or more and 10 mol% or less, and for example, 2 mol% or more and 10 mol% or less or 5 mol% or more and 10 mol% or less. By making the contents of Component (1) and Component (2) within such ranges, the curable composition can contribute to form a cured product having good friction durability.

In the curable composition, a combination of Component (1) and Component (2) is preferably a combination of a compound represented by the formula (A) and a compound represented by the formula (G-1), a combination of a compound represented by the formula (B) and a compound represented by the formula (G-2), a combination of a compound represented by the formula (C) and a compound represented by the formula (G-3), or a combination of a compound represented by the formula (D) and a compound represented by the formula (G-4).

The compounds represented by the formula (A) and the formula (G-1) are preferably "t" of 2 or more, more preferably an integer of 2 to 10, and further preferably an integer of 2 to 6. By making "t" 2 or more, a plurality of Si atoms having OR³ are present, and higher durability (for example, friction durability) can be obtained in the cured product formed by the curable composition.

The compounds represented by the formula (C) and the formula (G-3) are preferably 12 of 2 or 3, and more preferably 3.

In a preferred embodiment, the compound represented by the formula (C) has a structure represented by -Si-(Z³-SiR⁷²₃)₂ or -Si-(Z³-SiR⁷²₃)₃ at the terminal, further preferably has a structure represented by -Si-(Z³-SiR⁷²₃)₃; the compound represented by the formula (G-3) has a structure represented by -Si-(Z³-SiR⁷²₃)₂ or -Si-(Z³-SiR⁷²₃)₃ at the terminal, and further preferably has a structure represented by -Si-(Z³-SiR⁷²₃)₃. By making the terminal such a structure, higher durability (for example, friction durability) can be obtained in the cured product formed by the curable composition.

As the group represented by the above-mentioned -Si-(Z³-SiR⁷²₃)₂, there may be specifically mentioned
a group in which R^{a} is represented by -Z³-SiR⁷²₃, and a sum of m1 and n1 is 1 in -Si-R^{a}₂R^{b}ₘ₁R^{c}ₙ₁,
a group in which R^{a} is represented by -Z³-SiR⁷²₃, and a sum of m2 and n2 is 1 in -Si-R^{a}₂R^{b}ₘ₂R^{c}ₙ₂, or
a group in which the terminal of R⁷¹ is represented by -Z³-SiR⁷²₃, and a sum of q1 and r1 is 1 in -Si-R⁷¹₂R⁷²_{q1}R⁷³ᵣ₁.

The compounds represented by the formula (D) and the formula (G-4) are preferably m4 of 2 or 3, and more preferably 3.

In a preferred embodiment, the compound represented by the formula (D) has a -C-(Y-SiR⁸⁵₃)₂ (specifically, -C-(Y-SiR⁸⁵₃)₂R⁸³) or -C-(Y-SiR⁸⁵₃)₃ structure at the terminal, further preferably has a -C-(Y-SiR⁸⁵₃)₃ structure; and the compound represented by the formula (G-4) has a -C-(Y-SiR⁸⁵₃)₂ (specifically, -C-(Y-SiR⁸⁵₃)₂R⁸³) or -C-(Y-SiR⁸⁵₃)₃ structure at the terminal, and further preferably has a -C-(Y-SiR⁸⁵₃)₃ structure. By making the terminal such a structure, the curable composition contributes to form a cured product having higher durability (for example, friction durability).

As the PFPE-containing silane compound (b), it can be a compound represented by the following formula (G-5).

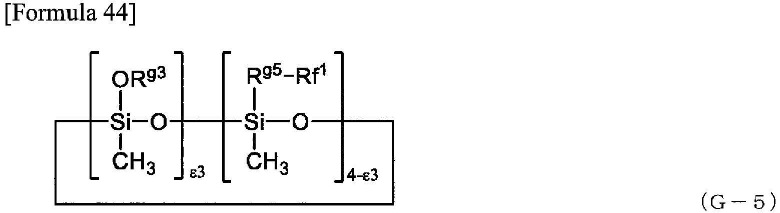

In the formula (G-5), OR^{g3} represents a hydrolyzable group. R^{g3}s are each independently and preferably CH₃-, C₂H₅-, C₃H₇-, CF₃CH₂-, CH₃CO-, CH₂=C(CH₃)-, CH₃CH₂C(CH₃)=N-, (CH₃)₂N-, (C₂H₅)₂N-, CH₂=C(OC₂H₅)-, (CH₃)₂C=C(OC₈H₁₇)-, or 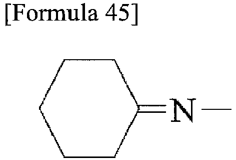 at each appearance, and more preferably CH₃- or C₂H₅-.

In the formula (G-5), ε3 is 2 or 3.

Rf¹ is a monovalent fluorinated (poly)ether group. As Rf¹, there may be exemplified by the structure in which CF₃O-, CF₃CF₂O-, CF₃CF₂CF₂O-, (CF₃)₂CFO-, or CF₃CF₂CF₂CF₂O-, etc., is bonded to the CF₂ terminal of the above-mentioned PFPE¹.

R^{g5} is a divalent organic group. The divalent organic group has the same meaning as defined above. R^{g5} can be a substituted or unsubstituted divalent hydrocarbon group which may contain, for example, one kind or two or more kinds of an oxygen atom, a nitrogen atom, a silicon atom and a sulfur atom, and may contain an amide bond or a sulfonamide bond. The divalent hydrocarbon group preferably has a number of the carbon atoms of 2 to 20. Here, specific examples of the substituted or unsubstituted divalent hydrocarbon group which does not intervene an oxygen atom, a nitrogen atom, a silicon atom or a sulfur atom and does not contain an amide bond or a sulfonamide bond may be mentioned an alkylene group such as an ethylene group, a propylene group, a methylethylene group, a butylene group, a hexamethylene group, etc.; a cycloalkylene group such as a cyclohexylene group, etc.; an arylene group such as a phenylene group, a tolylene group, a xylylene group, a naphthylene group, a biphenylene group, etc.; a combination of these alkylene groups and arylene groups; and a group in which some or all of the hydrogen atom of these alkylene groups and arylene groups are substituted by a halogen atom.

In the above-mentioned divalent hydrocarbon group, an oxygen atom can be contained as -O-, a nitrogen atom can be contained as -NR^{g51}- (R^{g51} is a hydrogen atom or an alkyl group having 1 to 10 carbon atom or an aryl group) or -N=, a silicon atom can be contained as -SiR^{g52}R^{g53}- (R^{g52}s and R^{g53}s are each independently an alkyl group having 1 to 10 carbon atoms or an aryl group at each appearance), and a sulfur atom can be contained as -S-. In addition, in the above-mentioned divalent hydrocarbon group, the amide bond can be contained as -C(=O)NR^{g51}- (R^{g51} is the same as mentioned above), and the sulfonamide bond can be contained as -SO₂NR^{g51}- (R^{g51} is the same as mentioned above). Specific examples of such a divalent hydrocarbon group may be mentioned the following. Incidentally, in the following formula, Me represents a methyl group and Ph represents a phenyl group, and in the following respective formulae, the Rf¹ group is bonded to the left side. 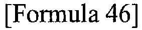 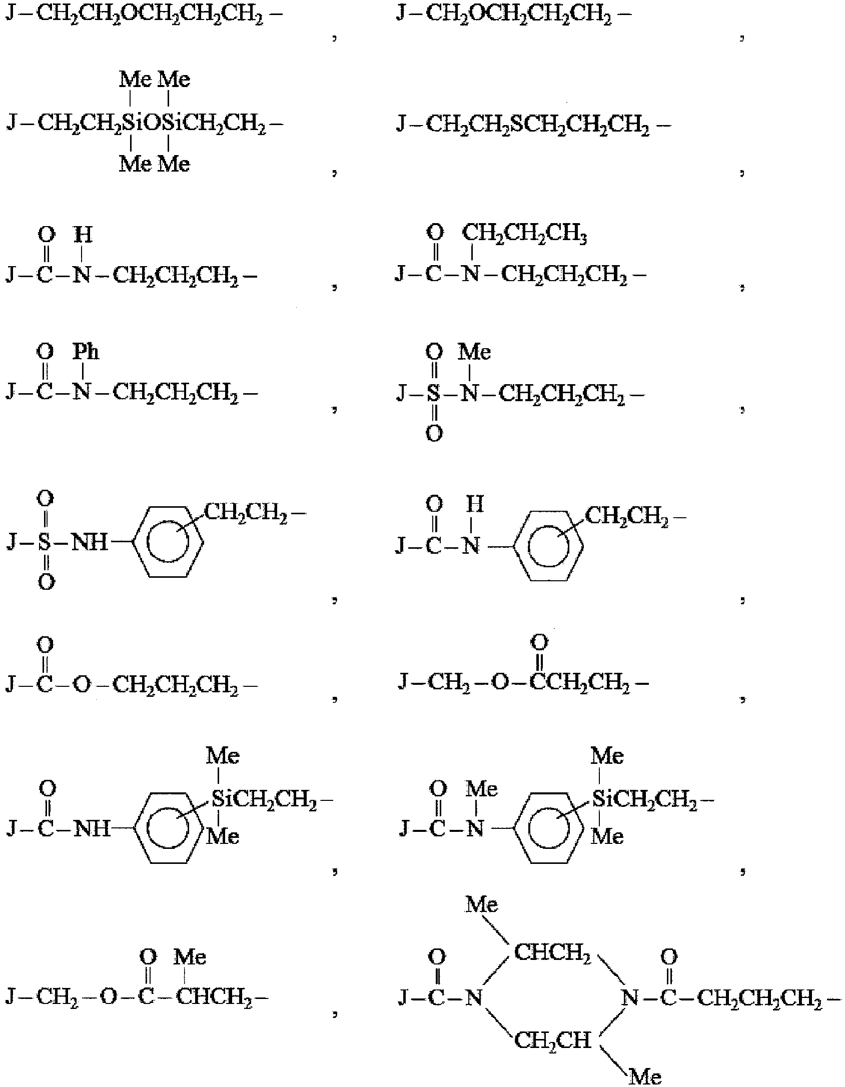 [J represents a bonded portion]

### (H) Various kinds of additives

The curable composition may further contain various kinds of additives. The various kinds of additives are not particularly limited, and may contain, for example, an (unreactive) fluoropolyether compound which can be understood as fluorine-containing oil, preferably a perfluoro(poly)ether compound (hereinafter, referred to as "fluorine-containing oil"), a stabilizer (dehydrating agents, molecular sieves, magnesium sulfate or methyl orthoformate), viscosity modifiers, fluorescent agents, colorants, heat resistance improvers, cold resistance improvers, rust preventives, liquid reinforcing agents, etc.

The above-mentioned fluorine-containing oil is not particularly limited and may be mentioned, for example, a compound (perfluoro(poly)ether compound) represented by the following general formula (III).

Rf⁵-(OC₄F₈)_{a'}-(OC₃F₆)_{b'}-(OC₂F₄)_{c'}-(OCF₂)_{d'}-Rf⁶ ··· (III)

In the formula, Rf⁵ represents an alkyl group having 1 to 16 carbon atoms which may be substituted by one or more fluorine atoms (preferably a C₁₋₁₆ perfluoroalkyl group), Rf⁶ represents an alkyl group having 1 to 16 carbon atoms which may be substituted by one or more fluorine atoms (preferably a C₁₋₁₆ perfluoroalkyl group), a fluorine atom or a hydrogen atom, Rf⁵ and Rf⁶ are more preferably each independently a C₁₋₃ perfluoroalkyl group.

a', b', c' and d' each represent a number of recurring units of four kinds of perfluoro(poly)ethers constituting the main skeleton of the polymer, each independently an integer of 0 or more and 300 or less, and a sum of a', b', c' and d' is at least 1, preferably 1 to 300, and more preferably 20 to 300. The order of existence of each repeating unit enclosed with parentheses by applying the subscripts a', b', c' or d' is arbitrary in the formula. Among these recurring units, -(OC₄F₈)- may be any of -(OCF₂CF₂CF₂CF₂)-, -(OCF(CF₃)CF₂CF₂)-, -(OCF₂CF(CF₃)CF₂)-, -(OCF₂CF₂CF(CF₃))-, -(OC(CF₃)₂CF₂)-, -(OCF₂C(CF₃)₂)-, -(OCF(CF₃)CF(CF₃))-, -(OCF(C₂F₅)CF₂)- and -(OCF₂CF(C₂F₅))-, preferably -(OCF₂CF₂CF₂CF₂)-. -(OC₃F₆)-may be any of -(OCF₂CF₂CF₂)-, -(OCF(CF₃)CF₂)- and -(OCF₂CF(CF₃))-, and preferably -(OCF₂CF₂CF₂)-. -(OC₂F₄)- may be any of -(OCF₂CF₂)- and -(OCF(CF₃))-, and preferably -(OCF₂CF₂)-.

Examples of the perfluoro(poly)ether compound represented by the general formula (III) may be mentioned a compound (it may be one kind or a mixture of two or more kinds) represented by any of the following general formulae (IIIa) and (IIIb).

Rf⁵-(OCF₂CF₂CF₂)_{b"}-Rf⁶ ... (IIIa)

Rf⁵-(OCF₂CF₂CF₂CF₂)_{a‴}-(OCF₂CF₂CF₂)_{b‴}-(OCF₂CF₂)_{c‴}-(OCF₂)_{d‴}-Rf⁶ ··· (IIIb)

In these formulae, Rf⁵ and Rf⁶ are as defined above; in the formula (IIIa), b" is an integer of 1 or more and 100 or less; in the formula (IIIb), a‴ and b‴ are each independently an integer of 1 or more and 30 or less, and c‴ and d‴ are each independently an integer of 1 or more and 300 or less. The order of existence of each repeating unit enclosed with parentheses by applying the subscripts a‴, b‴, c‴, d‴ is arbitrary in the formula.

The above-mentioned fluorine-containing oil may have a number average molecular weight of 1,000 to 30,000. In particular, a number average molecular weight of the compound represented by the formula (IIIa) is preferably 2,000 to 8,000. In one embodiment, a number average molecular weight of the compound represented by the formula (IIIb) is 3,000 to 8,000. In another embodiment, a number average molecular weight of the compound represented by the formula (IIIb) is 8,000 to 30,000.

In the curable composition, the fluorine-containing oil can be contained in an amount of, for example, 0 to 500 parts by mass, preferably 0 to 100 parts by mass, more preferably 1 to 50 parts by mass, and further preferably 1 to 5 parts by mass based on 100 parts by mass of the total of the PFPE-containing silane compound (a1) and (a2).

Also, from another point of view, the fluorine-containing oil may be a compound represented by the general formula Rf'-F(wherein, Rf' is a C₅₋₁₆ perfluoroalkyl group.). Further, it may be a chlorotrifluoroethylene oligomer. The compound represented by Rf'-F and the chlorotrifluoroethylene oligomer are preferable in the point of obtaining high affinity with the PFPE-containing silane compound (a) wherein Rf is a C₁₋₁₆ perfluoroalkyl group.

By containing the fluorine-containing oil, the curable composition can form a more flexible cured composition.

In one embodiment, an average molecular weight of the fluorine-containing oil may be made larger than an average molecular weight of the PFPE-containing silane compound (a1) (or the compound represented by the formula (A), (B), (C) or (D)) or the PFPE-containing silane compound (a2) (or the compound represented by the formula (A2), (B2), (C2) or (D2)). By making such an average molecular weight, in the cured product formed by using the curable composition, more excellent friction durability and surface slipperiness can be obtained.

In one embodiment, an average molecular weight of the fluorine-containing oil may be smaller than an average molecular weight of the PFPE-containing silane compound (a1) (or the compound represented by the formula (A), (B), (C) or (D)) or the PFPE-containing silane compound (a2) (or the compound represented by the formula (A2), (B2), (C2) or (D2)). By making such an average molecular weight, it can contribute to form a cured product having high friction durability and high surface slipperiness while suppressing lowering in transparency of the cured product formed by using the curable composition.

As a colorant, there may be mentioned pigments, dyes, etc.

As the heat resistance improver, there may be mentioned red iron oxide, cerium oxide, etc.

As the liquid reinforming agent, there may be mentioned a network polysiloxane comprising triorganosiloxy units and SiO₂ units, etc.

### (Method for producing curable composition)

The curable composition can be produced by uniformly kneading Components (a1), (a2), (b) and (c) which are essential components and Components (D) to (H) which are optional components by a mixing means such as a universal kneader (a planetary mixer), a kneader, etc. The order of addition of each component is arbitrary, and it is preferable that (E) which is optional component is added to a mixture of (a1) and (a2), and (F) and (G) which are optional components and dispersed therein, and then, (b), (c) and (D), and (H) which is optional component are added and mixed.

Regarding the constitution of the curable composition, it may be constituted as a so-called one-component type depending on the uses, or it may be a two-component type and both may be mixed at the time of use.

### (Use)

The cured product of the curable composition can be used, for example, as a potting material, a sealing material, etc. The cured product of the curable composition can be used, for example, by filling in the voids of the electronic member (for example, a laminating portion between the housing and the printed circuit board, or a gap between the resin-molded metal terminal portion and the molded resin, etc.), and dried and cured.

When higher wear resistance is required for the cured product (for example, a potting material, a sealing material), it is preferable that, prior to the treatment by the curable composition of the present invention, the object to be treated is washed with acetone, hydrofluoroether, etc., and then, dried in order to remove oil content in a void wall. Further, in addition to the above-mentioned washing, if it is pretreated with UV ozone, oxygen plasma, etc., wear resistance of the cured product can be further improved.

Prior to the treatment by the curable composition of the present invention, if necessary, by subjecting to primer treatment to the void wall, etc., adhesiveness of the potting material formed from the curable composition is improved, and wear resistance thereof can be further improved. The primer treatment may be carried out according to the conventional method under the same conditions as the primer treatment when a silane coupling agent is used. As the substrate, metals such as aluminum, copper, nickel, iron, brass, stainless, etc.; polyester resins such as epoxy resin, polyethylene terephthalate, polybutylene terephthalate resin, etc., engineering plastics such as polycarbonate resin, acrylic resin, polyimide resin, phenol resin, polyamide resin, polyphenylene sulfide resin, etc.; and glass, etc.

Incidentally, when the cured product obtained from the curable composition of the present invention is to be adhered to various kinds of substrates, various kinds of primers may be used in combination.

A temperature at the time of curing treatment is not particularly limited, and usually the treatment may be carried out at room temperature. A treatment time is also not particularly limited and can be set to, for example, 5 minutes to 1 hour.

In one embodiment, the curable composition can be cured at room temperature. Such a curable composition is particularly useful as a composition for forming a potting material.

In one embodiment, when the curable composition of the present invention is to be used, the composition may be further diluted using a solvent and used depending on the use and purpose. As a solvent to be used for dilution, the fluorine atom-containing solvent exemplified above can be used. For example, it may be dissolved in 1,3-bis(trifluoromethyl)benzene, Fluorinert (available from 3M Company), perfluorobutyl methyl ether, perfluorobutyl ethyl ether, etc., as the solvent, at a desired concentration and used. In particular, in the use of the thin film coating, it is preferable to use the above-mentioned solvent.

Since the curable composition of the present invention has excellent compatibility, it can be useful as an adhesive for the use around electrical and electronic parts and around automobile parts as an adhesive to a metal or plastic substrate. The cured product of the curable composition of the present invention can have good elastic modulus, chemical resistance, acid resistance and base resistance. Further, it can have a low glass transition temperature, can suppress to increase in elastic modulus at a low temperature, and has a high decomposition temperature. Furthermore, the curable composition of the present invention can provide a cured product having high clack resistance. Such a cured product of the curable composition of the present invention can be used for automobile parts (for example, a sealing material, specifically, gaskets), etc., chemical plants, electrical and electronic parts such as semiconductor manufacturing equipment, etc., and automobile parts that can be used at cold regions (for example, -50°C or lower) or under high temperature conditions, etc.

### EXAMPLES

The present invention will be explained more specifically by referring to the following Examples, but is not limited to these Examples. Incidentally, in the present Examples, the order of existence of recurring units constituting the perfluoro(poly)ether is arbitrary.

### (Production Example 1)

### ·Preparation of PFPE-containing silane compound (a1)

In 2,000 mL of a four-necked flask equipped with a reflux condenser, a thermometer and a stirrer were charged 1,000 g of a PFPE-modified ester material represented by an average composition of CH₃OCO-CF₂-(OCF₂)₂₉-(OCF₂CF₂)₁₇-OCF₂-COOCH₃ and 500 g of 1,3-bis(trifluoromethyl)benzene, and after adding 10 mL of ethylenediamine using a dropping funnel under nitrogen stream, the mixture was stirred at 25°C for one hour. Subsequently, after adding 51 mL of 3-aminopropyltrimethoxysilane, the mixture was stirred at 25°C for one hour. Thereafter, by distilling off the volatile component under reduced pressure, a PFPE-containing silane compound (a1) represented by the following formula was obtained. Regarding the obtained PFPE-containing silane compound (a1), integrated values of the peaks of -CF₂-CONH-CH₂CH₂CH₂-Si(OCH₃)₃ and -CF₂-COOCH₃ which is the raw material were compared by ¹⁹F-NMR analysis, and the silane terminalization rate was calculated to be 97 mol%.

PFPE-containing silane compound (a1) (CH₃O)₃Si-CH₂CH₂CH₂-NHCO-CF₂-(OCF₂)₂₉-(OCF₂CF₂)₁₇-CF₂-CONHCH₂CH₂NHCO-CF₂-(OCF₂)₂₉-(OCF₂CF₂)₁₇-CF₂-CONH-CH₂CH₂CH₂-Si(OCH₃)₃

### (Production Example 2)

### ·Preparation of PFPE-containing silane compound (a2)

In 1,000 mL of a four-necked flask equipped with a reflux condenser, a thermometer and a stirrer was charged 1,000 g of a PFPE-modified ester material represented by an average composition of CH₃OCO-CF₂-(OCF₂)₂₉-(OCF₂CF₂)₁₇-OCF₂-COOCH₃, and after adding 102 mL of 3-aminopropyltrimethoxysilane under nitrogen stream, the mixture was stirred at 25°C for one hour. Thereafter, by distilling off the volatile component under reduced pressure, a PFPE-containing silane compound (a2) represented by the following formula was obtained. Regarding the obtained PFPE-containing silane compound (a2), integrated values of the peaks of -CF₂-CONH-CH₂CH₂CH₂-Si(OCH₃)₃ and -CF₂-COOCH₃ which is the raw material were compared by ¹⁹F-NMR analysis, and the silane terminalization rate was calculated to be 97 mol%.
PFPE-containing silane compound (a2) (CH₃O)₃Si-CH₂CH₂CH₂-NHCO-CF₂-(OCF₂)₂₉-(OCF₂CF₂)₁₇-CF₂-CONH-CH₂CH₂CH₂-Si(OCH₃)₃
PFPE-modified ester material CH₃OCO-CF₂-(OCF₂)₂₉-(OCF₂CF₂)₁₇-OCF₂-COOCH₃

### (Production Example 3)

### ·Preparation of PFPE-containing silane compound (b)

In 2,000 mL of a four-necked flask equipped with a reflux condenser, a thermometer and a stirrer were charged 1,000 g of a PFPE-modified ester material represented by an average composition of CH₃CH₂OCO-CF₂-(OCF₂)₁₂-(OCF₂CF₂)₁₂-OCF₂-COOCH₂CH₃ and 500 g of 1,3-bis(trifluoromethyl)benzene, and after adding 13 mL of ethylenediamine using a dropping funnel under nitrogen stream, the mixture was stirred at 25°C for one hour. Subsequently, after adding 69 mL of 3-aminopropyltrimethoxysilane, the mixture was stirred at 25°C for one hour. Thereafter, by distilling off the volatile component under reduced pressure, a PFPE-containing silane compound (b) represented by the following formula was obtained. Regarding the obtained PFPE-containing silane compound (b), integrated values of the peaks of -CF₂-CONH-CH₂CH₂CH₂-Si(OR')₃ and -CF₂-COOCH₂CH₃ which is the raw material were compared by ¹⁹F-NMR analysis, and the silane terminalization rate was calculated to be 98 mol%. Incidentally, as R' in the following formula, CH₃ was 89 mol% and CH₂CH₃ was 11 mol% by ¹H-NMR analysis.

PFPE-containing silane compound (b) (R'O)₃Si-CH₂CH₂CH₂-NHCO-CF₂-(OCF₂)₁₂-(OCF₂CF₂)₁₂-OCF₂-CONHCH₂CH₂NHCO-CF₂-(OCF₂)₁₂-(OCF₂CF₂)₁₂-OCF₂-CONH-CH₂CH₂CH₂-Si(OR')₃

### (Production Example 4)

### ·Preparation of PFPE-containing silane compound (b')

In 1,000 mL of a four-necked flask equipped with a reflux condenser, a thermometer and a stirrer was charged 1,000 g of a PFPE-modified ester material represented by an average composition of CH₃CH₂OCO-CF₂-(OCF₂)₁₂-(OCF₂CF₂)₁₂-OCF₂-COOCH₂CH₃, and after adding 141 mL of 3-aminopropyltrimethoxysilane under nitrogen stream, the mixture was stirred at 25°C for one hour. Thereafter, by distilling off the volatile component under reduced pressure, a PFPE-containing silane compound (b') represented by the following formula was obtained. Regarding the obtained PFPE-containing silane compound (b'), integrated values of the peaks of -CF₂-CONH-CH₂CH₂CH₂-Si(OR')₃ and -CF₂-COOCH₃ which is the raw material were compared by ¹⁹F-NMR analysis, and the silane terminalization rate was calculated to be 99 mol%. Incidentally, as R' in the following formula, CH₃ was 91 mol% and CH₂CH₃ was 9 mol% by ¹H-NMR analysis.

PFPE-containing silane compound (b') (R'O)₃Si-CH₂CH₂CH₂-NHCO-CF₂-(OCF₂)ₘ-(OCF₂CF₂)ₙ-OCF₂-CONH-CH₂CH₂CH₂-Si(OR')₃

### (Production Example 5)

### ·Preparation of PFPE-containing silane compounds (c1) and (c2)

A PFPE mixture 1 containing the following Components (C1) and (C2) was prepared.

(C1) CH₃OCO-CF(CF₃)-{OCF₂CF(CF₃)}ₘ-OCF₂CF₂O-{CF(CF₃)CF₂O}ₙ-CF(CF₃)-COOCH₃(m+n=12)

(C2) CF₃CF₂CF₂O-{CF(CF₃)CF₂O}₁₂-CF(CF₃)-COOCH₃

(C1):(C2)=85:15 (molar ratio)

In 2,000 mL of a four-necked flask equipped with a reflux condenser, a thermometer and a stirrer were charged 1,000 g of the PFPE mixture 1 and 500 g of 1,3-bis(trifluoromethyl)benzene, using a dropping funnel under nitrogen stream, and after adding 13 mL of ethylenediamine using a dropping funnel, the mixture was stirred at 70°C for 10 hours. Subsequently, after adding 57 mL of 3-aminopropyltrimethoxysilane, the mixture was stirred at 70°C for 12 hours. Thereafter, by distilling off the volatile component under reduced pressure, PFPE-containing silane compounds (c1) and (c2) represented by the following formulae were obtained. Regarding the obtained PFPE-containing silane compounds (c1) and (c2), integrated values of the peaks of - CF(CF₃)-CONH-CH₂CH₂CH₂-Si(OCH₃)₃ and -CF(CF₃)-COOCH₃ which is the raw material were compared by ¹⁹F-NMR analysis, and the silane terminalization rate was calculated to be 99 mol%.
PFPE-containing silane compound (c1) (CH₃O)₃Si-CH₂CH₂CH₂-NHCO-CF(CF₃)-{OCF₂CF(CF₃)}ₘ-OCF₂CF₂O-{CF(CF₃)CF₂O}ₙ-CF(CF₃)-CONHCH₂CH₂NHCO-CF(CF₃)-{OCF₁CF(CF₃)}_{m'}-OCF₂CF₂O-{CF(CF₃)CF₂O}_{n'}-CF(CF₃)-CONH-CH₂CH₂CH₂-Si(OCH₃)₃ (wherein, m+n=12, m'+n'=12)
PFPE-containing silane compound (c2) CF₃CF₂CF₂O-{CF(CF₃)CF₂O}₁₂-CF(CF₃)-CONHCH₂CH₂NHCO-CF(CF₃)-{OCF₂CF(CF₃)}ₘ-OCF₂CF₂O-{CF(CF₃)CF₂O}ₙ-CF(CF₃)-CONH-CH₂CH₂CH₂-Si(OCH₃)₃ (wherein, m+n=12)

### (Production Example 6)

### ·Preparation of PFPE-containing silane compounds (c1') and (c2')

In 1,000 mL of a four-necked flask equipped with a reflux condenser, a thermometer and a stirrer were charged 1,000 g of the PFPE mixture 1 and 500 g of 1,3-bis(trifluoromethyl)benzene, under nitrogen stream, and after adding 123 mL of 3-aminopropyltrimethoxysilane, the mixture was stirred at 70°C for 12 hours.
Thereafter, by distilling off the volatile component under reduced pressure, PFPE-containing silane compounds (c1') and (c2') represented by the following formulae were obtained. Regarding the obtained PFPE-containing silane compounds (c1') and (c2'), integrated values of the peaks of -CF(CF₃)-CONH-CH₂CH₂CH₂-Si(OCH₃)₃ and -CF(CF₃)-COOCH₃ which is the raw material were compared by ¹⁹F-NMR analysis, and the silane terminalization rate was calculated to be 98 mol%.
PFPE-containing silane compound (c1') (CH₃O)₃Si-CH₂CH₂CH₂-NHCO-CF(CF₃)-{OCF₂CF(CF₃)}ₘ-OCF₂CF₂O-{CF(CF₃)CF₂O}ₙ-CF(CF₃)-CONH-CH₂CH₂CH₂-Si(OCH₃)₃ (wherein, m+n=12) PFPE-containing silane compound (c2')
CF₃CF₂CF₂O-{CF(CF₃)CF₂O}₁₂-CF(CF₃)-CONH-CH₂CH₂CH₂-Si(OCH₃)₃

### (Example 1)

### ·Preparation of curable composition

In a glass apparatus for mixing were weighed 50 parts by mass of PFPE-containing silane compound (a1), 50 parts by mass of PFPE-containing silane compound (a2), 2 parts by mass of methyltrimethoxysilane as a crosslinking agent, 0.3 part by mass of tris(3-trimethoxysilylpropyl)isocyanurate as an adhesive imparting agent and 0.1 part by mass of dibutylbis(triethoxysiloxy)tin as a catalyst, and stirring was carried out using a magnetic stirrer to produce a curable composition.

### (Example 2)

In the same manner as in Example 1 except for using 70 parts by mass of the PFPE-containing silane compound (a1) and 30 parts by mass of the PFPE-containing silane compound (a2), a curable composition was produced.

### (Example 3)

In the same manner as in Example 1 except for using vinylmethyldimethoxysilane in place of methyltrimethoxysilane as a crosslinking agent, and using 2 parts by mass of diisopropoxytitanium bis(ethylacetoacetate) in place of dibutylbis(triethoxysiloxy)tin as a catalyst, a curable composition was produced.

### (Example 4)

In the same manner as in Example 2 except for using vinylmethyldimethoxysilane in place of methyltrimethoxysilane as a crosslinking agent, and using 2 parts by mass of diisopropoxytitanium bis(ethylacetoacetate) in place of dibutylbis(triethoxysiloxy)tin as a catalyst, a curable composition was produced.

### (Example 5)

In the same manner as in Example 1 except for using PFPE-containing silane compounds (c1) and (c2) in place of the PFPE-containing silane compounds (a1) and (a2), respectively, and using 2 parts by mass of diisopropoxytitanium bis(ethylacetoacetate) in place of dibutylbis(triethoxysiloxy)tin as a catalyst, a curable composition was produced.

### (Example 6)

In the same manner as in Example 5 except for using vinylmethyldimethoxysilane in place of methyltrimethoxysilane as a crosslinking agent, a curable composition was produced.

### (Example 7)

In the same manner as in Example 1 except for using each 50 parts by mass of PFPE-containing silane compounds (c1) and (c2), 2 parts by mass of vinylmethyldimethoxysilane and 0.5 part by mass of 3-aminopropyltriethoxysilane as crosslinking agents, 2 parts by mass of dibutylbis(triethoxysiloxy)tin as a catalyst and 0.3 part by mass of tris(3-trimethoxysilylpropyl)isocyanurate as an adhesive imparting agent, a curable composition was produced.

### (Comparative Example 1)

In the same manner as in Example 1 except for not using the PFPE-containing silane compound (a1) but using 100 parts by mass of the PFPE-containing silane compound (a2), a curable composition was produced.

### (Comparative Example 2)

In the same manner as in Example 1 except for using 100 parts by mass of the PFPE-containing silane compound (a1) and not using the PFPE-containing silane compound (a2), a curable composition was produced.

### (Comparative Example 3)

In the same manner as in Example 3 except for using 100 parts by mass of the PFPE-containing silane compound (a1) and not using the PFPE-containing silane compound (a2), a curable composition was produced.

### (Comparative Example 4)

In the same manner as in Example 5 except for using 100 parts by mass of the PFPE-containing silane compound (c2) and not using the PFPE-containing silane compound (c1), a curable composition was produced.

### (Comparative Example 5)

In the same manner as in Example 5 except for using 100 parts by mass of the PFPE-containing silane compound (c1) and not using the PFPE-containing silane compound (c2), a curable composition was produced.

### (Evaluation of compatibility)

The curable compositions in the above-mentioned Examples and Comparative Examples were mixed under blocking moisture, and the degree of mixing condition was observed. The results are shown in Table 1.

### (Bending test)

The curable composition prepared in each Example and Comparative Example was coated with a thickness of 0.5 mm on a PET film having a thickness of 0.19 mm, and cured at 23°C and a relative humidity of 50% for 7 days. The coated PET film was bent and the state of the cured product was observed and the presence or absence of occurrence of cracks was confirmed. The results are shown in Table 1.

**[Table 1]**

| | PFPE-containing silane compound (parts by mass) | | | | Crosslinking agent | Compatibility | Presence of absence of cracks at bending |
|---|---|---|---|---|---|---|---|
| | (a1) | (a2) | (c1) | (c2) | | | |
| Example 1 | 50 | 50 | - | - | Me(MeO)₃Si | Good | None |
| Example 2 | 70 | 30 | - | - | Me(MeO)₃Si | Good | None |
| Example 3 | 50 | 50 | - | - | MeVi(MeO)₂Si | Good | None |
| Example 4 | 70 | 30 | - | - | MeVi(MeO)₂Si | Good | None |
| Example 5 | - | - | 50 | 50 | Me(MeO)₃Si | Good | None |
| Example 6 | - | - | 50 | 50 | MeVi(MeO)₂Si | Good | None |
| Example 7 | - | - | 50 | 50 | MeVi(MeO)₂Si, H₂NC₃H₆(MeO)₃Si | Good | None |
| Comparative Example 1 | 0 | 100 | - | - | Me(MeO)₃Si | Good | Present |
| Comparative Example 2 | 100 | 0 | - | - | Me(MeO)₃Si | Ununiform | - |
| Comparative Example 3 | 100 | 0 | - | - | MeVi(MeO)₂Si | Ununiform | - |
| Comparative Example 4 | - | - | 0 | 100 | Me(MeO)₃Si | Good | Present |
| Comparative Example 5 | - | - | 100 | 0 | Me(MeO)₃Si | Ununiform | - |

As shown in Table 1, in the curable compositions which used both of the compound corresponding to the PFPE-containing silane compound (a1) (that is, the compound wherein r≠0 in the general formula (I)) and the compound corresponding to (a2) (that is, the compound wherein r=0 in the general formula (I)), it was shown that compatibility was also good, no crack was generated even when bending whereby they were excellent in bending resistance. On the other hand, in Comparative Examples 1 and 4 in which no compound corresponding to (a1) was used, cracks were generated, and in Comparative Examples 2, 3 and 5 in which no compound corresponding to (a2) was used, uniform compositions could not be obtained.

### UTILIZABILITY IN INDUSTRY

The curable composition of the present invention is not only excellent in compatibility and excellent in handling property, but also a cured product having high crack resistance can be obtained. The curable composition of the present invention is easy in handling and has high durability after curing so that it can be suitably used as an adhesive for the uses of peripherals of electric and electronic parts and peripherals of automobile parts.

## Claims

1. A curable composition which comprises
(a1) a perfluoro(poly)ether group-containing silane compound (a1) represented by the following formula (I): 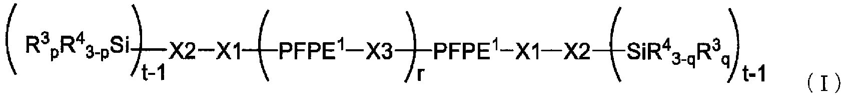 wherein,
R³s each independently represent a hydrogen atom or a monovalent hydrocarbon group at each appearance,
R⁴s each independently represent a hydroxyl group or a hydrolyzable group(s) at each appearance,
X1s each independently represent a single bond or a divalent organic group at each appearance,
X2s each independently represent a t valent organic group at each appearance, here, t is an integer of 2 or more,
X3s each independently represent a divalent organic group at each appearance, PFPE¹s are each independently a divalent perfluoro(poly)ether group represented by the formula:
-(C_{f}F_{2f})-(OCF₂)ₐ₁-(OC₂F₄)ₐ₂-(OC₃X¹⁰₆)ₐ₃-(OC₄F₈)ₐ₄-(OC₅F₁₀)ₐ₅-(OC₆F₁₂)ₐ₆-(OC₇F₁₄)ₐ₇-(OC₈F₁₆)ₐ₈-
wherein, f is an integer of 1 or more and 10 or less, a1, a2, a3, a4, a5, a6, a7 and a8 are each independently an integer of 0 or more and 200 or less, a sum of a1, a2, a3, a4, a5, a6, a7 and a8 is an integer of 5 or more and 200 or less, and the unit represented by (C_{f}F_{2f}) is located at the left end of the group, the order of existence of each repeating unit enclosed in parentheses with the subscript a1, a2, a3, a4, a5, a6, a7 or a8 is arbitrary in the formula, X¹⁰s are each independently a hydrogen atom, a fluorine atom or a chlorine atom at each appearance, provided that when all X¹⁰s are hydrogen atoms or chlorine atoms, at least one of a1, a2, a4, a5, a6, a7 and a8 is an integer of 1 or more,
at each appearance,
p and q are each 0 or 1, and
r is an integer of 1 or more;
(a2) a perfluoro(poly)ether group-containing silane compound (a2) represented by the following formula (II): 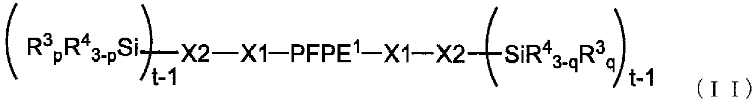 wherein, R³, R⁴, PFPE¹, X1, X2, p, q and t have the same meanings as defined above, provided that, a compound that can be represented by the formula (I) is excluded;
(b) an organic silicon compound having at least two OR² groups (here, R²s are each independently a hydrogen atom or a monovalent organic group at each appearance) bonded to an Si atom (provided that, (a1) and (a2) are excluded) or a partially hydrolyzed condensate thereof; and
(c) a condensation catalyst.

2. The curable composition according to Claim 1, wherein X1s in the perfluoro-(poly)ether group-containing silane compounds (a1) and (a2) are each independently an amide bond or a urethane bond at each appearance.

3. The curable composition according to Claim 1 or 2, wherein X2s in the perfluoro(poly)ether group-containing silane compounds (a1) and (a2) are each independently a divalent organic group at each appearance.

4. The curable composition according to any one of Claims 1 to 3, wherein a mass ratio of the perfluoro(poly)ether group-containing silane compounds (a1) and (a2) is in the range of 10:90 to 90: 10.

5. The curable composition according to any one of Claims 1 to 4, wherein X3 in the perfluoro(poly)ether group-containing silane compound (a1) is a divalent alkylene group having amide groups at the both terminals.

6. The curable composition according to any one of Claims 1 to 5, wherein r in the perfluoro(poly)ether group-containing silane compound (a1) is an integer of 1 or more and 5 or less.

7. The curable composition according to any one of Claims 1 to 6, wherein PFPE¹s in the perfluoro(poly)ether group-containing silane compound (a1) are each independently a divalent perfluoro(poly)ether group represented by the formula
-(C_{f}F_{2f})-(OCF₂)ₐ₁-(OCF₂CF₂)ₐ₂ₗ-(OCF(CF₃))_{a2'}-(OCF₂CF₂CF₂)ₐ₃ₗ-(OCF₂CF(CF₃))_{a3'}-(OCF(CF₃)CF₂)_{a3"}-(OCF₂CF₂CF₂CF₂)ₐ₄-
where, f is an integer of 1 or more and 4 or less, a1, a2l, a2', a3l, a3', a3" and a4 are each independently an integer of 0 or more and 200 or less, a sum of a2l and a2' equals to a2, a sum of a3l, a3' and a3" equals to a3, a2 and a3 are as defined in Claim 1, a sum of a1, a2l, a2', a3l, a3', a3" and a4 is 5 or more, and the order of existence of each repeating unit is arbitrary in the formula,
at each appearance.

8. The curable composition according to Claim 7, wherein in PFPE¹ in the perfluoro(poly)ether group-containing silane compound (a1) or (a2), a1 is an integer of 0 or more and 50 or less, a2 is an integer of 0 or more and 50 or less, a3 is an integer of 0 or more and 30 or less, a4 is an integer of 0 or more and 30 or less, and a sum of a1, a2, a3 and a4 is 5 or more and 200 or less.

9. The curable composition according to any one of Claims 1 to 8, wherein the PFPE¹s in the perfluoro(poly)ether group-containing silane compound (a1) or (a2) are each independently a divalent perfluoro(poly)ether group represented by
-(C_{f}F_{2f})-(OCF₂)ₐ₁-(OC₂F₄)ₐ₂-,
where, f is 1 or 2, a1 and a2 are each independently an integer of 1 or more and 200 or less, and the order of existence of each repeating unit enclosed in parentheses with the subscript a1 or a2 is arbitrary in the formula.

10. The curable composition according to any one of Claims 1 to 9, wherein Component (B) is a compound represented by the following formula:
R¹ₙSi(OR²)₄₋ₙ
wherein,
R¹s are each independently a substituted or unsubstituted monovalent hydrocarbon group at each appearance,
R²s are each independently a hydrogen atom or a monovalent organic group at each appearance,
n is 0, 1 or 2,
or a partially hydrolyzed condensate thereof.

11. The curable composition according to Claim 10, wherein Component (B) further contains a compound represented by the following formula (B2): 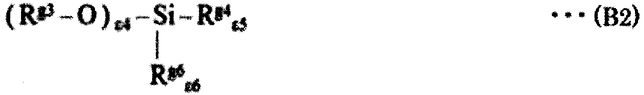 wherein,
R^{g3}s are each independently a hydrogen atom or a monovalent organic group at each appearance,
R^{g4} is a substituted or unsubstituted monovalent hydrocarbon group,
R^{g6}s are each independently R^{g8}-R^{g7}- at each appearance,
R^{g7}s are each independently an alkylene group having 1 to 10 carbon atoms or a group having 1 to 10 carbon atoms and containing a nitrogen atom(s) or an oxygen atom(s) in a main chain at each appearance,
R^{g8}s are each independently a primary amino group, an epoxy group, a (meth)acryloyl group, a (meth)acryloxy group, a mercapto group or an isocyanate group at each appearance,
ε4 is 2 or 3,
ε5 is 0 or 1, and
ε6 is 1 or 2, provided that, a sum of ε4, ε5 and ε6 is 4,
or a partially hydrolyzed condensate thereof.

## Patentansprüche

1. Härtbare Zusammensetzung, die umfasst
(a1) eine Perfluor(poly)ethergruppen enthaltende Silanverbindung (a1), dargestellt durch die folgende Formel (I): 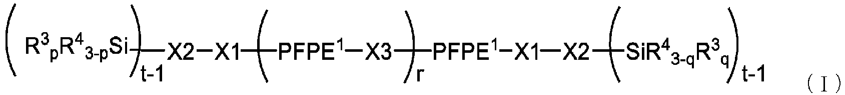 worin,
R³ bei jedem Auftreten jeweils unabhängig voneinander ein Wasserstoffatom oder eine einwertige Kohlenwasserstoffgruppe darstellt,
R⁴ bei jedem Auftreten jeweils unabhängig voneinander eine Hydroxylgruppe oder eine hydrolysierbare Gruppe(n) darstellt,
die Gruppen X1 bei jedem Auftreten unabhängig voneinander eine Einfachbindung oder eine zweiwertige organische Gruppe darstellen,
die Gruppen X2 bei jedem Auftreten jeweils unabhängig voneinander eine tvalente organische Gruppe darstellen, wobei hier t eine ganze Zahl von 2 oder mehr ist,
die Gruppen X3 bei jedem Auftreten jeweils unabhängig voneinander eine zweiwertige organische Gruppe darstellen,
die Gruppen PFPE¹ jeweils unabhängig voneinander eine zweiwertige Perfluor(poly)ethergruppe sind, dargestellt durch die Formel:
-(C_{f}F_{2f})-(OCF₂)ₐ₁-(OC₂F₄)ₐ₂-(OC₃X¹⁰₆)ₐ₃-(OC₄F₈)ₐ₄-(OC₅F₁₀)ₐ₅-(OC₆F₁₂)ₐ₆-(OC₇F₁₄)ₐ₇-(OC₈F₁₆)ₐ₈-
wobei f eine ganze Zahl von 1 oder mehr und 10 oder weniger ist, a1, a2, a3, a4, a5, a6, a7 und a8 jeweils unabhängig eine ganze Zahl von 0 oder mehr und 200 oder weniger sind, die Summe von a1, a2, a3, a4, a5, a6, a7 und a8 eine ganze Zahl von 5 oder mehr und 200 oder weniger ist, und die durch (C_{f}F_{2f}) dargestellte Einheit sich am linken Ende der Gruppe befindet, die Reihenfolge des Vorhandenseins jeder in Klammem eingeschlossenen Wiederholungseinheit mit dem Index a1, a2, a3, a4, a5, a6, a7 oder a8 in der Formel beliebig ist, X¹⁰ bei jedem Auftreten jeweils unabhängig ein Wasserstoffatom, ein Fluoratom oder ein Chloratom ist, mit der Maßgabe, dass, wenn alle X¹⁰ Wasserstoffatome oder Chloratome sind, mindestens eines von a1, a2, a4, a5, a6, a7 und a8 eine ganze Zahl von 1 oder mehr ist, bei jedem Auftreten
p und q jeweils 0 oder 1 sind und
r eine ganze Zahl von 1 oder mehr ist;
(a2) eine Perfluor(poly)ethergruppen enthaltende Silanverbindung (a2), dargestellt durch die folgende Formel (II): 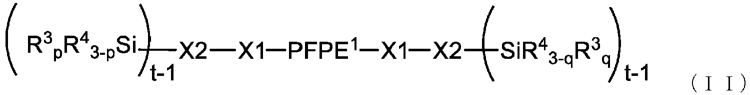
wobei R³, R⁴, PFPE¹, X1, X2, p, q und t die gleichen Bedeutungen wie vorstehend definiert aufweisen,
mit der Maßgabe, dass eine Verbindung, die durch die Formel (I) dargestellt werden kann, ausgeschlossen ist;
(b) eine organische Siliziumverbindung mit mindestens zwei OR²-Gruppen (hierbei sind die R²-Gruppen bei jedem Auftreten jeweils unabhängig voneinander ein Wasserstoffatom oder eine einwertige organische Gruppe), die an ein Si-Atom gebunden sind (mit der Maßgabe, dass (a1) und (a2) ausgeschlossen ist) oder ein teilweise hydrolysiertes Kondensat davon; und
(c) einen Kondensationskatalysator.

2. Härtbare Zusammensetzung nach Anspruch 1, wobei die X1-Gruppen in den Perfluor - (poly)ethergruppen enthaltenden Silanverbindungen (a1) und (a2) bei jedem Auftreten jeweils unabhängig voneinander eine Amidbindung oder eine Urethanbindung sind.

3. Härtbare Zusammensetzung nach Anspruch 1 oder 2, wobei die X2-Gruppen in den Perfluor(poly)ethergruppen enthaltenden Silanverbindungen (a1) und (a2) bei jedem Auftreten jeweils unabhängig voneinander eine zweiwertige organische Gruppe sind.

4. Härtbare Zusammensetzung nach einem der Ansprüche 1 bis 3, wobei ein Massenverhältnis der Perfluor(poly)ethergruppen enthaltenden Silanverbindungen (a1) und (a2) im Bereich von 10:90 bis 90:10 liegt.

5. Härtbare Zusammensetzung nach einem der Ansprüche 1 bis 4, wobei X3 in der Perfluor(poly)ethergruppen enthaltenden Silanverbindung (a1) eine zweiwertige Alkylengruppe mit Amidgruppen an beiden Enden ist.

6. Härtbare Zusammensetzung nach einem der Ansprüche 1 bis 5, wobei r in der Perfluor(poly)ethergruppen enthaltenden Silanverbindung (a1) eine ganze Zahl von 1 oder mehr und 5 oder weniger ist.

7. Härtbare Zusammensetzung nach einem der Ansprüche 1 bis 6, wobei die Gruppen PFPE¹ in der Perfluor(poly)ethergruppen enthaltenden Silanverbindung (a1) jeweils unabhängig voneinander eine zweiwertige Perfluor(poly)ethergruppe sind, dargestellt durch die Formel
-(C_{f}F_{2f})-(OCF₂)ₐ₁-(OCF₂CF₂)ₐ₂ₗ-(OCF(CF₃))_{a2'}-(OCF₂CF₂CF₂)ₐ₃ₗ-(OCF₂CF(CF₃))_{a3'}-(OCF(CF₃)CF₂)_{a3"}-(OCF₂CF₂CF₂CF₂)ₐ₄-
wobei f eine ganze Zahl von 1 oder mehr und 4 oder weniger ist, a1, a2l, a2', a3l, a3', a3" und a4 jeweils unabhängig eine ganze Zahl von 0 oder mehr und 200 oder weniger sind, eine Summe aus a2l und a2' gleich a2 ist, eine Summe aus a3l, a3' und a3" gleich a3 ist, a2 und a3 wie in Anspruch 1 definiert sind, eine Summe aus a1, a2l, a2', a3l, a3', a3" und a4 5 oder mehr ist, und die Reihenfolge des Vorhandenseins jeder Wiederholungseinheit in der Formel beliebig ist, bei jedem Auftreten.

8. Härtbare Zusammensetzung nach Anspruch 7, wobei in PFPE¹ in der Perfluor(poly)ethergruppen enthaltenden Silanverbindung (a1) oder (a2) a1 eine ganze Zahl von 0 oder mehr und 50 oder weniger ist, a2 eine ganze Zahl von 0 oder mehr und 50 oder weniger ist, a3 eine ganze Zahl von 0 oder mehr und 30 oder weniger ist, a4 eine ganze Zahl von 0 oder mehr und 30 oder weniger ist und eine Summe von a1, a2, a3 und a4 5 oder mehr und 200 oder weniger beträgt.

9. Härtbare Zusammensetzung nach einem der Ansprüche 1 bis 8, wobei die Gruppen PFPE¹ in der Perfluor(poly)ethergruppen enthaltenden Silanverbindung (a1) oder (a2) jeweils unabhängig voneinander eine zweiwertige Perfluor(poly)ethergruppe sind, dargestellt durch
-(C_{f}F_{2f})-(OCF₂)ₐ₁-(OC₂F₄)ₐ₂-,
wobei f 1 oder 2 ist, a1 und a2 jeweils unabhängig eine ganze Zahl von 1 oder mehr und 200 oder weniger sind, und die Reihenfolge des Vorhandenseins jeder in Klammern mit dem Index a1 oder a2 eingeschlossenen Wiederholungseinheit in der Formel beliebig ist.

10. Härtbare Zusammensetzung nach einem der Ansprüche 1 bis 9, wobei Komponente (B) eine durch die folgende Formel dargestellte Verbindung ist:
R¹ₙSi(OR²)₄₋ₙ
worin,
R¹ bei jedem Auftreten jeweils unabhängig voneinander eine substituierte oder unsubstituierte einwertige Kohlenwasserstoffgruppe ist,
R² bei jedem Auftreten jeweils unabhängig voneinander ein Wasserstoffatom oder eine einwertige organische Gruppe ist,
n 0, 1 oder 2 ist,
oder ein teilweise hydrolysiertes Kondensat davon.

11. Härtbare Zusammensetzung nach Anspruch 10, wobei Komponente (B) weiter eine Verbindung enthält, dargestellt durch die folgende Formel (B2): 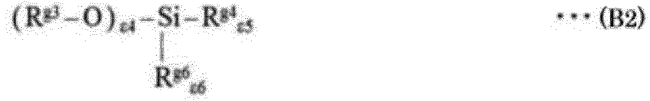 worin,
die Gruppen R^{g3} bei jedem Auftreten jeweils unabhängig voneinander ein Wasserstoffatom oder eine einwertige organische Gruppe sind,
R^{g4} eine substituierte oder unsubstituierte einwertige Kohlenwasserstoffgruppe ist,
die Gruppen R^{g6} bei jedem Auftreten unabhängig voneinander R^{g8}-R^{g7}- sind,
die Gruppen R^{g7} bei jedem Auftreten jeweils unabhängig eine Alkylengruppe mit 1 bis 10 Kohlenstoffatomen oder eine Gruppe mit 1 bis 10 Kohlenstoffatomen sind und ein Stickstoffatom (oder mehrere) oder ein Sauerstoffatom (oder mehrere) in einer Hauptkette bei jedem Auftreten enthalten,
die Gruppen R^{g8} bei jedem Auftreten jeweils unabhängig voneinander eine primäre Aminogruppe, eine Epoxygruppe, eine (Meth)acryloylgruppe, eine (Meth) acryloxygruppe , eine Mercaptogruppe oder eine Isocyanatgruppe sind,
ε4 2 oder 3 ist,
ε5 0 oder 1 ist und
ε6 1 oder 2 ist, mit der Maßgabe, dass eine Summe von ε4, ε5 und ε6 4 ist, oder ein teilweise hydrolysiertes Kondensat davon.

## Revendications

1. Composition durcissable qui comprend
(a1) un composé de silane contenant un groupe perfluoro(poly)éther (a1) représenté par la formule suivante (I) : 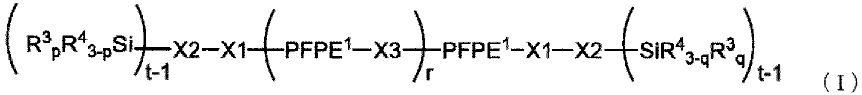 dans laquelle
R³ représentent chacun indépendamment un atome d'hydrogène ou un groupe hydrocarbure monovalent à chaque apparition,
R⁴ représentent chacun indépendamment un groupe hydroxyle ou un/des groupe(s) hydrolysable(s) à chaque apparition,
X1 représentent chacun indépendamment une liaison simple ou un groupe organique divalent à chaque apparition,
X2 représentent chacun indépendamment un groupe organique t valent à chaque apparition, ici, t est un entier de 2 ou plus,
X3 représentent chacun indépendamment un groupe organique divalent à chaque apparition,
PFPE¹ sont chacun indépendamment un groupe perfluoro(poly)éther divalent représenté par la formule :
-(C_{f}F_{2f})-(OCF₂)ₐ₁-(OC₂F₄)ₐ₂-(OC₃X¹⁰₆)ₐ₃-(OC₄F₈)ₐ₄-(OC₅F₁₀)ₐ₅)-(OC₆F₁₂)ₐ₆-(OC₇F₁₄)ₐ₇-(OC₈F₁₆)ₐ₈-
dans laquelle f est un entier de 1 ou plus et 10 ou moins, a1, a2, a3, a4, a5, a6, a7 et a8 sont chacun indépendamment un entier de 0 ou plus et 200 ou moins, une somme de a1, a2, a3, a4, a5, a6, a7 et a8 est un entier de 5 ou plus et 200 ou moins, et l'unité représentée par (C_{f}F_{2f}) est située à l'extrémité gauche du groupe, l'ordre d'existence de chaque unité répétitive enfermée entre parenthèses avec l'indice a1, a2, a3, a4, a5, a6, a7 ou a8 est arbitraire dans la formule, X¹⁰ sont chacun indépendamment un atome d'hydrogène, un atome de fluor ou un atome de chlore à chaque apparition, à condition que lorsque l'ensemble des X¹⁰ sont des atomes d'hydrogène ou des atomes de chlore, au moins un de a1, a2, a3, a4, a5, a6, a7 et a8 est un entier de 1 ou plus, à chaque apparition,
p et q sont chacun 0 ou 1, et
r est un entier de 1 ou plus ;
(a2) un composé de silane contenant un groupe perfluoro(poly)éther (a2) représenté par la formule suivante (II) : 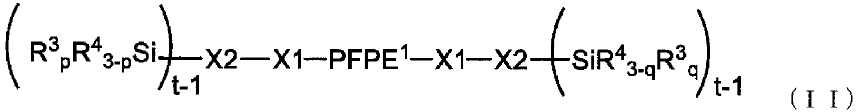 dans laquelle R³, R⁴, PFPE¹, X1, X2, p, q et t ont les mêmes significations que définies ci-dessus, à condition qu'un composé qui peut être représenté par la formule (I) soit exclu ;
(b) un composé de silicium organique ayant au moins deux groupes OR² (ici, R² sont chacun indépendamment un atome d'hydrogène ou un groupe organique monovalent à chaque apparition) liés à un atome de Si (à condition que (a1) et (a2) soient exclus) ou un condensat partiellement hydrolysé de celui-ci ; et
(c) un catalyseur de condensation.

2. Composition durcissable selon la revendication 1, dans laquelle X1 dans les composés de silane contenant un groupe perfluoro(poly)éther (a1) et (a2) sont chacun indépendamment une liaison amide ou une liaison uréthane à chaque apparition.

3. Composition durcissable selon la revendication 1 ou 2, dans laquelle X2 dans les composés de silane contenant un groupe perfluoro(poly)éther (a1) et (a2) sont chacun indépendamment un groupe organique divalent à chaque apparition.

4. Composition durcissable selon l'une quelconque des revendications 1 à 3, dans laquelle un rapport massique des composés de silane contenant un groupe perfluoro(poly)éther (a1) et (a2) est dans la plage de 10/90 à 90/10.

5. Composition durcissable selon l'une quelconque des revendications 1 à 4, dans laquelle X3 dans le composé de silane contenant un groupe perfluoro(poly)éther (a1) est un groupe alkylène divalent ayant des groupes amide aux deux terminaisons.

6. Composition durcissable selon l'une quelconque des revendications 1 à 5, dans laquelle r dans le composé de silane contenant un groupe perfluoro(poly)éther (a1) est un entier de 1 ou plus et 5 ou moins.

7. Composition durcissable selon l'une quelconque des revendications 1 à 6, dans laquelle PFPE¹ dans le composé de silane contenant un groupe perfluoro(poly)éther (a1) sont chacun indépendamment un groupe perfluoro(poly)éther divalent représenté par la formule
-(C_{f}F_{2f})-(OCF₂)ₐ₁-(OCF₂CF₂)ₐ₂₁-(OCF(CF₃)_{a2'}-(OCF₂CF₂CF₂)ₐ₃₁-(OCF₂CF(CF₃))_{a3'}-(OCF(CF₃)CF₂)_{a3"}-(OCF₂CF₂CF₂CF₂)ₐ₄-
où f est un entier de 1 ou plus et 4 ou moins, a1, a21, a2', a31, a3', a3" et a4 sont chacun indépendamment un entier de 0 ou plus et 200 ou moins, une somme de a21 et a2' est égale à a2, une somme de a31, a3' et a3" est égale à a3, a2 et a3 sont tels que définis à la revendication 1, une somme de a1, a21, a2', a31, a3', a3" et a4 est de 5 ou plus, et l'ordre d'existence de chaque unité répétitive est arbitraire dans la formule,
à chaque apparition.

8. Composition durcissable selon la revendication 7, dans laquelle dans PFPE¹ dans le composé de silane contenant un groupe perfluoro(poly)éther (a1) ou (a2), a1 est un entier de 0 ou plus et 50 ou moins, a2 est un entier de 0 ou plus et 50 ou moins, a3 est un entier de 0 ou plus et 30 ou moins, a4 est un entier de 0 ou plus et 30 ou moins, et une somme de a1, a2, a3 et a4 est de 5 ou plus et 200 ou moins.

9. Composition durcissable selon l'une quelconque des revendications 1 à 8, dans laquelle les PFPE¹ dans le composé de silane contenant un groupe perfluoro(poly)éther (a1) ou (a2) sont chacun indépendamment un groupe perfluoro(poly)éther divalent représenté par
-(C_{f}F_{2f})-(OCF₂)ₐ₁-(OC₂F₄)ₐ₂-
où f est 1 ou 2, a1 et a2 sont chacun indépendamment un entier de 1 ou plus et 200 ou moins, et l'ordre d'existence de chaque unité répétitive enfermée entre parenthèses avec l'indice a1 ou a2 est arbitraire dans la formule.

10. Composition durcissable selon l'une quelconque des revendications 1 à 9, dans laquelle le Composant (B) est un composé représenté par la formule suivante :
R¹ₙSi(OR²)₄₋ₙ
dans laquelle
R¹ sont chacun indépendamment un groupe hydrocarbure monovalent substitué ou non substitué à chaque apparition,
R² sont chacun indépendamment un atome d'hydrogène ou un groupe organique monovalent à chaque apparition,
n est 0, 1 ou 2,
ou un condensat partiellement hydrolysé de celui-ci.

11. Composition durcissable selon la revendication 10, dans laquelle le Composant (B) contient en outre un composé représenté par la formule suivante (B2) : 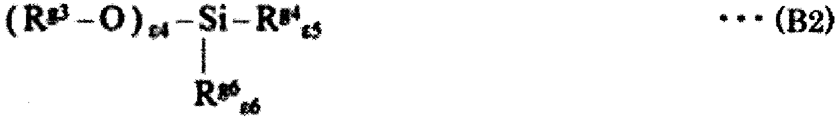 dans laquelle
R^{g3} sont chacun indépendamment un atome d'hydrogène ou un groupe organique monovalent à chaque apparition,
R^{g4} est un groupe hydrocarbure monovalent substitué ou non substitué,
R^{g6} sont chacun indépendamment R^{g8}-R^{g7}- à chaque apparition,
R^{g7} sont chacun indépendamment un groupe alkylène ayant 1 à 10 atomes de carbone ou un groupe ayant 1 à 10 atomes de carbone et contenant un/des atome(s) d'azote ou un/des atome(s) d'oxygène dans une chaîne principale à chaque apparition,
R^{g8} sont chacun indépendamment un groupe amino primaire, un groupe époxy, un groupe (méth)acryloyle, un groupe (méth)acryloxy, un groupe mercapto ou un groupe isocyanate à chaque apparition,
ε4 est 2 ou 3,
ε5 est 0 ou 1, et
ε6 est 1 ou 2, à condition qu'une somme de ε4, ε5 et ε6 soit de 4,
ou un condensat partiellement hydrolysé de celui-ci.
